# EUROPEAN PATENT APPLICATION

(11) **EP 4 137 456 A1**
(43) Date of publication of application: **22.02.2023**
(21) Application number: 21788139.0
(22) Date of filing: 13.04.2021
(51) Int. Cl.: C01B 39/10, C01B 39/38, B01J 29/40

(54) **PHOSPHORUS-CONTAINING/PHOSPHORUS-MODIFIED ZSM-5 MOLECULAR SIEVE, PYROLYSIS ADDITIVE AND PYROLYSIS CATALYST CONTAINING SAME, PREPARATION METHOD THEREFOR AND APPLICATION THEREOF**

(30) Priority: 13.04.2020 CN 202010283413; 13.04.2020 CN 202010283400; 28.10.2020 CN 202011169155; 28.10.2020 CN 202011169072; 29.10.2020 CN 202011175727; 29.10.2020 CN 202011178052
(71) Applicant: China Petroleum & Chemical Corporation, Beijing 100728 (CN); Research Institute Of Petroleum Processing, Sinopec, Beijing 100083 (CN)
(72) Inventor: LUO, Yibin, Beijing 100083 (CN); WANG, Chengqiang, Beijing 100083 (CN); OUYANG, Ying, Beijing 100083 (CN); XING, Enhui, Beijing 100083 (CN); SHU, Xingtian, Beijing 100083 (CN)
(74) Representative: Hoffmann Eitle
(86) International application number: PCT/CN2021/086821
(87) International publication number: WO 2021/208884

(57) **Abstract**

The present invention relates to a phosphorus-containing or phosphorus-modified ZSM-5 molecular sieve, which is characterized in that in its 27A1 MAS-NMR, the ratio of peak area for the resonance signal having a chemical shift of 39±3ppm to peak area for the resonance signal having a chemical shift of 54ppm±3ppm is ≥1; or in its surface XPS elemental analysis, the value of n1/n2 is≤0.1; wherein, n1 represents the mole number of phosphorus, n2 represents the total mole number of silicon and aluminum; the present invention also relates to a cracking auxiliary or cracking catalyst containing said phosphorus-containing/phosphorus-modified ZSM-5 molecular sieve, and a process for preparing the same and use thereof.

## Description

### CROSS-REFERENCES TO RELATED APPLICATIONS

The present application claims priority to the Chinese patent application with the application number 202010283413.0 filed on 13 April 2020, the Chinese patent application with the application number 202010283400.3 filed on 13 April 2020, the Chinese patent application with the application number 202011169155.X filed on 28 October 2020, the Chinese patent application with the application number 202011175727.5 filed on 29 October 2020, the Chinese patent application with the application number 202011169072.0 filed on 28 October 2020, the Chinese patent application with the application number 202011178052.X filed on 29 October 2020. The foregoing applications are herein incorporated by reference in their entirety for all purposes.

### Technical Field

The present invention relates to the technical field of molecular sieves. More specifically, the present invention relates to a phosphorus-containing/phosphorus-modified ZSM-5 molecular sieve and a process of preparing the same; the present invention also relates to a cracking auxiliary containing said phosphorus-containing/phosphorus-modified ZSM-5 molecular sieve and a process of preparing the same and use thereof; the present invention also relates to a cracking catalyst containing said phosphorus-containing/phosphorus-modified ZSM-5 molecular sieve and a Y zeolite and a process of preparing the same and use thereof; the present invention relates to a phosphorus-containing hierarchical ZSM-5 molecular sieve and a process of preparing the same; the present invention also relates to a cracking auxiliary containing said phosphorus-containing hierarchical ZSM-5 molecular sieve and a process of preparing the same and use thereof; the present invention also relates to a cracking catalyst containing said phosphorus-containing hierarchical ZSM-5 molecular sieve and a Y zeolite and a process of preparing the same and use thereof.

### Background technology

ZSM-5 molecular sieve is a molecular sieve with an MFI structure, which is a widely used zeolite/molecular sieve catalytic material developed by Mobil Corporation of the United States in 1972. ZSM-5 molecular sieve has a structure of three-dimensional intersectional channels. The channels along the a-axis are straight channels having a sectional dimension of 0.54×0.56nm and being approximately circular. The channels along the b-axis are zigzag channels having a sectional dimension of 0.51×0.56nm and being elliptical. ZSM-5 molecular sieve has openings composed of ten-membered rings, and are between the small-pore zeolite and the large-pore zeolite in the size of the openings, so it has a unique shape-selective catalytic effect. ZSM-5 molecular sieve has a unique pore structure, good shape-selective catalysis, and isomerization performance, high thermal and hydrothermal stability, a high specific surface area, a wide silica-alumina ratio variation range, a unique surface acidity, and a relatively low carbon formation. It is widely used as catalyst and catalyst support and has been successfully used in production processes such as alkylation, isomerization, disproportionation, catalytic cracking, methanol-to-gasoline, and methanol-to-olefins. ZSM-5 molecular sieve is introduced into catalytic cracking and C4 hydrocarbon catalytic cracking and shows excellent catalytic performance, and the utilization of its molecular shape selectivity can greatly improve the lower carbon olefin yield.

Since 1983, the ZSM-5 molecular sieve has been used as a catalytic cracking octane number auxiliary/catalyst in the catalytic cracking process, aiming to improve the octane number of catalytic cracking gasoline and the selectivity for light olefins. US3758403 firstly reported the use of ZSM-5 molecular sieve as an active component for increasing propylene production, and it was used together with REY as an active component of an FCC catalyst, or it was prepared together with REY to form an FCC catalyst. US5997728 disclosed the use of ZSM-5 molecular sieve without any modification as an auxiliary for increasing propylene production. However, the propylene yield of the above two technologies is not high.

Although the HZSM-5 molecular sieve has good shape selectivity performance and isomerization performance, its disadvantage is poor hydrothermal stability, and it is easy to deactivate under rigorous high-temperature hydrothermal conditions, which reduces the catalytic performance.

In the 1980s, Mobil Corporation discovered that phosphorus can improve the hydrothermal stability of the ZSM-5 molecular sieve, and at the same time, the modification of the ZSM-5 molecular sieve with phosphorus increases the lower carbon olefin yield. Usually, a conventional additive containing phosphorus-activated ZSM-5 selectively converts primary cracked products (e.g, gasoline olefins) to C3 and C4 olefins. Conventional additives usually contain phosphorus-activated ZSM-5, which selectively converts primary cracked products (e.g., gasoline olefins) to C3 and C4 olefins. ZSM-5 molecular sieve is modified by introducing an appropriate amount of inorganic phosphorus compounds after synthesis, which can stabilize the framework aluminum under rigorous hydrothermal conditions. CN106994364A discloses a process for a phosphorus-modified ZSM-5 molecular sieve. The process comprises firstly mixing one or more phosphorus-containing compounds selected from phosphoric acid, diammonium hydrogen phosphate, ammonium dihydrogen phosphate, and ammonium phosphate with a ZSM-5 molecular sieve having high alkali metal ion content to obtain a mixture with a phosphorus loading (as P2O5) of at least 0.1 wt%, drying and calcining the mixture, then perform an ammonium-exchanging step and a water-washing step so that the alkali metal ion content is reduced to 0.10wt% or less, and then perform steps of drying and hydrothermal aging at 400-1000°C under 100% water vapor. The phosphorus-containing ZSM-5 molecular sieve obtained by this process has high total acid content, excellent cracking conversion rate, propylene selectivity, and relatively high liquefied gas yield.

US5171921 discloses a process for modifying a ZSM-5 molecular sieve. This process comprises producing an HZSM-5 molecular sieve according to the conventional steps: synthesis→filtering→ammonium exchanging→drying→calcining, and then modifying the ZSM-5 molecular sieve with phosphoric acid, drying, and calcining to obtain a phosphorus-modified HZSM-5 molecular sieve, wherein the P2O5 loading is usually in the range of 1-7 wt%.

However, phosphoric acid or phosphoric acid ammonium salts will self-aggregate to form phosphorus species in different aggregation states during the calcining process. During the hydrothermal treatment process, only the phosphate groups entering the pores interact with the framework aluminum to retain the B acid center, reducing the distribution of phosphorus species.

A hierarchical ZSM-5 molecular sieve is a ZSM-5 molecular sieve containing both micropores and mesopores. Various types of hierarchical ZSM-5 molecular sieves with mesoporous channels are usually prepared by the hard template method, the soft template method, the acid-base post-treatment method, and the like.

Although the modification of a (hierarchical) ZSM-5 molecular sieve with an appropriate amount of an inorganic phosphorus compound can retard the framework dealumination and improve the hydrothermal stability, and phosphorus atoms will combine with the distorted four-coordinated framework aluminum to form weak B acid centers, so as to achieve higher conversion of long-chain alkane cracking and higher selectivity for light olefins, but the modification of a (hierarchical) ZSM-5 molecular sieve with an excessive inorganic phosphorus compound will block the channels of the molecular sieve, reduces the pore volume and the specific surface area, and occupies a large amount of strong B acid centers. Moreover, in the prior art, phosphoric acid or phosphoric acid ammonium salts will self-polymerize to form phosphorus species in different aggregation states during the calcining process, the coordination of phosphorus and the framework aluminum is insufficient, the utilization efficiency of phosphorus is low, and the phosphorus modification does not always achieve satisfactory hydrothermal stability improvement results. Therefore, new technologies are urgently needed to promote the coordination of phosphorus and the framework aluminum, improve the hydrothermal stability of the phosphorus-modified (hierarchical) ZSM-5 molecular sieve, and further increase the cracking activity.

### Summary of the Invention

The present inventors found on the basis of a large number of experiments that phosphorus-containing/phosphorus-modified ZSM-5 molecular sieves (e.g., phosphorus-containing hierarchical ZSM-5 molecular sieve) obtained by the phosphorus modification treatment and the pressurized hydrothermal calcination under certain conditions has the physicochemical characteristics different from the conventional phosphorus-containing (hierarchical) ZSM-5 molecular sieves, the utilization efficiency of phosphorus in the molecular sieve is improved, and the hydrothermal stability of the molecular sieve is improved.

Therefore, in view of the problems such as unsatisfactory hydrothermal stability existing in the prior art, the object of the present invention is to provide a phosphorus-containing/phosphorus-modified ZSM-5 molecular sieve (such as a phosphorus-containing hierarchical ZSM-5 molecular sieve) with better hydrothermal stability and the process of preparing the same.

Further, the object of the present invention is to provide a catalytic cracking auxiliary based on a phosphorus-containing/phosphorus-modified ZSM-5 molecular sieve (for example, phosphorus-containing hierarchical ZSM-5 molecular sieve) with better hydrothermal stability as an active component and a process of preparing the same and use thereof.

Further, the object of the present invention is to provide a catalytic cracking catalyst based on a phosphorus-containing/phosphorus-modified ZSM-5 molecular sieve (for example, phosphorus-containing hierarchical ZSM-5 molecular sieve) with better hydrothermal stability as one of the active components, and a process of preparing the same and use thereof in the catalytic cracking reaction of petroleum hydrocarbons. The catalytic cracking catalyst of the present invention can provide an excellent cracking conversion rate, and have an excellent yield for low-carbon olefins as well as a higher yield for liquefied gas.

In order to realize the above-mentioned objects of the present invention, the present invention provides the following technical solutions:
In the first aspect, the present invention provides a phosphorus-containing or phosphorus-modified ZSM-5 molecular sieve, which is characterized in that in its 27A1MAS-NMR, the ratio of peak area for the resonance signal having a chemical shift of 39±3ppm to peak area for the resonance signal having a chemical shift of 54ppm±3ppm is ≥ 1, for example, ≥ 5 or ≥ 8; further for example, ≥ 10 or ≥ 12; still further for example, 12-25 or 14-25.

In the second aspect, the present invention also provides a phosphorus-containing or phosphorus-modified ZSM-5 molecular sieve, which is characterized in that in its surface XPS elemental analysis, the value of n1/n2 is ≤ 0.1 or ≤ 0.08, for example, ≤ 0.09 or ≤ 0.07, further for example, n1/n2 ≤ 0.08 or ≤ 0.06, still further for example, 0.04-0.07 or 0.02-0.05;
wherein n1 represents the mole number of phosphorus, and n2 represents the total mole number of silicon and aluminum.

In the third aspect, the phosphorus-containing or phosphorus-modified molecular sieve according to any one of the preceding aspects, which is characterized in that the phosphorus-containing or phosphorus-modified molecular sieve is a phosphorus-containing hierarchical ZSM-5 molecular sieve; for example, having a proportion of the mesopore volume relative to the total pore volume of greater than 10% and an average pore diameter of 2-20nm.

In the fourth aspect, the phosphorus-containing or phosphorus-modified molecular sieve according to any one of the preceding aspects, which is characterized in that in its surface XPS elemental analysis, the value of n1/n2 is ≤ 0.1 or ≤ 0.08, for example, ≤ 0.09 or ≤ 0.07, further for example, n1/n2 ≤ 0.08 or ≤ 0.06, still further for example, 0.04-0.07 or 0.02-0.05;
wherein n1 represents the mole number of phosphorus, n2 represents the total mole number of silicon and aluminum.

In the fifth aspect, the phosphorus-containing or phosphorus-modified molecular sieve according to any one of the preceding aspects, which is characterized in that after the molecular sieve has undergone hydrothermal aging under a condition of 800°C and 100% steam for 17h, in its NH3-TPD spectrum, for the desorption temperature of 200°C or higher, the proportion of the peak area for the strong acid center relative to the peak area for the total acid center is ≥ 40% or ≥ 45%; for example, ≥ 42% or ≥ 50%; further for example, ≥ 45% or ≥ 60%; still further for example, 48%-85% or 60%-80%.

In the sixth aspect, the phosphorus-containing or phosphorus-modified molecular sieve according to any one of the preceding aspects, which is characterized in that when both phosphorus and aluminum are on a molar basis, the ratio of the two is 0.01-2; for example, 0.1-1.5; further for example, 0.2-1.5 or 0.3-1.3.

In the seventh aspect, the present invention provides a process of preparing the phosphorus-containing or phosphorus-modified ZSM-5 molecular sieve according to any one of the preceding aspects, which is characterized in that the preparation process comprises: treating a ZSM-5 molecular sieve by contacting a phosphorus-containing compound, drying the treated ZSM-5 molecular sieve, hydrothermally calcining the dried ZSM-5 molecular sieve in an atmosphere condition where external pressure is applied and water is externally added, and recovering the resulting product;
the contacting is to make an aqueous solution of the phosphorus-containing compound at a temperature of 0-150°C and the ZSM-5 molecular sieve at a temperature of 0-150°C in contact (by mixing) at substantially the same temperature for at least 0.1 hours through the immersion method, or,
the contacting is to vigorously mix and stir the phosphorus-containing compound, the ZSM-5 molecular sieve, and water and then keep the mixture at 0-150°C for at least 0.1 hours;
with respect to the atmosphere condition, its gauge pressure is 0.01-1.0MPa and it contains 1-100% water vapor;
the ZSM-5 molecular sieve is an HZSM-5 molecular sieve or a hydrogen-type hierarchical ZSM-5 molecular sieve, for example, in the hydrogen-type hierarchical ZSM-5 molecular sieve, the proportion of the mesopore volume relative to the total pore volume is greater than 10%, and the average pore diameter is 2-20nm.

In the eighth aspect, the process of preparing a phosphorus-containing or phosphorus-modified ZSM-5 molecular sieve according to any one of the preceding aspects, which is characterized in that the phosphorus-containing compound is selected from organic phosphorus compounds and/or inorganic phosphorus compounds;
for example, the organic phosphorus compound is selected from trimethyl phosphate, triphenylphosphine, trimethyl phosphite, tetrabutylphosphonium bromide, tetrabutylphosphonium chloride, tetrabutylphosphonium hydroxide, triphenylethylphosphonium bromide, triphenylbutylphosphonium bromide, triphenylbenzylphosphonium bromide, hexamethylphosphoric triamide, dibenzyl diethylphosphoramidite, 1,3-bis((triethyl-phosphaneyl)methyl)benzene; and/or
for example, the inorganic phosphorus compound is selected from phosphoric acid, ammonium hydrogen phosphate, diammonium hydrogen phosphate, ammonium phosphate, and boron phosphate. In the ninth aspect, the process of preparing the phosphorus-containing or phosphorus-modified ZSM-5 molecular sieve according to any one of the preceding aspects, which is characterized by that in the ZSM-5 molecular sieve, Na2O < 0.1wt%.

In the tenth aspect, the process of preparing the phosphorus-containing or phosphorus-modified ZSM-5 molecular sieve according to any one of the preceding aspects, which is characterized in that the molar ratio of the phosphorus-containing compound (as phosphorus) to the ZSM-5 molecular sieve (as aluminum) is 0.01-2; for example, 0.1-1.5; further for example, 0.2-1.5 or 0.3-1.3.

In the eleventh aspect, the process of preparing the phosphorus-containing or phosphorus-modified ZSM-5 molecular sieve according to any one of the preceding aspects, which is characterized in that with respect to the contacting, the weight ratio of water/molecular sieve is 0.5-1, and the contacting is performed at 50-150°C, for example, 70-130°C for 0.5-40 hours.

In the twelfth aspect, the process of preparing the phosphorus-containing or phosphorus-modified ZSM-5 molecular sieve according to any one of the preceding aspects, which is characterized in that with respect to the atmosphere condition, its gauge pressure is 0.1-0.8 MPa, for example, 0.3-0.6 MPa, it contains 30-100% water vapor, for example, 60-100% water vapor;
The hydrothermal calcining treatment is performed at 200-800°C, for example, 300-500°C.

In the thirteenth aspect, the present invention provides a catalytic cracking auxiliary, which is characterized in that on the dry basis of the catalytic cracking auxiliary, the catalytic cracking auxiliary contains 5-75 wt% of the phosphorus-containing or phosphorus-modified ZSM-5 molecular sieve according to any one of the preceding aspects.

In the fourteenth aspect, the catalytic cracking auxiliary according to any one of the preceding aspects, which is characterized in that on the dry basis of the catalytic cracking auxiliary, it further contains 1-40 wt% of a binder and 0-65 wt% of a second clay.

In the fifteenth aspect, the catalytic cracking auxiliary according to any one of the preceding aspects, which is characterized in that the binder includes or is a phosphorus-aluminum inorganic binder.

In the sixteenth aspect, the catalytic cracking auxiliary according to any one of the preceding aspects, which is characterized in that the phosphorus-aluminum inorganic binder is a phosphorus-aluminum glue and/or a first clay-containing phosphorus-aluminum inorganic binder.

In the seventeenth aspect, the present invention provides a process of preparing the catalytic cracking auxiliary according to any one of the preceding aspects, which is characterized in that the preparation process comprises a phosphorus-containing or phosphorus-modified ZSM-5 molecular sieve, a binder, and optionally a second clay are vigorously mixed and stirred with water and spray-dried to produce the catalytic cracking auxiliary,
wherein the phosphorus-containing or phosphorus-modified ZSM-5 molecular sieve is the phosphorus-containing or phosphorus-modified molecular sieve according to any one of the preceding aspects, or is prepared with the process of preparing the phosphorus-containing or phosphorus-modified ZSM-5 molecular sieve according to any one of the preceding aspects.

In the eighteenth aspect, the process of preparing the catalytic cracking auxiliary according to any one of the preceding aspects, which is characterized in that the binder comprises a phosphorus-aluminum inorganic binder and/or other inorganic binder(s).

In the nineteenth aspect, the process of preparing the catalytic cracking auxiliary according to any one of the preceding aspects, which is characterized in that the phosphorus-aluminum inorganic binder is a phosphorus-aluminum glue and/or a first clay-containing phosphorus-aluminum inorganic binder;
based on the dry basis weight of the first clay-containing phosphorus-aluminum inorganic binder, the first clay-containing phosphorus-aluminum inorganic binder contains 10-40 wt%, for example, 15-40 wt% of an aluminum component as Al2O3, 45-90 wt%, for example, 45-80 wt% of a phosphorus component as P2O5 and greater than 0 and not more than 40 wt% of a first clay on a dry basis, and
the first clay-containing phosphorus-aluminum inorganic binder has a P/Al weight ratio of 1.0-6.0, a pH of 1-3.5, and a solid content of 15-60 wt%;
the first clay comprises at least one of kaolin, sepiolite, attapulgite, rectorite, smectite, and diatomite; the other inorganic binder comprises at least one of pseudo-boehmite, alumina sol, silica-alumina sol, and water glass.

In the twentieth aspect, the process of preparing the catalytic cracking auxiliary according to any one of the preceding aspects, which is characterized in that the second clay is selected from at least one of kaolin, sepiolite, attapulgite, rectorite, smectite, giagerite, halloysite, hydrotalcite, bentonite, and diatomite.

In the twenty-first aspect, the process of preparing the catalytic cracking auxiliary according to any one of the preceding aspects, which is characterized in that based on the total weight of the catalytic cracking auxiliary, the binder comprises based on the dry weight, 3-39 wt% of the phosphorus-aluminum inorganic binder and based on the dry weight, 1-30 wt% of the other inorganic binder, the other inorganic binder comprises at least one of pseudo-boehmite, alumina sol, silica-alumina sol, and water glass.

In the twenty-second aspect, the process of preparing the catalytic cracking auxiliary according to any one of the preceding aspects, which is characterized in that the process further comprises: the spray-dried product is subjected to a first calcining, and then washed, and optionally dried to produce the catalytic cracking auxiliary; wherein for the first calcining, the calcining temperature is 300-650°C, the calcining time is 0.5-8h; the drying temperature is 100-200°C, the drying time is 0.5-24h.

In the twenty-third aspect, the process of preparing the catalytic cracking auxiliary according to any one of the preceding aspects, which is characterized in that the process further comprises: the first clay-containing phosphorus-aluminum inorganic binder is prepared with the following steps: an alumina source, the first clay and water are vigorously mixed and stirred to disperse into a slurry having a solid content of 5-48 wt%; wherein the alumina source is aluminum hydroxide and/or alumina that can be peptized by an acid, relative to 10-40 parts by weight, for example, 15-40 parts by weight of the alumina source (as Al2O3), the used amount of the first clay based on the dry weight is greater than 0 part by weight and not more than 40 parts by weight; a concentrated phosphoric acid is added to the slurry under stirring according to the weight ratio of P/Al = 1-6, and the resulting mixed slurry is reacted at 50-99°C for 15-90 minutes; wherein P in the P/Al is the weight of phosphorus as the simple substance in phosphoric acid, Al is the weight of aluminum as the simple substance in the alumina source.

In the twenty-fourth aspect, the present invention provides a catalytic cracking catalyst, which is characterized in that based on the dry basis of the catalytic cracking catalyst, the catalytic cracking catalyst contains on a dry basis, 1-25 wt% of a Y zeolite, on a dry basis, 5-50 wt% of the phosphorus-containing or phosphorus-modified ZSM-5 molecular sieve according to any one of the preceding aspects, on a dry basis, 1-60 wt% of an inorganic binder and optionally on a dry basis, 0-60 wt% of a second clay, the inorganic binder comprises a phosphorus-aluminum inorganic binder and/or other inorganic binder(s).

In the twenty-fifth aspect, the catalytic cracking catalyst according to any one of the preceding aspects, which is characterized in that the Y zeolite comprises at least one of a PSRY-S zeolite, a rare earth-containing PSRY-S zeolite, a PSRY zeolite, a rare earth-containing PSRY zeolite, a USY zeolite, a rare earth-containing USY zeolite, a REY zeolite, a REHY zeolite and an HY zeolite; for example, the Y zeolite comprises at least one of a PSRY zeolite, a rare earth-containing PSRY zeolite, a USY zeolite, a rare earth-containing USY zeolite, a REY zeolite, a REHY zeolite and an HY zeolite.

In the twenty-sixth aspect, the present invention provides a process of preparing the catalytic cracking catalyst according to any one of the preceding aspects, which is characterized in that the process comprises : a reaction material including a Y zeolite, a phosphorus-containing or phosphorus-modified ZSM-5 molecular sieve and an inorganic binder is vigorously mixed and stirred with water and spray-dried, and optionally calcined to produce the catalytic cracking catalyst; wherein, a second clay is optionally added to the reaction material; on a dry basis, the used amount ratio by weight of the Y zeolite : the phosphorus-containing or phosphorus-modified ZSM-5 molecular sieve:the inorganic binder:the second clay is (1-25):(5-50):(1-60):(0-60);
wherein the inorganic binder comprises a phosphorus-aluminum inorganic binder and/or other inorganic binder(s),
the phosphorus-containing or phosphorus-modified ZSM-5 molecular sieve is the phosphorus-containing or phosphorus-modified molecular sieve according to any one of the preceding aspects or prepared with the process of preparing the phosphorus-containing or phosphorus-modified ZSM-5 molecular sieve according to any one of the preceding aspects.

In the twenty-seventh aspect, the process of preparing the catalytic cracking catalyst according to any one of the preceding aspects, which is characterized in that the phosphorus-aluminum inorganic binder is a phosphorus-aluminum glue and/or a first clay-containing phosphorus-aluminum inorganic binder; based on the dry basis weight of the first clay-containing phosphorus-aluminum inorganic binder, the first clay-containing phosphorus-aluminum inorganic binder contains 10-40 wt%, for example, 15-40 wt% of an aluminum component as Al2O3, 45-90 wt%, for example, 45-80 wt% of a phosphorus component as P2O5 and greater than 0 and not more than 40 wt% of a first clay on a dry basis, and
the first clay-containing phosphorus-aluminum inorganic binder has a P/Al weight ratio of 1.0-6.0, a pH of 1-3.5, and a solid content of 15-60 wt%;
the first clay comprises at least one of kaolin, sepiolite, attapulgite, rectorite, smectite and diatomite; the other inorganic binder comprises at least one of pseudo-boehmite, alumina sol, silica-alumina sol, and water glass.

In the twenty-eighth aspect, the process of preparing the catalytic cracking catalyst according to any one of the preceding aspects, which is characterized in that the second clay is at least one selected from kaolin, sepiolite, attapulgite, rectorite, smectite, giagerite, halloysite, hydrotalcite, bentonite and diatomite.

In the twenty-ninth aspect, the process of preparing the catalytic cracking catalyst according to any one of the preceding aspects, which is characterized in that based on the dry basis of the catalytic cracking catalyst, the catalyst contains, based on the dry weight, 3-40 wt% of a phosphorus-aluminum inorganic binder, or 3-40 wt% of a phosphorus-aluminum inorganic binder and 1-30 wt% of other inorganic binder(s), the other inorganic binder comprises at least one of pseudo-boehmite, alumina sol, silica-alumina sol, and water glass.

In the thirtieth aspect, the process of preparing the catalytic cracking catalyst according to any one of the preceding aspects, which is characterized in that the Y zeolite comprises at least one of a PSRY-S zeolite, a rare earth-containing PSRY-S zeolite, a PSRY zeolite, a rare earth-containing PSRY zeolite, a USY zeolite, a rare earth-containing USY zeolite, a REY zeolite, a REHY zeolite and an HY zeolite; for example, the Y zeolite comprises at least one of a PSRY zeolite, a rare earth-containing PSRY zeolite, a USY zeolite, a rare earth-containing USY zeolite, a REY zeolite, a REHY zeolite and an HY zeolite.

In the thirty-first aspect, the process of preparing the catalytic cracking catalyst according to any one of the preceding aspects, which is characterized in that the process further comprises: the calcined product is washed and optionally dried to produce the catalytic cracking catalyst; wherein with respect to the first calcining, the calcining temperature is 300-650°C, the calcining time is 0.5-12h.

In the thirty-second aspect, the process of preparing the catalytic cracking catalyst according to any one of the preceding aspects, which is characterized in that the process further comprises: the first clay-containing phosphorus-aluminum inorganic binder is prepared with the following steps: an alumina source, the first clay and water are vigorously mixed and stirred to disperse into a slurry having a solid content of 5-48 wt%; wherein the alumina source is aluminum hydroxide and/or alumina that can be peptized by an acid, relative to 10-40 parts by weight, for example, 15-40 parts by weight of the alumina source (as Al2O3), the used amount of the first clay based on the dry weight is greater than 0 part by weight and not more than 40 parts by weight; a concentrated phosphoric acid is added to the slurry under stirring according to the weight ratio of P/Al = 1-6, and the resulting mixed slurry is reacted at 50-99°C for 15-90 minutes; wherein P in the P/Al is the weight of phosphorus as the simple substance in phosphoric acid, Al is the weight of aluminum as the simple substance in the alumina source.

In the thirty-third aspect, the present invention provides a catalytic cracking auxiliary prepared with the process of preparing the catalytic cracking auxiliary according to any one of the preceding aspects.

In the thirty-fourth aspect, the present invention provides a catalytic cracking catalyst prepared with the process of preparing the catalytic cracking catalyst according to any one of the preceding aspects.

In the thirty-fifth aspect, the present invention provides a process for catalytically cracking a hydrocarbon oil, which is characterized in that the process comprises: the hydrocarbon oil is reacted by contacting the catalytic cracking auxiliary according to any one of the preceding aspects under a catalytic cracking condition.

In the thirty-sixth aspect, the process for catalytically cracking a hydrocarbon oil according to any one of the preceding aspects, which is characterized in that the process comprises: the hydrocarbon oil is reacted by contacting a catalyst mixture containing the catalytic cracking auxiliary and a catalytic cracking catalyst under a catalytic cracking condition; in the catalyst mixture, the content of the catalytic cracking auxiliary is 0.1-30 wt%.

In the thirty-seventh aspect, the process for catalytically cracking a hydrocarbon oil according to any one of the preceding aspects, wherein the catalytic cracking condition includes: the reaction temperature is 500-800°C; the hydrocarbon oil is one or more selected from crude oil, naphtha, gasoline, atmospheric residue, vacuum residue, atmospheric gas oil, vacuum gas oil, straight-run gas oil, propane light/heavy deasphalted oil, coker gas oil and coal liquefication product.

In the thirty-eighth aspect, the present invention provides the application method of the catalytic cracking catalyst according to any one of the preceding aspects.

In the thirty-ninth aspect, the application method according to any one of the preceding aspects, comprising: reacting the hydrocarbon oil by contacting the catalytic cracking catalyst under the catalytic cracking reaction condition, wherein the catalytic cracking reaction condition includes: the reaction temperature is 500-800°C.

In the fortieth aspect, the application method according to any one of the preceding aspects, wherein the hydrocarbon oil is one or more selected from crude oil, naphtha, gasoline, atmospheric residue, vacuum residue, atmospheric gas oil, vacuum gas oil, straight-run gas oil, propane light/heavy deasphalted oil, coker gas oil and coal liquefication product.

### Brief description of the drawings

Figure 1 is the 27 Al MAS-NMR spectrum of the sample PZ-1A.
Figure 2 is the NH3-TPD spectrum of the sample PZ-1A after the hydrothermal aging treatment at 800°C under 100% water vapor for 17h.
Figure 3 is the 27 Al MAS-NMR spectra of the sample PZ-1B.
Figure 4 is the 27 Al MAS-NMR spectrum of the comparative sample DZ-1A.
Figure 5 is the NH3-TPD spectrum of the comparative sample DZ-1A after the hydrothermal aging treatment at 800°C under 100% water vapor for 17h.
Figure 6 is the 27 Al MAS-NMR spectrum of the sample PZ-1C.
Figure 7 is the NH3-TPD spectrum of the sample PZ-1C after the hydrothermal aging treatment at 800°C under 100% water vapor for 17h.
Figure 8 is the 27 Al MAS-NMR spectrum of the comparative sample DZ-1C.
Figure 9 is the NH3-TPD spectrum of the comparative sample DZ-1C after the hydrothermal aging treatment at 800°C under 100% water vapor for 17h.

### Detailed description

Specific embodiments of the present invention will be described in detail below. It should be understood that the specific embodiments described herein are only used to illustrate and explain the present invention and are not intended to limit the present invention.

In the present invention, pores with a pore size less than 2 nm are called micropores; pores with a pore size greater than 50 nm are called macropores; and pores with a pore size of 2-50 nm are called mesopores.

In the present invention, the first clay refers to the clay contained in the phosphorus-aluminum inorganic binder; and the second clay refers to the clay other than the first clay, and "first" and "second" are only to distinguish whether or not the clay is in the phosphorus-aluminum inorganic binder. The first clay includes, but is not limited to, kaolin, sepiolite, attapulgite, rectorite, smectite and diatomite. The second clay includes, but is not limited to kaolin, sepiolite, attapulgite, rectorite, smectite, and diatomite, and giagerite, halloysite, hydrotalcite, and bentonite.

In the present invention, the binder and the inorganic binder are synonymous.

The binder of the present invention comprises a phosphorus-aluminum inorganic binder and other inorganic binder(s).

According to the present invention, the other inorganic binder(s) refers to a binder that does not contain both phosphorus and aluminum elements, and the phosphorus-aluminum inorganic binder includes a phosphorus-aluminum glue, and a first clay-containing phosphorus-aluminum inorganic binder.

According to the present invention, examples of other inorganic binder(s) include, but are not limited to, pseudo-boehmite, alumina sol, silica-alumina sol, and water glass.

According to the present invention, the active component in the phosphorus-aluminum glue is aluminum dihydrogen phosphate, and its theoretical ratio is P2O5/Al2O3=3:1 (molar ratio). The phosphorus-aluminum glue can be used as a binder to prepare a catalyst with excellent strength. In the present invention, the actual ratio of P2O5/Al2O3 in the phosphorus-aluminum glue is 3:1 or higher, for example, 3:1-10:1, such as greater than 3:1 and not greater than 5:1. For example, the phosphorus-aluminum glue can be obtained by vigorously mixing and stirring an alumina source with water to disperse into a slurry; adding a concentrated phosphoric acid to the slurry under stirring, and allowing the resulting mixed slurry to react for a period of time (e.g., 15-90 minutes at 50-99°C); the alumina source can be at least one selected from ρ-alumina, x-alumina, η-alumina, γ-alumina, x-alumina, σ-alumina, θ-alumina, gibbsite, bayerite, nordshandite, diaspore, boehmite and pseudo-boehmite, the concentration of the concentrated phosphoric acid can be 60-98 wt%, further for example, 75-90 wt%, the feeding rate of phosphoric acid is, for example, 0.01-0.10 kg phosphoric acid/min/kg alumina source, further for example, 0.03-0.07 kg phosphoric acid/min/kg alumina source. According to the present invention, the first clay-containing phosphorus-aluminum inorganic binder refers to such a binder that, based on the dry basis weight, the first clay-containing phosphorus-aluminum inorganic binder contains 10-40 wt%, for example, 15-40 wt% of an aluminum component (as Al2O3), 45-90 wt%, for example, 45-80 wt% of a phosphorus component (as P2O5) and greater than 0 and not more than 40 wt% of a first clay on a dry basis, and the first clay-containing phosphorus-aluminum inorganic binder has a P/Al weight ratio of 1.0-6.0, a pH of 1-3.5, and a solid content of 15-60 wt%.

According to the present invention, the first clay-containing phosphorus-aluminum inorganic binder can be prepared by the following method: an alumina source, the first clay and water are vigorously mixed and stirred to disperse into a slurry having a solid content of 5-48 wt%; wherein the alumina source is aluminum hydroxide and/or alumina that can be peptized by an acid, relative to 10-40 parts by weight, for example, 15-40 parts by weight of the alumina source (as Al2O3), the used amount of the first clay based on the dry weight is greater than 0 part by weight and not more than 40 parts by weight; a concentrated phosphoric acid is added to the slurry under stirring according to the weight ratio of P/Al = 1-6, and the resulting mixed slurry is reacted at 50-99°C for 15-90 minutes; wherein Pin the P/Al is the weight of phosphorus as the simple substance in phosphoric acid, Al is the weight of aluminum as the simple substance in the alumina source. The alumina source can be at least one selected from ρ-alumina, x-alumina, η-alumina, γ-alumina, x-alumina, σ-alumina, θ-alumina, gibbsite, bayerite, nordshandite, diaspore, boehmite and pseudo-boehmite. The concentration of the concentrated phosphoric acid can be 60-98 wt%, further for example, 75-90 wt%, the feeding rate of phosphoric acid is, for example, 0.01-0.10 kg phosphoric acid/min/kg alumina source, further for example, 0.03-0.07 kg phosphoric acid/min/kg alumina source.

In the present invention, the pressure refers to gauge pressure unless indicated to the contrary.

In the present invention, apparent pressure and gauge pressure are synonymous.

In the present invention, cracking and catalytic cracking are synonymous.

According to the present invention, in the 27 Al MAS-NMR of the molecular sieve, the resonance signal having a chemical shift of 39±3ppm represents the framework aluminum species coordinated with phosphorus (phosphorus-stabilized framework aluminum, namely distorted four-coordinated framework aluminum); the resonance signal having a chemical shift of 54ppm±3ppm represents the four-coordinated framework aluminum species. In the present invention, the Bruker AVANCE III 600 WB spectrometer is used to analyze and measure the 27Al MAS-NMR spectrum, wherein the rotor diameter is 4mm, the resonance frequency is 156.4 MHz, the pulse width is 0.4 µs (corresponding to a toppled angle of 15°), and the magic angle spinning frequency is 12kHz, the delay time is 1s; each peak area is calculated by the integral method after fitting the characteristic peaks by the Gauss-Lorentz function.

According to the present invention, in the surface XPS elemental analysis of the molecular sieve, n1 represents the mole number of phosphorus; n2 represents the total mole number of silicon and aluminum. The decrease in the characterization parameter n1/n2 indicates a decrease in the surface phosphorus species content in the molecular sieve, and it also shows that the surface phosphorus species migrate more to the bulk phase of the molecular sieve. That is to say, the value of n1/n2 describes the dispersion effect of phosphorus species on the molecular sieve surface and the degree of migration from the surface of the ZSM-5 molecular sieve into the crystal interior. The smaller the value, the lower the content of phosphorus species on the surface, the better the dispersion of phosphorus species and the higher the degree of the migration to the interior, and the better the hydrothermal stability of the molecular sieve. In the present invention, the XPS analysis on the surface of the molecular sieve is performed by using the ESCAREB 250 Type X-ray photoelectron spectrometer of Thermo Fisher-VG Company, the excitation source is a monochromatic AlKα X-ray with a power of 150 W, and the charge shift is calibrated with the C1s peak (284.8 eV) from a contaminated carbon; XPS PeakAvantage 4.15 software is used to calculate the parameters of peaks by integration after the deduction of the Shirley background. In the present invention, the molecular sieve surface measured by the XPS method refers to the range of the vertical depth of 0-2 nm from the crystal surface, that is, n1 and n2 are the moles of substances within the range of 0-2 nm from the surface.

According to the present invention, after the molecular sieve is hydrothermally aged at 800°C and 100% water vapor for 17 hours, in its NH3-TPD spectrum, for the desorption temperature of 200°C or higher, the proportion of the peak area for the strong acid center relative to the peak area for the total acid center reflects the retention of strong acid centers after hydrothermal aging at 800°C and 100% water vapor for 17 hours. If the proportion value is high, the molecular sieve has a high cracking activity, and vice versa. In the present invention, temperature-programmed desorption analysis (NH3-TPD, NH3-Temperature-Programmed Desorption) is performed by using the AutoChen II temperature-programmed adsorption instrument of Micromeritics, wherein 0.1-0.2 g of the sample is weighed and put into quartz adsorption tube, the carrier gas (high-purity He, flow rate 50mL/min) is introduced, the temperature is raised to 600 °C at a rate of 20 °C/min, and kept at the constant temperature for 2 hours to remove water and air adsorbed on the sample; the temperature is reduced to 100 °C at a rate of 20 °C/min, and kept at the constant temperature for 30 minutes; the carrier gas is switched to NH3-He mixed gas, and the temperature is kept at the constant temperature for 30 minutes to make the sample adsorb ammonia to be saturated; the NH3-He mixed gas is switched to high-purity He carrier gas, and the purging is performed for 1 hour to desorb the physically absorbed ammonia; then the temperature is raised to 600 °C at a rate of 10 °C/min, and the temperature-programmed desorption curve is obtained. Desorbed ammonia is detected by using a thermal conductivity cell. After converting the temperature-programmed desorption curve into a NH3 desorption rate-temperature curve, the acid center density data are obtained by the spectrum analysis of the peak shape by using the Gauss-Lorentz function.

### Phosphorus-containing or phosphorus-modified ZSM-5 molecular sieve and process of preparing the same

The present invention provides a phosphorus-containing or phosphorus-modified ZSM-5 molecular sieve, which has one or more of the following characteristics:
(1) In its 27Al MAS-NMR, the ratio of peak area for the resonance signal having a chemical shift of 39±3ppm to peak area for the resonance signal having a chemical shift of 54ppm±3ppm is ≥ 1, for example, ≥ 5 or ≥ 8; further for example, ≥ 10 or ≥ 12; still further for example, 12-25 or 14-25.
(2) in its surface XPS elemental analysis, the value of n1/n2 is ≤ 0.1 or ≤ 0.08, for example, ≤ 0.09 or ≤ 0.07, further for example, n1/n2 ≤ 0.08 or ≤ 0.06, still further for example, 0.04-0.07 or 0.02-0.05; wherein, n1 represents the mole number of phosphorus, n2 represents the total mole number of silicon and aluminum;
(3) after the molecular sieve has undergone the hydrothermal aging under a condition of 800°C and 100% steam for 17h, in its NH3-TPD spectrum, for the desorption temperature of 200°C or higher, the proportion of the peak area for the strong acid center relative to the peak area for the total acid center is ≥ 40% or ≥ 45%; for example, ≥ 42% or ≥ 50%; further for example, ≥ 45% or ≥ 60%; still further for example, 48%-85% or 60%-80%.

According to the phosphorus-containing or phosphorus-modified molecular sieve of the present invention, the phosphorus-containing or phosphorus-modified molecular sieve can be a phosphorus-containing hierarchical ZSM-5 molecular sieve; for example, having a proportion of the mesopore volume relative to the total pore volume of greater than 10% and an average pore diameter of 2-20nm.

According to the phosphorus-containing or phosphorus-modified molecular sieve of the present invention, when both phosphorus and aluminum are on a molar basis, the ratio of the two can be 0.01-2; for example, 0.1-1.5; further for example, 0.2-1.5 or 0.3-1.3.

The phosphorus-containing or phosphorus-modified ZSM-5 molecular sieve is prepared with the following process, the preparation process comprises: treating a ZSM-5 molecular sieve by contacting a phosphorus-containing compound, drying the treated ZSM-5 molecular sieve, hydrothermally calcining the dried ZSM-5 molecular sieve in an atmosphere condition where an external pressure is applied and water is externally added, and recovering the resulting product;
the contacting is to make an aqueous solution of the phosphorus-containing compound at a temperature of 0-150°C and the ZSM-5 molecular sieve at a temperature of 0-150°C in contact (by mixing) at substantially the same temperature for at least 0.1 hours through the immersion method, or, the contacting is to vigorously mix and stir the phosphorus-containing compound, the ZSM-5 molecular sieve and water and then keep the mixture at 0-150°C for at least 0.1 hours;
with respect to the atmosphere condition, its gauge pressure is 0.01-1.0MPa and it contains 1-100% water vapor;
the ZSM-5 molecular sieve is an HZSM-5 molecular sieve or a hydrogen-type hierarchical ZSM-5 molecular sieve, for example, in the hydrogen-type hierarchical ZSM-5 molecular sieve, the proportion of the mesopore volume relative to the total pore volume is greater than 10%, and the average pore diameter is 2-20nm.

According to the process of preparing the phosphorus-containing or phosphorus-modified ZSM-5 molecular sieve, the phosphorus-containing compound is selected from an organic phosphorus compound and/or an inorganic phosphorus compound; for example, the organic phosphorus compound is selected from trimethyl phosphate, triphenylphosphine, trimethyl phosphite, tetrabutylphosphonium bromide, tetrabutylphosphonium chloride, tetrabutylphosphonium hydroxide, triphenylethylphosphonium bromide, triphenylbutylphosphonium bromide, triphenylbenzylphosphonium bromide, hexamethylphosphoric triamide, dibenzyl diethylphosphoramidite, 1,3-bis((triethyl-phosphaneyl)methyl)benzene; and/orfor example, the inorganic phosphorus compound is selected from phosphoric acid, ammonium hydrogen phosphate, diammonium hydrogen phosphate, ammonium phosphate, boron phosphate.

According to the process of preparing the phosphorus-containing or phosphorus-modified ZSM-5 molecular sieve of the present invention, in the ZSM-5 molecular sieve, Na2O < 0.1wt%.

According to the process of preparing the phosphorus-containing or phosphorus-modified ZSM-5 molecular sieve of the present invention, the molar ratio of the phosphorus-containing compound (as phosphorus) to the ZSM-5 molecular sieve (as aluminum) is 0.01-2; for example, 0.1-1.5; further for example, 0.2-1.5 or 0.3-1.3.

According to the process of preparing the phosphorus-containing or phosphorus-modified ZSM-5 molecular sieve of the present invention, with respect to the contacting, the weight ratio of water/molecular sieve is 0.5-1, and the contacting is performed at 50-150°C, for example, 70-130°C for 0.5-40 hours.

According to the process of preparing the phosphorus-containing or phosphorus-modified ZSM-5 molecular sieve of the present invention, with respect to the atmosphere condition, its gauge pressure is 0.1-0.8 MPa, for example, 0.3-0.6 MPa, it contains 30-100% water vapor, for example, 60-100% water vapor;
the hydrothermal calcining treatment is performed at 200-800°C, for example, 300-500°C. According to the present invention, the HZSM-5 molecular sieve is obtained by the ammonium-exchanging of a micropore ZSM-5 molecular sieve to reduce the sodium content to Na2O < 0.1wt%, and have a silica-alumina ratio (the molar ratio of silicon oxide to aluminum oxide) in the range of ≥ 10, usually 10-200.

According to the present invention, the hydrogen-type hierarchical ZSM-5 molecular sieve satisfies: Na2O < 0.1wt%, the ratio of mesopore (2nm-50nm) volume relative to the total pore volume is greater than 10%, usually 10%-90%, and the average pore diameter is 2-20nm. The silica-alumina ratio (the molar ratio of silicon oxide to aluminum oxide) is in the range of ≥ 10, usually 10-200. According to the present invention, the term "hierarchical" means that both micropore and mesopore are included.

According to the process of preparing the phosphorus-containing or phosphorus-modified ZSM-5 molecular sieve of the present invention, the first manner of the contacting is to make an aqueous solution of the phosphorus-containing compound at a temperature of 30-150°C and a ZSM-5 molecular sieve (HZSM-5 molecular sieve or hydrogen-type hierarchical ZSM-5 molecular sieve) at a temperature of 30-150°C in contact at substantially the same temperature for at least 0.1 hours through the immersion method. The contact is performed for example, in a higher temperature range above 40°C, for example, 50-150°C, further for example, 70-130°C, which can produce a better result, i.e., the better dispersion of phosphorus species, and the easier migration of phosphorus into the crystal interior of the ZSM-5 molecular sieve (for example, HZSM-5 molecular sieve or hydrogen-type hierarchical ZSM-5 molecular sieve) to combine with the framework aluminum, which further improves the coordination degree of phosphorus and the framework aluminum, and finally contributes to improving the hydrothermal stability of the molecular sieve.

The substantially same temperature means that the temperature difference between the temperature of the aqueous solution of the phosphorus-containing compound and the temperature of the ZSM-5 molecular sieve (for example, HZSM-5 molecular sieve or hydrogen-type hierarchical ZSM-5 molecular sieve) is within ±5°C. For example, the temperature of the aqueous solution of the phosphorus-containing compound is 80°C, and the ZSM-5 molecular sieve (for example, HZSM-5 molecular sieve or hydrogen-type hierarchical ZSM-5 molecular sieve) needs to be heated to 75-85°C. In the preparation process of the present invention, the second manner of the contacting is to mix the phosphorus-containing compound, the ZSM-5 molecular sieve (for example, HZSM-5 molecular sieve or hydrogen-type hierarchical ZSM-5 molecular sieve) and water, and maintain at 30-150 °C for at least 0.1 hours. For example, in order to produce a better result, i.e., the better dispersion of phosphorus species, and the easier migration of phosphorus into the crystal interior of the molecular sieve to combine with the framework aluminum, to further improve the coordination degree of phosphorus and the framework aluminum, and to finally improve the hydrothermal stability of the molecular sieve, the phosphorus-containing compound, the ZSM-5 molecular sieve (for example, HZSM-5 molecular sieve or hydrogen-type hierarchical ZSM-5 molecular sieve) and water are mixed, and then maintained at a higher temperature range above 40 °C for 0.1 hours, for example, a temperature range of 50-150 °C, further for example, a temperature range of 70-130 °C.

The externally applied pressure refers to applying a certain pressure from the outside during the process of hydrothermally calcining the material. For example, it can be carried out by introducing an inert gas from the outside to maintain a certain back pressure.

The amount of externally applied/added water is to meet the requirement that the atmosphere condition contains 1-100% water vapor.

The preparation process provided by the present invention promotes the migration of surface phosphorus species to the bulk phase of the (hierarchical) ZSM-5 molecular sieve.

In the phosphorus-modified ZSM-5 molecular sieve/phosphorus-containing hierarchical ZSM-5 molecular sieve provided by the present invention, phosphorus and the framework aluminum are fully coordinated, the framework aluminum is fully protected. The molecular sieve has excellent hydrothermal stability. For example, after the hydrothermal aging treatment at 800 °C, 100% water vapor condition for 17h, the molecular seive has higher crystallinity retention. In the cracking of n-tetradecane, the main indicators are improved compared to the control samples. For example, the conversion and the liquefied gas yield are relatively high, and at the same time, the yield of three olefins (ethylene, propylene and butene) has been greatly improved. In the cracking of n-tetradecane, the phosphorus-containing hierarchical ZSM-5 molecular sieve of the present invention has excellent activity in the catalytic cracking of n-tetradecane, and the main technical indicators such as conversion, liquefied gas yield, propylene yield and total butene yield have been improved. While increasing the yield of lower carbon olefins, a higher liquefied gas yield can be obtained, and more products having high additional value can be produced.

The phosphorus-modified ZSM-5 molecular sieve/phosphorus-containing hierarchical ZSM-5 molecular sieve provided by the invention can be used as the active component of the catalyst together with Y-type zeolite, and can achieve high cracking conversion, high lower carbon olefin yield, high liquefied gas yield, and other characteristics in the catalytic cracking reaction of hydrocarbon oil.

### Hierarchical molecular sieve-based cracking auxiliary and preparation process and use

The present invention provides a cracking auxiliary, wherein based on the dry basis of the catalytic cracking auxiliary, the catalytic cracking auxiliary contains 5-75 wt% of phosphorus-containing hierarchical ZSM-5 molecular sieve; wherein, in the surface XPS elemental analysis of the phosphorus-containing hierarchical ZSM-5 molecular sieve, n1/n2 ≤ 0.08, wherein n1 represents the mole number of phosphorus, n2 represents the total mole number of silicon and aluminum.

In the cracking auxiliary of the present invention, in the surface XPS elemental analysis of the phosphorus-containing hierarchical ZSM-5 molecular sieve, the n1/n2 ≤ 0.07, for example, n1/n2 ≤ 0.06, further for example, n1/n2 is 0.02-0.05. The characterization parameter indicates a decrease in the surface phosphorus species content in the molecular sieve, and it also shows that the surface phosphorus species migrate more to the bulk phase of the molecular sieve. That is to say, the value of n1/n2 describes the dispersion effect of phosphorus species on the molecular sieve surface and the degree of migration from the surface of the ZSM-5 molecular sieve into the crystal interior. The smaller the value, the lower the content of phosphorus species on the surface, the better the dispersion of phosphorus species and the higher the degree of the migration to the interior, and the better the hydrothermal stability of the molecular sieve.

In the cracking auxiliary of the present invention, the phosphorus-containing hierarchical ZSM-5 molecular sieve, in 27 Al MAS-NMR, has the ratio of peak area for the resonance signal having a chemical shift of 39±3ppm to peak area for the resonance signal having a chemical shift of 54ppm±3ppm, of ≥ 1, for example, ≥ 8, further for example, ≥ 12, still further for example, 14-25. In the 27Al MAS-NMR, the resonance signal having a chemical shift of 39±3ppm represents the framework aluminum species coordinated with phosphorus (phosphorus-stabilized framework aluminum, namely distorted four-coordinated framework aluminum); the resonance signal having a chemical shift of 54ppm±3ppm represents the four-coordinated framework aluminum species.

In the cracking auxiliary of the present invention, after the phosphorus-containing hierarchical ZSM-5 molecular sieve has undergone the hydrothermal aging treatment at 800°C, under 100% water vapor for 17h, in its NH3-TPD spectra, for the desorption temperature of 200°C or higher, the proportion of the peak area for the strong acid center relative to the peak area for the total acid center Is ≥ 45%, preferably ≥ 50%, further for example, ≥ 60%, still further for example, 60%-80%. It shows that the phosphorus-containing hierarchical ZSM-5 molecular sieve of the present invention has higher retention of strong acid centers after undergoing the hydrothermal aging treatment at 800°C, under 100% water vapor for 17h, and thus has higher cracking activity.

In the cracking auxiliary of the present invention, with respect to the content of phosphorus in the phosphorus-containing hierarchical ZSM-5 molecular sieve, when both phosphorus and aluminum are on a molar basis, the ratio of the two is 0.01-2, for example, 0.1-1.5; further for example, 0.2-1.5.

In the cracking auxiliary of the present invention, based on the dry basis of the cracking auxiliary, the cracking auxiliary may contain 5-75 wt%, preferably 8-60 wt% of phosphorus-containing hierarchical ZSM-5 molecular sieve, and can also contain 1-40 wt% of a binder and 0-65 wt% of a second clay.

The binder can be inorganic oxide binders that are familiar to those skilled in the art and conventionally used as the binder component of the auxiliary or catalyst, for example, one or more of pseudo-boehmite, alumina sol, silica-alumina sol, and water glass. For example, the binder contains a phosphorus-aluminum inorganic binder, that is, a phosphorus-aluminum inorganic binder or a mixture of a phosphorus-aluminum inorganic binder and other inorganic binder(s). The phosphorus-aluminum inorganic binder is a phosphorus-aluminum glue and/or a first clay-containing phosphorus-aluminum inorganic binder. Based on the dry basis of the first clay-containing phosphorus-aluminum inorganic binder, the first clay-containing phosphorus-aluminum inorganic binder contains 10-40 wt%, for example, 15-40 wt% of an aluminum component as Al2O3, 45-90 wt%, for example, 45-80 wt% of a phosphorus component as P2O5 and greater than 0 and not more than 40 wt% of a first clay on a dry basis, and the first clay-containing phosphorus-aluminum inorganic binder has a P/Al weight ratio of 1.0-6.0, a pH of 1-3.5, and a solid content of 15-60 wt%.

In an embodiment of the phosphorus-aluminum inorganic binder, based on the dry basis weight of the phosphorus-aluminum inorganic binder, the phosphorus-aluminum inorganic binder may comprise 10-40 wt%, for example, 15-40 wt% of an aluminum component as Al2O3, 45-90 wt%, for example, 45-80 wt% of a phosphorus component as P2O5 and based on the dry weight 0-40 wt% of a first clay, and it has a P/Al weight ratio of 1.0-6.0, a pH value of 1-3.5, and a solid content of 15-60 wt%; for example, it may comprise 10-40 wt%, for example, 15-40 wt% of an aluminum component as Al2O3, 45-90 wt%, for example, 45-80 wt% of a phosphorus component as P2O5 and based on the dry weight 1-40 wt% of a first clay; preferably it may contain 15-35 wt% of an aluminum component (as Al2O3), 50-75 wt% of a phosphorus component (as P2O5) and based on the dry weight 8-35 wt% of a first clay, and and it has a P/Al weight ratio of for example, 1.2-6.0, further for example, 2.0-5.0, and a pH value of for example, 2.0-3.0.

In another embodiment of the phosphorus-aluminum inorganic binder, based on the dry basis weight of the phosphorus-aluminum inorganic binder, the phosphorus-aluminum inorganic binder comprises 20-40 wt% of an aluminum component (as Al2O3) and 60-80 wt% of a phosphorus component (as P2O5).

The first clay can be selected from at least one of kaolin, sepiolite, attapulgite, rectorite, smectite and diatomite; the other inorganic binder can be selected from one or more of inorganic oxide binders conventionally used in the binder component of the catalytic cracking auxiliary or catalyst besides the phosphorus-aluminum glue and the phosphorus-aluminum inorganic binder, preferably selected from at least one of pseudo-boehmite, alumina sol, silica-alumina sol and water glass, further for example, selected from at least one of pseudo-boehmite and alumina sol.

In the cracking auxiliary of the present invention, based on the dry basis of the cracking auxiliary, it further contains 0-65 wt%, preferably 5 wt%-55 wt% of a second clay. The second clay is also well known by those skilled in the art, and for example, selected from at least one of kaolin, sepiolite, attapulgite, rectorite, smectite, giagerite, halloysite, hydrotalcite, bentonite and diatomite.

In an embodiment of the cracking auxiliary of the present invention, based on the dry basis of the catalytic cracking auxiliary, it comprises 20-60 wt% of a phosphorus-modified ZSM-5 molecular sieve, 5-35 wt% of a binder and 5-55 wt% of a second clay.

The present invention also provides a process of preparing the cracking auxiliary, the process comprises a phosphorus-containing hierarchical ZSM-5 molecular sieve, a binder and optionally a second clay are vigorously mixed and stirred with water and spray-dried to produce the catalytic cracking auxiliary, wherein the phosphorus-containing hierarchical ZSM-5 molecular sieve is obtained by treating a hydrogen-type hierarchical ZSM-5 molecular sieve by contacting a solution of the phosphorus-containing compound, drying the treated ZSM-5 molecular sieve, hydrothermally calcining the dried ZSM-5 molecular sieve in an atmosphere condition where an external pressure is applied and water is externally added, and recovering the resulting product; wherein, in the hydrogen-type hierarchical ZSM-5 molecular sieve, the proportion of the mesopore volume relative to the total pore volume is greater than 10%, the average pore diameter is 2-20nm; the contacting is to make an aqueous solution of the phosphorus-containing compound at a temperature of 0-150°C and the HZSM-5 molecular sieve at a temperature of 0-150°C in contact (by mixing) at substantially the same temperature for at least 0.1 hours through the immersion method, or, the contacting is to vigorously mix and stir the phosphorus-containing compound, the HZSM-5 molecular sieve and water and then keep the mixture at 0-150°C for at least 0.1 hours; with respect to the atmosphere condition, its gauge pressure is 0.01-1.0MPa and it contains 1-100% water vapor.

In the preparation process of the present invention, the hydrogen-type hierarchical ZSM-5 molecular sieve satisfies: Na2O < 0.1wt%, the ratio of mesopore (2nm-50nm) volume relative to the total pore volume is greater than 10%, usually 10%-90%, and the average pore diameter is 2-20nm. The silica-alumina ratio (the molar ratio of silicon oxide to aluminum oxide) is in the range of ≥ 10, usually 10-200.

The steps used in the preparation of phosphorus-containing hierarchical ZSM-5 molecular sieve promote the migration of surface phosphorus species to the bulk phase of the hierarchical ZSM-5 molecular sieve; so that phosphorus and the framework aluminum are fully coordinated, the framework aluminum is fully protected, and the molecular sieve has excellent hydrothermal stability.

In the preparation step for preparing the phosphorus-containing hierarchical ZSM-5 molecular sieve, the hydrogen-type ZSM-5 molecular sieve is obtained by the ammonium-exchanging of a micropore ZSM-5 molecular sieve to reduce the sodium content to Na2O<0.1wt%, and have a silica-alumina ratio (the molar ratio of silicon oxide to aluminum oxide, the same as below) in the range of ≥ 10, usually 10-200.

In the preparation step for preparing the phosphorus-containing hierarchical ZSM-5 molecular sieve, the phosphorus-containing compound is selected from organic phosphorus compounds and/or inorganic phosphorus compounds. The organic phosphorus compound is selected from trimethyl phosphate, triphenylphosphine, trimethyl phosphite, tetrabutylphosphonium bromide, tetrabutylphosphonium chloride, tetrabutylphosphonium hydroxide, triphenylethylphosphonium bromide, triphenylbutylphosphonium bromide, triphenylbenzylphosphonium bromide, hexamethylphosphoric triamide, dibenzyl diethylphosphoramidite, and 1,3-bis((triethyl-phosphaneyl)methyl)benzene, the inorganic phosphorus compound is selected from phosphoric acid, ammonium hydrogen phosphate, diammonium hydrogen phosphate, ammonium phosphate, and boron phosphate.

In the preparation step for preparing the phosphorus-containing hierarchical ZSM-5 molecular sieve, the first manner of the contacting is to make an aqueous solution of the phosphorus-containing compound at a temperature of 0-150°C and a hydrogen-type hierarchical ZSM-5 molecular sieve at a temperature of 0-150°C in contact at substantially the same temperature for at least 0.1 hours through the immersion method. For example, the contacting can be performed in the normal temperature range of 0-30 °C, or the contacting is performed for example, in a higher temperature range above 40°C, for example, 50-150°C, further for example, 70-130°C, which can produce a better result, i.e., the better dispersion of phosphorus species, and the easier migration of phosphorus into the crystal interior of the hydrogen-type hierarchical ZSM-5 molecular sieve to combine with the framework aluminum, which further improves the coordination degree of phosphorus and the framework aluminum, and finally contributes to improving the hydrothermal stability of the molecular sieve. The substantially same temperature means that the temperature difference between the temperature of the aqueous solution of the phosphorus-containing compound and the temperature of the hydrogen-type hierarchical ZSM-5 molecular sieve is within ±5°C. For example, the temperature of the aqueous solution of the phosphorus-containing compound is 80°C, and the hydrogen-type hierarchical ZSM-5 molecular sieve needs to be heated to 75-85°C.

In the preparation step for preparing the phosphorus-containing hierarchical ZSM-5 molecular sieve, the second manner of the contacting is to mix the phosphorus-containing compound, the hydrogen-type hierarchical ZSM-5 molecular sieve and water, and maintain at 0-150 °C for at least 0.1 hours. For example, after mixing, it is kept in the normal temperature range of 0-30 °C for at least 0.1 hours. For example, in order to produce a better result, i.e., the better dispersion of phosphorus species, and the easier migration of phosphorus into the crystal interior of the molecular sieve to combine with the framework aluminum, to further improve the coordination degree of phosphorus and the framework aluminum, and to finally improve the hydrothermal stability of the molecular sieve, the phosphorus-containing compound, the hydrogen-type hierarchical ZSM-5 molecular sieve and water are mixed, and then maintained at a higher temperature range above 40 °C for 0.1 hours, for example, a temperature range of 50-150 °C, further for example, a temperature range of 70-130 °C.

In the preparation step for preparing the phosphorus-containing hierarchical ZSM-5 molecular sieve, the molar ratio of the phosphorus-containing compound (as phosphorus) to the hydrogen-type hierarchical ZSM-5 molecular sieve (as aluminum) is 0.01-2; for example, the molar ratio of the two is 0.1-1.5; further for example, the molar ratio of the two is 0.2-1.5. With respect to the contacting, the weight ratio of water/molecular sieve is 0.5-1, for example, the contact time is 0.5-40 hours.

In the preparation step for preparing the phosphorus-containing hierarchical ZSM-5 molecular sieve, the treatment of hydrothermally calcining is performed in an atmosphere condition where an external pressure is applied and water is externally added. The atmosphere condition is obtained by externally applying the pressure and externally applying water, preferably the gauge pressure is 0.1-0.8 MPa, further for example, the gauge pressure is 0.3-0.6 MPa, preferably the atmosphere contains 30-100% water vapor, further for example, contains 60-100% water vapor. The externally applied pressure refers to applying a certain pressure from the outside during the process of hydrothermally calcining the material. For example, it can be carried out by introducing an inert gas from the outside to maintain a certain back pressure. The amount of externally applied/added water is to meet the requirement that the atmosphere condition contains 1-100% water vapor. The step of hydrothermal calcining is performed at 200-800°C, preferably 300-500°C.

In the process of preparing the cracking auxiliary, the binder contains a phosphorus-aluminum inorganic binder and other inorganic binder(s), on a dry basis, the ratio by weight of the phosphorus-containing hierarchical ZSM-5 molecular sieve : the phosphorus-aluminum inorganic binder : the other inorganic binder can be (10-75) : (3-39) : (1-30), for example, (10-75) : (8-35) : (5-25); wherein the phosphorus-aluminum inorganic binder can be a phosphorus-aluminum glue and/or a first clay-containing phosphorus-aluminum inorganic binder; the other inorganic binder can comprise at least one of pseudo-boehmite, alumina sol, silica-alumina sol, and water glass. The preparation process may comprise "mixing" or "vigorously mixing and stirring (with water)" the phosphorus-containing hierarchical ZSM-5 molecular sieve, the phosphorus-aluminum inorganic binder and other inorganic binder(s). No special requirement is imposed on the charging order. For example, the phosphorus-aluminum inorganic binder, other inorganic binder(s), the phosphorus-containing hierarchical ZSM-5 molecular sieve, and the second clay (in case of no second clay, the relevant charging step can be omitted) can be mixed, and vigorously mixed and stirred with water. Alternatively, the second clay, the phosphorus-containing hierarchical ZSM-5 molecular sieve, and other inorganic binder(s) can be vigorously mixed and stirred with water, and then the phosphorus-aluminum inorganic binder is added, which can help to improve the activity and selectivity of the auxiliary.

In the process of preparing the catalytic cracking auxiliary, it further comprises a step of spray-drying the slurry obtained from the "vigorously mixing and stiring with water". The method of spray-drying is well known to those skilled in the art, and there is no special requirement in the present invention. Optionally, the preparation process may further comprises: the spray-dried product is subjected to a first calcining, and then washed, and optionally dried to produce the cracking auxiliary. Herein, for the first calcining, the calcining temperature can be 300-650°C, for example, 400-600°C, preferably 450-550°C, and the calcining time can be 0.5-8 hours; for the washing, one of ammonium sulfate, ammonium chloride, and ammonium nitrate can be used, the washing temperature can be 40-70°C; the drying temperature can be 100-200°C, for example, 100-150°C, and the drying time can be 0.5-24h, for example, 1-12h.

In an embodiment of the process of preparing the cracking auxiliary, a binder, a second clay and water (for example, decationized water and/or deionized water) are mixed to form a slurry having a solid content of 10-50 wt%. The slurry is stirred well, adjusted with an inorganic acid such as hydrochloric acid, nitric acid, phosphoric acid or sulfuric acid to a pH of 1-4 and maintained at this pH, allowed to stand for aging at 20-80°C for 0-2 hours (such as 0.3-2 hours). Then an inorganic binder such as alumina sol and/or silica sol is added, and the mixture is stirred for 0.5-1.5 hours to form a gel. Then a molecular sieve (including the phosphorus-containing hierarchical ZSM-5 molecular sieve) is added to form an auxiliary slurry having a solid content of for example, 20-45 wt%. The auxiliary slurry continued to be stirred and spray-dried to form auxiliary microspheres. Then auxiliary microspheres are subjected to a first calcining, for example, at 350-650 °C or 400-600 °C, preferably 450-550 °C for 0.5-6 hours or 0.5-2 hours, and then washed with ammonium sulfate (wherein the washing temperature can be 40-70 °C, ammonium sulfate auxiliary microspheres:water= 0.2-0.8: 1: 5-15 (weight ratio)) to the sodium oxide content less than 0.25wt%, washed with water and filtered, and then dried.

In the process of preparing the cracking auxiliary, the first clay-containing phosphorus-aluminum inorganic binder can also be prepared by using the following steps: an alumina source, the first clay and water are vigorously mixed and stirred to disperse into a slurry having a solid content of 5-48 wt%; wherein the alumina source is aluminum hydroxide and/or alumina that can be peptized by an acid, relative to 10-40 parts by weight, for example, 15-40 parts by weight of the alumina source (as Al2O3), the used amount of the first clay based on the dry weight is greater than 0 part by weight and not more than 40 parts by weight; a concentrated phosphoric acid is added to the slurry under stirring according to the weight ratio of P/Al = 1-6, and the resulting mixed slurry is reacted at 50-99°C for 15-90 minutes; wherein P in the P/Al is the weight of phosphorus as the simple substance in phosphoric acid, Al is the weight of aluminum as the simple substance in the alumina source. The alumina source can be at least one selected from ρ-alumina, x-alumina, η-alumina, γ-alumina, κ-alumina, σ-alumina, θ-alumina, gibbsite, bayerite, nordshandite, diaspore, boehmite and pseudo-boehmite, the aluminum component in the first clay-containing phosphorus-aluminum inorganic binder is derived from the alumina source. The first clay may comprise one or more of kaolin, sepiolite, attapulgite, rectorite, smectite and diatomite, for example, rectorite. The concentration of the concentrated phosphoric acid can be 60-98 wt%, further for example, 75-90 wt%, the feeding rate of phosphoric acid is, for example, 0.01-0.10 kg phosphoric acid/min/kg alumina source, further for example, 0.03-0.07 kg phosphoric acid/min/kg alumina source.

In the above embodiment, the introduction of the clay into the first clay-containing phosphorus-aluminum inorganic binder not only improves the mass transfer and the heat transfer between materials during the preparation process, but also avoids the binder solidification due to the overtemperature caused by the heat release from the local instant violent reaction by uneven materials; and the bonding performance of the obtained binder is comparable to that of the phosphorus-aluminum binder prepared by the method without the introduction of clay. Moreover, the introduction of clay, especially rectorite with layered structure in the process improves the heavy oil conversion ability of the catalyst composition, so that the obtained auxiliary has better selectivity.

The present invention further provides the use of the cracking auxiliary, that is, a process for catalytically cracking a hydrocarbon oil, the process comprises: reacting the hydrocarbon oil by contacting the cracking auxiliary according to the present invention under the catalytic cracking condition.

The process for catalytically cracking the hydrocarbon oil of the present invention comprises: the hydrocarbon oil is reacted by contacting a catalyst mixture containing the cracking auxiliary and a catalytic cracking catalyst under the catalytic cracking condition; in the catalyst mixture, the content of the cracking auxiliary is 0.1-30 wt%.

Optionally, the catalytic cracking condition includes: the reaction temperature is 500-800°C; the hydrocarbon oil is one or more selected from crude oil, naphtha, gasoline, atmospheric residue, vacuum residue, atmospheric gas oil, vacuum gas oil, straight-run gas oil, propane light/heavy deasphalted oil, coker gas oil and coal liquefication product.

### Hierarchical molecular sieve-based cracking catalyst and preparation process and use

The present invention also provides a cracking catalyst, which is characterized in that based on the dry basis of the cracking catalyst, the cracking catalyst contains on the dry basis 1-25 wt% of Y zeolite, on a dry basis, 5-50 wt% of phosphorus-containing hierarchical ZSM-5 molecular sieve, on a dry basis, 1-60 wt% of an inorganic binder and optionally on the dry basis 0-60 wt% of a second clay, wherein in the surface XPS elemental analysis of the phosphorus-containing hierarchical ZSM-5 molecular sieve, n1/n2 ≤ 0.08, for example, n1/n2 ≤ 0.07, further for example, n1/n2 ≤ 0.06, still further for example, n1/n2 is 0.02-0.05, wherein n1 represents the mole number of phosphorus, n2 represents the total mole number of silicon and aluminum, the inorganic binder comprises phosphorus-aluminum inorganic binder and/or other inorganic binder(s).

Said Y zeolite in the cracking catalyst (or called as "catalyst" hereinbelow) provided by the present invention for example, comprises at least one of a PSRY zeolite, a rare earth-containing PSRY zeolite, a USY zeolite, a rare earth-containing USY zeolite, a REY zeolite, a REHY zeolite and an HY zeolite. In the cracking catalyst of the present invention, in the surface XPS elemental analysis of the phosphorus-containing hierarchical ZSM-5 molecular sieve, the n1/n2 ≤ 0.07, for example, n1/n2 ≤ 0.06, further for example, n1/n2 is 0.02-0.05. The characterization parameter indicates a decrease in the surface phosphorus species content in the molecular sieve, and it also shows that the surface phosphorus species migrate more to the bulk phase of the molecular sieve. That is to say, the value of n1/n2 describes the dispersion effect of phosphorus species on the molecular sieve surface and the degree of migration from the surface of the ZSM-5 molecular sieve into the interior of the crystal. The smaller the value, the lower the content of phosphorus species on the surface, the better the dispersion of phosphorus species and the higher the degree of the migration to the interior, and the better the hydrothermal stability of the molecular sieve.

In the cracking catalyst of the present invention, the phosphorus-containing hierarchical ZSM-5 molecular sieve, in 27 Al MAS-NMR, has the ratio of peak area for the resonance signal having a chemical shift of 39±3ppm to peak area for the resonance signal having a chemical shift of 54ppm±3ppm, of ≥ 1, for example, ≥ 8, further for example, ≥ 12, still further for example, 14-25. In the 27 Al MAS-NMR of the molecular sieve, the resonance signal having a chemical shift of 39±3ppm represents the framework aluminum species coordinated with phosphorus (phosphorus-stabilized framework aluminum, namely distorted four-coordinated framework aluminum); the resonance signal having a chemical shift of 54ppm±3ppm represents the four-coordinated framework aluminum species. In the cracking catalyst of the present invention, after the phosphorus-containing hierarchical ZSM-5 molecular sieve has undergone the hydrothermal aging treatment at 800°C, under 100% water vapor for 17h, in its NH3-TPD spectra, for the desorption temperature of 200°C or higher, the proportion of the peak area for the strong acid center relative to the peak area for the total acid center is ≥ 45%, preferably ≥ 50%, further for example, ≥ 60%, still further for example, 60%-80%. It shows that the phosphorus-containing hierarchical ZSM-5 molecular sieve of the present invention has higher retention of strong acid centers after undergoing the hydrothermal aging treatment at 800°C, under 100% water vapor for 17h, and thus has higher cracking activity.

In the cracking catalyst of the present invention, with respect to the content of phosphorus in the phosphorus-containing hierarchical ZSM-5 molecular sieve, when both phosphorus and aluminum are on a molar basis, the ratio of the two is 0.01-2, for example, 0.1-1.5; further for example, 0.3-1.3.

In the cracking catalyst of the present invention, the clay is well known to those skilled in the art, and the second clay can be at least one selected from kaolin, metakaolin, diatomite, sepiolite, attapulgite, smectite and rectorite, for example, one of kaolin, metakaolin, rectorite. Based on the total weight of the catalyst, the catalyst of the present invention preferably contains 10-50 wt% of a second clay, for example, 12-28 wt% or 15-40 wt% of a second clay.

In an embodiment of the cracking catalyst of the present invention, on a dry basis, the catalyst comprises 5-35 wt% of phosphorus-aluminum inorganic binder, 1.5-20 wt% of Y zeolite, 10-45 wt% of phosphorus-containing hierarchical ZSM-5 molecular sieve, 10-50 wt% of a second clay and 5-28 wt% of other inorganic binder(s).

The present invention also provides a process of preparing the catalyst, the process comprising: Y zeolite, phosphorus-containing hierarchical ZSM-5 molecular sieve and inorganic binder are vigorously mixed and stirred with water and spray-dried, and optionally calcined to produce the cracking catalyst; wherein, a second clay is optionally added during the mixing; on a dry basis, the used amount ratio by weight of the Y zeolite, the phosphorus-containing hierarchical ZSM-5 molecular sieve, the inorganic binder and the second clay is (1-25):(5-50):(1-60):(0-60); the inorganic binder comprises phosphorus-aluminum inorganic binder and/or other inorganic binder(s); wherein the phosphorus-containing hierarchical ZSM-5 molecular sieve is obtained by treating a hydrogen-type hierarchical ZSM-5 molecular sieve by contacting a solution of the phosphorus-containing compound, drying the treated ZSM-5 molecular sieve, hydrothermally calcining the dried ZSM-5 molecular sieve in an atmosphere condition where an external pressure is applied and water is externally added, and recovering the resulting product; wherein, in the hydrogen-type hierarchical ZSM-5 molecular sieve, the proportion of the mesopore volume relative to the total pore volume is greater than 10%, the average pore diameter is 2-20nm; the contacting is to make an aqueous solution of the phosphorus-containing compound at a temperature of 0-150°C and the hydrogen-type hierarchical ZSM-5 molecular sieve at a temperature of 0-150°C in contact (by mixing) at substantially the same temperature for at least 0.1 hours through the immersion method, or, the contacting is to vigorously mix and stir the phosphorus-containing compound, the hydrogen-type hierarchical ZSM-5 molecular sieve and water and then keep the mixture at 0-150°C for at least 0.1 hours; with respect to the atmosphere condition, its gauge pressure is 0.01-1.0MPa and it contains 1-100% water vapor.

In the preparation process of the present invention, the hydrogen-type hierarchical ZSM-5 molecular sieve satisfies: Na2O < 0.1wt%, the ratio of mesopore (2nm-50nm) volume relative to the total pore volume is greater than 10%, usually 10%-90%, and the average pore diameter is 2-20nm. The silica-alumina ratio (the molar ratio of silicon oxide to aluminum oxide) is in the range of ≥ 10, usually 10-200.

In the preparation step for preparing the phosphorus-containing hierarchical ZSM-5 molecular sieve of the present invention, the phosphorus-containing compound is selected from an organic phosphorus compound and/or an inorganic phosphorus compound. The organic phosphorus compound is selected from trimethyl phosphate, triphenylphosphine, trimethyl phosphite, tetrabutylphosphonium bromide, tetrabutylphosphonium chloride, tetrabutylphosphonium hydroxide, triphenylethylphosphonium bromide, triphenylbutylphosphonium bromide, triphenylbenzylphosphonium bromide, hexamethylphosphoric triamide, dibenzyl diethylphosphoramidite, and 1,3-bis((triethyl-phosphaneyl)methyl)benzene, the inorganic phosphorus compound is selected from phosphoric acid, ammonium hydrogen phosphate, diammonium hydrogen phosphate, ammonium phosphate, and boron phosphate.

In the preparation step for preparing the phosphorus-containing hierarchical ZSM-5 molecular sieve of the present invention, the contacting is to make an aqueous solution of the phosphorus-containing compound at a temperature of 0-150°C and a hydrogen-type hierarchical ZSM-5 molecular sieve at a temperature of 0-150°C in contact at substantially the same temperature for at least 0.1 hours through the immersion method. For example, the contacting can be performed in the normal temperature range of 0-30 °C, or the contacting is performed for example, in a higher temperature range above 40°C, for example, 50-150°C, further for example, 70-130°C, which can produce a better result, i.e., the better dispersion of phosphorus species, and the easier migration of phosphorus into the crystal interior of the molecular sieve to combine with the framework aluminum, which further improves the coordination degree of phosphorus and the framework aluminum, and finally contributes to improving the hydrothermal stability of the molecular sieve. The substantially same temperature means that the temperature difference between the temperature of the aqueous solution of the phosphorus-containing compound and the temperature of the hydrogen-type hierarchical ZSM-5 molecular sieve is within ±5°C. For example, the temperature of the aqueous solution of the phosphorus-containing compound is 80°C, and the hydrogen-type hierarchical ZSM-5 molecular sieve needs to be heated to 75-85°C.

In the preparation step for preparing the phosphorus-containing hierarchical ZSM-5 molecular sieve of the present invention, the contacting may also be to mix the phosphorus-containing compound, the hydrogen-type hierarchical ZSM-5 molecular sieve and water, and maintain at 0-150 °C for at least 0.1 hours. For example, after mixing, it is kept in the normal temperature range of 0-30 °C for at least 0.1 hours. For example, in order to produce a better result, i.e., the better dispersion of phosphorus species, and the easier migration of phosphorus into the crystal interior of the molecular sieve to combine with the framework aluminum, to further improve the coordination degree of phosphorus and the framework aluminum, and to finally improve the hydrothermal stability of the molecular sieve, after mixing, it is then maintained at a higher temperature range above 40 °C for 0.1 hours, for example, a temperature range of 50-150 °C, further for example, a temperature range of 70-130 °C.

In the preparation step for preparing the phosphorus-containing hierarchical ZSM-5 molecular sieve of the present invention, the molar ratio of the phosphorus-containing compound (as phosphorus) to the hydrogen-type hierarchical ZSM-5 molecular sieve (as aluminum) is 0.01-2; for example, the molar ratio of the two is 0.1-1.5; further for example, the molar ratio of the two is 0.3-1.3. With respect to the contacting, the weight ratio of water/molecular sieve is 0.5-1, for example, the contact time is 0.5-40 hours.

In the preparation step for preparing the phosphorus-containing hierarchical ZSM-5 molecular sieve of the present invention, the treatment of hydrothermally calcining is performed in an atmosphere condition where an external pressure is applied and water is externally added. The atmosphere condition is obtained by externally applying the pressure and externally applying water, preferably the gauge pressure is 0.1-0.8 MPa, further for example, the gauge pressure is 0.3-0.6 MPa, preferably the atmosphere contains 30-100% water vapor, further for example, contains 60-100% water vapor. The externally applied pressure refers to applying a certain pressure from the outside during the process of hydrothermally calcining the material. For example, it can be carried out by introducing an inert gas from the outside to maintain a certain back pressure. The amount of externally applied/added water is to meet the requirement that the atmosphere condition contains 1-100% water vapor. The step of hydrothermal calcining is performed at 200-800°C, preferably 300-500°C.

The cracking catalyst of the present invention, based on the dry basis of the catalyst, for example, contains based on the dry weight, 3-40 wt% of a phosphorus-aluminum inorganic binder or contains 3-40 wt% of a phosphorus-aluminum inorganic binder and 1-30 wt% of other inorganic binder(s).

The phosphorus-aluminum inorganic binder is a phosphorus-aluminum glue and/or a first clay-containing phosphorus-aluminum inorganic binder; based on the dry basis weight of the first clay-containing phosphorus-aluminum inorganic binder, the first clay-containing phosphorus-aluminum inorganic binder contains 10-40 wt%, for example, 15-40 wt% of an aluminum component as Al2O3, 45-90 wt%, for example, 45-80 wt% of a phosphorus component as P2O5 and greater than 0 and not more than 40 wt% of a first clay on a dry basis, andthe first clay-containing phosphorus-aluminum inorganic binder has a P/Al weight ratio of 1.0-6.0, a pH of 1-3.5, and a solid content of 15-60 wt%; the first clay comprises at least one of kaolin, sepiolite, attapulgite, rectorite, smectite and diatomite.

the other inorganic binder comprises at least one of pseudo-boehmite, alumina sol, silica-alumina sol, and water glass. The second clay is at least one selected from kaolin, sepiolite, attapulgite, rectorite, smectite, giagerite, halloysite, hydrotalcite, bentonite and diatomite.

The Y zeolite comprises at least one of a PSRY zeolite, a rare earth-containing PSRY zeolite, a USY zeolite, a rare earth-containing USY zeolite, a REY zeolite, a REHY zeolite and an HY zeolite.

The preparation process may further comprise: the spray-dried product is subjected to a first calcining, and then washed, and optionally dried to produce the catalyst; wherein for the first calcining, the calcining temperature is 300-650°C, the calcining time is 0.5-8h; the drying temperature is 100-200°C, the drying time is 0.5-24h.

The preparation process may further comprise, the first clay-containing phosphorus-aluminum inorganic binder is prepared by using the following steps: an alumina source, the first clay and water are vigorously mixed and stirred to disperse into a slurry having a solid content of 5-48 wt%; wherein the alumina source is aluminum hydroxide and/or alumina that can be peptized by an acid, relative to 10-40 parts by weight, for example, 15-40 parts by weight of the alumina source (as Al2O3), the used amount of the first clay based on the dry weight is greater than 0 part by weight and not more than 40 parts by weight; a concentrated phosphoric acid is added to the slurry under stirring according to the weight ratio of P/Al = 1-6, and the resulting mixed slurry is reacted at 50-99°C for 15-90 minutes; wherein P in the P/Al is the weight of phosphorus as the simple substance in phosphoric acid, Al is the weight of aluminum as the simple substance in the alumina source.

In an embodiment of the phosphorus-aluminum inorganic binder of the present invention, based on the dry basis weight of the phosphorus-aluminum inorganic binder, it preferably contains 15-35 wt% of aluminum component (as Al2O3), 50-75 wt% of phosphorus component (as P2O5) and based on the dry weight 8-35 wt% of first clay, and and it has a P/Al weight ratio of for example, 1.2-6.0, further for example, 2.0-5.0, and a pH value of for example, 2.0-3.0. In another embodiment of the phosphorus-aluminum inorganic binder of the present invention, based on the dry basis weight of the phosphorus-aluminum inorganic binder, the phosphorus-aluminum inorganic binder comprises 20-40 wt% of an aluminum component (as Al2O3) and 60-80 wt% of a phosphorus component (as P2O5). The preparation process provided by the present invention may also include: the calcined product is washed and optionally dried to produce the catalytic cracking catalyst; Herein, for the calcining, the calcining temperature can be 300-650°C, for example, 400-600°C, preferably 450-550°C, and the calcining time can be 0.5-12 hours; for the washing, one of ammonium sulfate, ammonium chloride, and ammonium nitrate can be used, the washing temperature can be 40-80°C; the drying temperature can be 110-200°C, for example, 120-150°C, and the drying time can be 0.5-18h, for example, 2-12h. In an embodiment of the preparation process provided by the present invention, an inorganic binder (for example, pseudo-boehmite, alumina sol, silica sol, silica-alumina gel or a mixture of two or more thereof) and second clay (for example, kaolin) and water (for example, decationized water and/or deionized water) can be mixed to form a slurry having a solid content of 10-50 wt%. The slurry is stirred well, adjusted with an inorganic acid such as hydrochloric acid, nitric acid, phosphoric acid or sulfuric acid to a pH of 1-4 and maintained at this pH, allowed to stand for aging at 20-80°C for 0-2 hours (such as 0.3-2 hours). Then alumina sol and/or silica sol is added, and the mixture is stirred for 0.5-1.5 hours to form a gel. Then a molecular sieve (including the phosphorus-modified ZSM-5 molecular sieve and Y zeolite) is added to form a catalyst slurry having a solid content of for example, 20-45 wt%. The catalyst slurry continued to be stirred and spray-dried to form catalyst microspheres.

Then catalyst microspheres are calcined, for example, at 350-650 °C or 400-600 °C such as 450-550 °C for 0.5-6 hours or 0.5-2 hours, and then washed with ammonium sulfate (wherein the washing temperature can be 40-70 °C, ammonium sulfate:catalyst microspheres:water= 0.2-0.8: 1: 5-15 (weight ratio)) to the sodium oxide content less than 0.25wt%, washed with water and filtered, and then dried. In another embodiment of the preparation process provided by the present invention, Y zeolite, a phosphorus-containing hierarchical ZSM-5 molecular sieve, a phosphorus-aluminum inorganic binder and other inorganic binder(s), and optionally a second clay can be vigorously mixed and stirred with water, and spray-dried.

The inorganic binder comprises the phosphorus-aluminum inorganic binder and the other inorganic binder, the ratio by weight of the phosphorus-aluminum inorganic binder to the other inorganic binder can be (3-40) : (1-30), for example, (5-35) : (5-28), further for example, (10-30) : (5-25); wherein the phosphorus-aluminum inorganic binder can be a phosphorus-aluminum glue and/or a first clay-containing phosphorus-aluminum inorganic binder; the other inorganic binder can comprise at least one of pseudo-boehmite, alumina sol, silica-alumina sol, and water glass.

The process of preparing the cracking catalyst of the present invention may comprise "mixing" or "vigorously mixing and stirring (with water)" the phosphorus-modified molecular sieve, the phosphorus-aluminum inorganic binder and other inorganic binder(s). No special requirement is imposed on the charging order. For example, the phosphorus-aluminum inorganic binder, other inorganic binder(s), the molecular sieve, and the second clay (in case of no second clay, the relevant charging step can be omitted) can be mixed, and vigorously mixed and stirred with water. Alternatively, the second clay, the molecular sieve, and other inorganic binder(s) can be vigorously mixed and stirred with water, and then the phosphorus-aluminum inorganic binder is added, which can help to improve the activity and selectivity of the catalyst.

The process of preparing a catalytic cracking catalyst of the present invention further comprises a step of spray-drying the slurry obtained from the "vigorously mixing and stiring with water". The method of spray-drying is well known to those skilled in the art, and there is no special requirement in the present disclosure.

Further, the process of the present invention may also include: the first clay-containing phosphorus-aluminum inorganic binder is prepared with the following steps: an alumina source, the first clay and water are vigorously mixed and stirred to disperse into a slurry having a solid content of 5-48 wt%; wherein the alumina source is aluminum hydroxide and/or alumina that can be peptized by an acid, relative to 10-40 parts by weight, for example, 15-40 parts by weight of the alumina source (as Al2O3), the used amount of the first clay based on the dry weight is greater than 0 part by weight and not more than 40 parts by weight; a concentrated phosphoric acid is added to the slurry under stirring according to the weight ratio of P/Al = 1-6, and the resulting mixed slurry is reacted at 50-99°C for 15-90 minutes; wherein P in the P/Al is the weight of phosphorus as the simple substance in phosphoric acid, Al is the weight of aluminum as the simple substance in the alumina source.

the alumina source can be at least one selected from ρ-alumina, x-alumina, η-alumina, γ-alumina, x-alumina, σ-alumina, θ-alumina, gibbsite, bayerite, nordshandite, diaspore, boehmite and pseudo-boehmite, the aluminum component in the first clay-containing phosphorus-aluminum inorganic binder is derived from the alumina source. The first clay may comprise one or more of kaolin, sepiolite, attapulgite, rectorite, smectite and diatomite, for example, rectorite. The concentration of the concentrated phosphoric acid can be 60-98 wt%, further for example, 75-90 wt%, the feeding rate of phosphoric acid is, for example, 0.01-0.10 kg phosphoric acid/min/kg alumina source, further for example, 0.03-0.07 kg phosphoric acid/min/kg alumina source.

In the above embodiment, the introduction of the clay into the first clay-containing phosphorus-aluminum inorganic binder not only improves the mass transfer and the heat transfer between materials during the preparation process, but also avoids the binder solidification due to the overtemperature caused by the heat release from the local instant violent reaction by uneven materials; and the bonding performance of the obtained binder is comparable to that of the phosphorus-aluminum binder prepared by the method without the introduction of clay. Moreover, the introduction of clay, especially rectorite with layered structure in the process improves the heavy oil conversion ability of the catalyst, so that the obtained catalyst has better selectivity.

The present invention also provides the cracking catalyst prepared with the above-mentioned process.

The present invention further provides a process for catalytically cracking the hydrocarbon oil. When used in the catalytic cracking process, one embodiment is that the cracking catalyst can be added to the cracking reactor alone, for example, under the catalytic cracking condition, the hydrocarbon oil is reacted by contacting the cracking catalyst of the present invention; when used in the catalytic cracking process, another embodiment is that the catalyst can be mixed with other catalytic cracking catalysts, for example, hydrocarbon oil can be reacted by contacting a catalyst mixture containing the cracking catalyst of the present invention and other catalytic cracking catalyst(s). The catalyst provided by the present invention may comprise not more than 30 wt% of the total of the above mixture, for example, 1-25 wt%, further for example, 3-15 wt%.

The cracking catalyst provided by the present invention can be used for catalytic cracking of various hydrocarbon oils. The hydrocarbon oil can be selected from various petroleum fractions such as one or more of crude oil, naphtha, cat gasoline, atmospheric residue, vacuum residue, atmospheric gas oil, vacuum gas oil, straight-run gas oil, propane light/heavy deasphalted oil, coker gas oil and coal liquefication product. The hydrocarbon oil can contain heavy metal impurities such as nickel and vanadium, as well as sulfur and nitrogen impurities. For example, the content of sulfur in the hydrocarbon oil can be as high as 3.0 wt%, the content of nitrogen can be as high as 2.0 wt%, and the content of metal impurities such as vanadium and nickel can be as high as 3000 ppm. Catalytic cracking conditions can be conventional in the art, for example, including: reaction temperature 500-800 °C, for example, 550-680 °C.

Micropore molecular sieve-based cracking auxiliary and preparation process and use

The present invention provides a catalytic cracking auxiliary, based on the dry basis weight of the catalytic cracking auxiliary, the catalytic cracking auxiliary contains based on the dry weight 5-75 wt% of phosphorus-modified ZSM-5 molecular sieve; wherein, the phosphorus-modified ZSM-5 molecular sieve has, in the 27 Al MAS-NMR, the ratio of peak area for the resonance signal having a chemical shift of 39±3ppm to peak area for the resonance signal having a chemical shift of 54ppm±3ppm of ≥ 1.

In the catalytic cracking auxiliary of the present invention, the phosphorus-modified ZSM-5 molecular sieve has, in the 27 Al MAS-NMR, the ratio of peak area for the resonance signal having a chemical shift of 39±3ppm to peak area for the resonance signal having a chemical shift of 54ppm±3ppm of ≥ 1, preferably ≥ 5, further for example, ≥ 10, still further for example, 12-25.

In the catalytic cracking auxiliary of the present invention, the phosphorus-modified ZSM-5 molecular sieve satisfies, in the surface XPS elemental analysis, n1/n2 ≤ 0.1, wherein, n1 represents the mole number of phosphorus, n2 represents the total mole number of silicon and aluminum, for example, n1/n2 ≤ 0.09, further for example, n1/n2 ≤ 0.08, still further for example, n1/n2 is 0.04-0.07; the characterization parameter indicates a decrease in the surface phosphorus species content in the molecular sieve, and it also shows that the surface phosphorus species migrate more to the bulk phase of the molecular sieve. That is to say, the value of n1/n2 describes the dispersion effect of phosphorus species on the molecular sieve surface and the degree of migration from the surface of the ZSM-5 molecular sieve into the crystal interior. The smaller the value, the lower the content of phosphorus species on the surface, the better the dispersion of phosphorus species and the higher the degree of the migration to the interior, and the better the hydrothermal stability of the molecular sieve.

In the catalytic cracking auxiliary of the present invention, after the phosphorus-modified ZSM-5 molecular sieve is hydrothermally aged at 800°C and 100% water vapor for 17 hours, in its NH3-TPD spectrum, for the desorption temperature of 200°C or higher, the proportion of the peak area for the strong acid center relative to the peak area for the total acid center ≥ 40%, reflecting the retention of strong acid centers after hydrothermal aging at 800°C and 100% water vapor for 17 hours. Thereby, the molecular sieve has a high cracking activity. For example, this proportion is ≥ 42%, further for example, ≥ 45%, and still further for example, 48%-85%.

In the catalytic cracking auxiliary of the present invention, with respect to the content of phosphorus in the phosphorus-modified ZSM-5 molecular sieve, when both phosphorus and aluminum are on a molar basis, the ratio of the two is 0.01-2, for example, 0.1-1.5; further for example, 0.2-1.5.

In the catalytic cracking auxiliary of the present invention, based on the dry basis of the catalytic cracking auxiliary, the catalytic cracking auxiliary contains 5-75 wt%, preferably 8-60 wt% of phosphorus-modified ZSM-5 molecular sieve, and can also contain 1-40 wt% of a binder and 0-65 wt% of a second clay. The binder can be inorganic oxide binders that are familiar to those skilled in the art and conventionally used as the binder component of the auxiliary or catalyst, for example, one or more of pseudo-boehmite, alumina sol, silica-alumina sol and water glass, preferably at least one of pseudo-boehmite and alumina sol. For example, the binder contains a phosphorus-aluminum inorganic binder, that is, a phosphorus-aluminum inorganic binder or a mixture of a phosphorus-aluminum inorganic binder and other inorganic binder(s).

The phosphorus-aluminum inorganic binder is a phosphorus-aluminum glue and/or a first clay-containing phosphorus-aluminum inorganic binder. Based on the dry basis of the first clay-containing phosphorus-aluminum inorganic binder, the first clay-containing phosphorus-aluminum inorganic binder contains 10-40 wt%, for example, 15-40 wt% of an aluminum component as Al2O3, 45-80 wt% of phosphorus component (as P2O5) and greater than 0 and not more than 40 wt% of a first clay on a dry basis, and the first clay-containing phosphorus-aluminum inorganic binder has a P/Al weight ratio of 1.0-6.0, a pH of 1-3.5, and a solid content of 15-60 wt%.

In an embodiment of the phosphorus-aluminum inorganic binder, based on the dry basis weight of the phosphorus-aluminum inorganic binder, the phosphorus-aluminum inorganic binder may comprise 10-40 wt%, for example, 15-40 wt% of an aluminum component as Al2O3, 45-90 wt%, for example, 45-80 wt% of a phosphorus component as P2O5 and based on the dry weight 0-40 wt% of first clay, and it has a P/Al weight ratio of 1.0-6.0, a pH value of 1-3.5, and a solid content of 15-60 wt%; for example, it comprises 10-40 wt%, for example, 15-40 wt% of an aluminum component as Al2O3, 45-90 wt%, for example, 45-80 wt% of a phosphorus component as P2O5 and based on the dry weight 1-40 wt% of first clay; preferably contains 15-35 wt% of aluminum component (as Al2O3), 50-75 wt% of phosphorus component (as P2O5) and based on the dry weight 8-35 wt% of first clay, and has a P/Al weight ratio of for example, 1.2-6.0, further for example, 2.0-5.0, a pH value of for example, 2.0-3.0. In another embodiment of the phosphorus-aluminum inorganic binder, based on the dry basis of the phosphorus-aluminum inorganic binder, the phosphorus-aluminum inorganic binder comprises 20-40 wt% of an aluminum component (as Al2O3) and 60-80 wt% of a phosphorus component (as P2O5). The first clay can be at least one selected from kaolin, sepiolite, attapulgite, rectorite, smectite and diatomite.

In the catalytic cracking auxiliary of the present invention, based on the dry basis of the catalytic cracking auxiliary, it further contains 0-65 wt%, preferably 5 wt%-55 wt% of a second clay. The second clay is also well known by those skilled in the art, and for example, selected from at least one of kaolin, sepiolite, attapulgite, rectorite, smectite, giagerite, halloysite, hydrotalcite, bentonite and diatomite.

In an embodiment of the catalytic cracking auxiliary of the present invention, based on the dry basis of the catalytic cracking auxiliary, it may comprise 20-60 wt% of a phosphorus-modified ZSM-5 molecular sieve, 5-35 wt% of a binder and 5-55 wt% of a second clay.

The present invention also provides a process of preparing the catalytic cracking auxiliary, wherein the process comprises: a phosphorus-modified ZSM-5 molecular sieve, a binder and optionally a second clay are vigorously mixed and stirred with water, and spray-dried to produce the catalytic cracking auxiliary; wherein the phosphorus-modified ZSM-5 molecular sieve is obtained by treating a HZSM-5 molecular sieve by contacting a solution of the phosphorus-containing compound, drying the treated HZSM-5 molecular sieve, hydrothermally calcining the dried HZSM-5 molecular sieve in an atmosphere condition where an external pressure is applied and water is externally added, and recovering the resulting product; the contacting is to make an aqueous solution of the phosphorus-containing compound at a temperature of 0-150°C and the HZSM-5 molecular sieve at a temperature of 0-150°C in contact (by mixing) at substantially the same temperature for at least 0.1 hours through the immersion method, or, the contacting is to vigorously mix and stir the phosphorus-containing compound, the HZSM-5 molecular sieve and water and then keep the mixture at 0-150°C for at least 0.1 hours; with respect to the atmosphere condition, its gauge pressure is 0.01-1.0MPa and it contains 1-100% water vapor.

The steps used in the preparation of phosphorus-modified ZSM-5 molecular sieve promote the migration of surface phosphorus species to the bulk phase of the ZSM-5 molecular sieve; so that phosphorus and the framework aluminum are fully coordinated, the framework aluminum is fully protected, and the molecular sieve has excellent hydrothermal stability.

In the step for preparing the phosphorus-modified ZSM-5 molecular sieve, the HZSM-5 molecular sieve is obtained by the ammonium-exchanging of a micropore ZSM-5 molecular sieve to reduce the sodium content to Na2O <0.1wt%, and have a silica-alumina ratio (the molar ratio of silicon oxide to aluminum oxide, the same as below) in the range of≥10, usually 10-200.

In the step for preparing the phosphorus-modified ZSM-5 molecular sieve, the phosphorus-containing compound is selected from an organic phosphorus compound and/or an inorganic phosphorus compound. The organic phosphorus compound is selected from trimethyl phosphate, triphenylphosphine, trimethyl phosphite, tetrabutylphosphonium bromide, tetrabutylphosphonium chloride, tetrabutylphosphonium hydroxide, triphenylethylphosphonium bromide, triphenylbutylphosphonium bromide, triphenylbenzylphosphonium bromide, hexamethylphosphoric triamide, dibenzyl diethylphosphoramidite, and 1,3-bis((triethyl-phosphaneyl)methyl)benzene, the inorganic phosphorus compound is selected from phosphoric acid, ammonium hydrogen phosphate, diammonium hydrogen phosphate, ammonium phosphate, and boron phosphate.

In the step for preparing the phosphorus-modified ZSM-5 molecular sieve, the first manner of the contacting is to make an aqueous solution of the phosphorus-containing compound at a temperature of 0-150°C and an HZSM-5 molecular sieve at a temperature of 0-150°C in contact at substantially the same temperature for at least 0.1 hours through the immersion method. For example, the contacting can be performed in the normal temperature range of 0-30 °C, or the contacting is performed for example, in a higher temperature range above 40°C, for example, 50-150°C, further for example, 70-130°C, which can produce a better result, i.e., the better dispersion of phosphorus species, and the easier migration of phosphorus into the crystal interior of the HZSM-5 molecular sieve to combine with the framework aluminum, which further improves the coordination degree of phosphorus and the framework aluminum, and finally contributes to improving the hydrothermal stability of the molecular sieve. The substantially same temperature means that the temperature difference between the temperature of the aqueous solution of the phosphorus-containing compound and the temperature of the HZSM-5 molecular sieve is within ±5°C. For example, the temperature of the aqueous solution of the phosphorus-containing compound is 80°C, and the HZSM-5 molecular sieve needs to be heated to 75-85°C.

In the step for preparing the phosphorus-modified ZSM-5 molecular sieve, the second manner of the contacting is to mix the phosphorus-containing compound, the HZSM-5 molecular sieve and water, and maintain at 0-150 °C for at least 0.1 hours. For example, after mixing, it is kept in the normal temperature range of 0-30 °C for at least 0.1 hours. For example, in order to produce a better result, i.e., the better dispersion of phosphorus species, and the easier migration of phosphorus into the crystal interior of the molecular sieve to combine with the framework aluminum, to further improve the coordination degree of phosphorus and the framework aluminum, and to finally improve the hydrothermal stability of the molecular sieve, the phosphorus-containing compound, the HZSM-5 molecular sieve and water are mixed, and then maintained at a higher temperature range above 40 °C for 0.1 hours, for example, a temperature range of 50-150 °C, further for example, a temperature range of 70-130 °C.

In the step for preparing the phosphorus-modified ZSM-5 molecular sieve, the molar ratio of the phosphorus-containing compound (as phosphorus) to the HZSM-5 molecular sieve (as aluminum) is 0.01-2; for example, the molar ratio of the two is 0.1-1.5; further for example, the molar ratio of the two is 0.2-1.5. With respect to the contacting, the weight ratio of water/molecular sieve is 0.5-1, for example, the contact time is 0.5-40 hours.

In the step for preparing the phosphorus-modified ZSM-5 molecular sieve, the hydrothermal calcining treatment is performed in an atmosphere condition where an external pressure is applied and water is externally added. The atmosphere condition is obtained by externally applying the pressure and externally applying water, preferably the gauge pressure is 0.1-0.8 MPa, further for example, the gauge pressure is 0.3-0.6 MPa, preferably the atmosphere contains 30-100% water vapor, further for example, contains 60-100% water vapor. The externally applied pressure refers to applying a certain pressure from the outside during the process of hydrothermally calcining the material. For example, it can be carried out by introducing an inert gas from the outside to maintain a certain back pressure. The amount of externally applied/added water is to meet the requirement that the atmosphere condition contains 1-100% water vapor. The step of hydrothermal calcining is performed at 200-800°C, preferably 300-500°C, further for example, 350-450°C.

In the process of preparing the catalytic cracking auxiliary, the binder contains a phosphorus-aluminum inorganic binder and other inorganic binder(s), on a dry basis, the ratio by weight of the phosphorus-modified ZSM-5 molecular sieve:the phosphorus-aluminum inorganic binder:the other inorganic binder can be (10-75) : (3-39) : (1-30), for example, (10-75) : (8-35) : (5-25); wherein the phosphorus-aluminum inorganic binder can be a phosphorus-aluminum glue and/or a first clay-containing phosphorus-aluminum inorganic binder; the other inorganic binder can comprise at least one of pseudo-boehmite, alumina sol, silica-alumina sol, and water glass. The preparation process may comprise "mixing" or "vigorously mixing and stirring (with water)" the phosphorus-modified ZSM-5 molecular sieve, the phosphorus-aluminum inorganic binder and other inorganic binder(s). No special requirement is imposed on the charging order. For example, the phosphorus-aluminum inorganic binder, other inorganic binder(s), the phosphorus-modified ZSM-5 molecular sieve, and the second clay (in case of no second clay, the relevant charging step can be omitted) can be mixed, and vigorously mixed and stirred with water. Alternatively, the second clay, the phosphorus-modified ZSM-5 molecular sieve, and other inorganic binder(s) can be vigorously mixed and stirred with water, and then the phosphorus-aluminum inorganic binder is added, which can be help to improve the activity and selectivity of the auxiliary.

In the process of preparing the catalytic cracking auxiliary, it further comprises a step of spray-drying the slurry obtained from the "vigorously mixing and stiring with water". The method of spray-drying is well known to those skilled in the art, and there is no special requirement in the present invention. Optionally, the preparation process may further comprises: the spray-dried product is subjected to a first calcining, and then washed, and optionally dried to produce the catalytic cracking auxiliary.

Herein, for the first calcining, the calcining temperature can be 300-650 °C, for example, 400-600 °C, preferably 450-550 °C, and the calcining time can be 0.5-8 hours; for the washing, one of ammonium sulfate, ammonium chloride, and ammonium nitrate can be used, the washing temperature can be 40-70 °C; the drying temperature can be 100-200 °C, for example, 100-150 °C, and the drying time can be 0.5-24h, for example, 1-12h.

In an embodiment of the process of preparing the catalytic cracking auxiliary, a binder, a second clay and water (for example, decationized water and/or deionized water) are mixed to form a slurry having a solid content of 10-50 wt%. The slurry is stirred well, adjusted with an inorganic acid such as hydrochloric acid, nitric acid, phosphoric acid or sulfuric acid to a pH of 1-4 and maintained at this pH, allowed to stand for aging at 20-80°C for 0-2 hours (such as 0.3-2 hours). Then an inorganic binder such as alumina sol and/or silica sol is added, and the mixture is stirred for 0.5-1.5 hours to form a gel. Then a molecular sieve (including the phosphorus-modified ZSM-5 molecular sieve) is added to form an auxiliary slurry having a solid content of for example, 20-45 wt%. The auxiliary slurry continued to be stirred and spray-dried to form auxiliary microspheres. Then auxiliary microspheres are subjected to a first calcination, for example, at 350-650 °C or 400-600 °C, preferably 450-550 °C for 0.5-6 hours or 0.5-2 hours, and then washed with ammonium sulfate (wherein the washing temperature can be 40-70 °C, ammonium sulfate auxiliary microspheres:water=0.2-0.8:1:5-15 (weight ratio)) to the sodium oxide content less than 0.25wt%, washed with water and filtered, and then dried.

In the process of preparing the catalytic cracking auxiliary, it may also include the first clay-containing phosphorus-aluminum inorganic binder is prepared with the following steps: an alumina source, the first clay and water are vigorously mixed and stirred to disperse into a slurry having a solid content of 5-48 wt%; wherein the alumina source is aluminum hydroxide and/or alumina that can be peptized by an acid, relative to 10-40 parts by weight, for example, 15-40 parts by weight of the alumina source (as Al2O3), the used amount of the first clay based on the dry weight is greater than 0 part by weight and not more than 40 parts by weight; a concentrated phosphoric acid is added to the slurry under stirring according to the weight ratio of P/Al = 1-6, and the resulting mixed slurry is reacted at 50-99°C for 15-90 minutes; wherein P in the P/Al is the weight of phosphorus as the simple substance in phosphoric acid, Al is the weight of aluminum as the simple substance in the alumina source. The alumina source can be at least one selected from ρ-alumina, x-alumina, η-alumina, γ-alumina, κ-alumina, σ-alumina, θ-alumina, gibbsite, bayerite, nordshandite, diaspore, boehmite and pseudo-boehmite, the aluminum component in the first clay-containing phosphorus-aluminum inorganic binder is derived from the alumina source. The first clay may comprise one or more of kaolin, sepiolite, attapulgite, rectorite, smectite and diatomite, for example, rectorite. The concentration of the concentrated phosphoric acid can be 60-98 wt%, further for example, 75-90 wt%, the feeding rate of phosphoric acid is, for example, 0.01-0.10 kg phosphoric acid/min/kg alumina source, further for example, 0.03-0.07 kg phosphoric acid/min/kg alumina source.

In the above embodiment, the introduction of the clay into the first clay-containing phosphorus-aluminum inorganic binder not only improves the mass transfer and the heat transfer between materials during the preparation process, but also avoids the binder solidification due to the overtemperature caused by the heat release from the local instant violent reaction by uneven materials; and the bonding performance of the obtained binder is comparable to that of the phosphorus-aluminum binder prepared by the method without the introduction of clay. Moreover, the introduction of clay, especially rectorite with layered structure in the process improves the heavy oil conversion ability of the catalyst composition, so that the obtained auxiliary has better selectivity.

The present invention further provides the use of the catalytic cracking auxiliary, that is, a process for catalytically cracking a hydrocarbon oil, the process comprises: reacting the hydrocarbon oil by contacting the catalytic cracking auxiliary according to the present invention under the catalytic cracking condition.

The process for catalytically cracking the hydrocarbon oil of the present invention comprises: the hydrocarbon oil is reacted by contacting a catalyst mixture containing the catalytic cracking auxiliary and a catalytic cracking catalyst under the catalytic cracking condition; in the catalyst mixture, the content of the catalytic cracking auxiliary is 0.1-30 wt%.

The catalytic cracking condition includes: the reaction temperature is 500-800°C; the hydrocarbon oil is one or more selected from crude oil, naphtha, gasoline, atmospheric residue, vacuum residue, atmospheric gas oil, vacuum gas oil, straight-run gas oil, propane light/heavy deasphalted oil, coker gas oil and coal liquefication product.

Micropore molecular sieve-based cracking catalyst and preparation process and use

The present invention also provides a catalytic cracking catalyst, which is characterized in that, based on the dry basis of the catalytic cracking catalyst, the catalytic cracking catalyst contains on the dry basis 1-25 wt% of Y zeolite, on a dry basis, 5-50 wt% of phosphorus-modified ZSM-5 molecular sieve, on a dry basis, 1-60 wt% of an inorganic binder and optionally on the dry basis 0-60 wt% of a second clay, wherein, the phosphorus-modified ZSM-5 molecular sieve has, in the 27 Al MAS-NMR, the ratio of peak area for the resonance signal having a chemical shift of 39±3ppm to peak area for the resonance signal having a chemical shift of 54ppm±3ppm of≥ 1, the inorganic binder comprises phosphorus-aluminum inorganic binder and/or other inorganic binder(s).

Said Y zeolite in the catalytic cracking catalyst (or called as "catalyst" hereinbelow) provided by the present invention for example, comprises at least one of a PSRY zeolite, a rare earth-containing PSRY zeolite, a USY zeolite, a rare earth-containing USY zeolite, a REY zeolite, a REHY zeolite and an HY zeolite.

In the catalyst of the present invention, the phosphorus-modified ZSM-5 molecular sieve has, in the 27 Al MAS-NMR, the ratio of peak area for the resonance signal having a chemical shift of 39±3ppm to peak area for the resonance signal having a chemical shift of 54ppm±3ppm of≥ 1, preferably≥ 5, further for example,>10, still further for example, 12-25.

In the catalyst of the present invention, the phosphorus-modified ZSM-5 molecular sieve satisfies, in the surface XPS elemental analysis, n1/n2 ≤ 0.1, wherein, n1 represents the mole number of phosphorus, n2 represents the total mole number of silicon and aluminum, for example, n1/n2 ≤ 0.09, further for example, n1/n2 ≤ 0.08, still further for example, n1/n2 is 0.04-0.07; the characterization parameter indicates a decrease in the surface phosphorus species content in the molecular sieve, and it also shows that the surface phosphorus species migrate more to the bulk phase of the molecular sieve. That is to say, the value of n1/n2 describes the dispersion effect of phosphorus species on the molecular sieve surface and the degree of migration from the surface of the ZSM-5 molecular sieve into the crystal interior. The smaller the value, the lower the content of phosphorus species on the surface, the better the dispersion of phosphorus species and the higher the degree of the migration to the interior, and the better the hydrothermal stability of the molecular sieve.

In the catalyst of the present invention, after the phosphorus-modified ZSM-5 molecular sieve is hydrothermally aged at 800°C and 100% water vapor for 17 hours, in its NH3-TPD spectrum, for the desorption temperature of 200°C or higher, the proportion of the peak area for the strong acid center relative to the peak area for the total acid center ≥40%, reflecting the retention of strong acid centers after hydrothermal aging at 800°C and 100% water vapor for 17 hours. Thereby, the molecular sieve has a high cracking activity. For example, this proportion is≥42%, further for example,≥45%, and still further for example, 48%-85%.

In the catalyst of the present invention, with respect to the content of phosphorus in the phosphorus-modified ZSM-5 molecular sieve, when both phosphorus and aluminum are on a molar basis, the ratio of the two is 0.01-2, for example, 0.1-1.5; further for example, 0.2-1.5.

In the catalytic cracking catalyst of the present invention, the clay is well known by those skilled in the art, and the second clay can be at least one selected from kaolin, metakaolin, diatomite, sepiolite, attapulgite, smectite and rectorite, for example, one of kaolin, metakaolin, rectorite. Based on the total weight of the catalyst, the catalyst of the present invention preferably contains 10-50 wt% of a second clay, for example, 12-28 wt% or 15-40 wt% of a second clay.

In an embodiment of the catalyst of the present invention, on a dry basis, the catalyst comprises 5-35 wt% of phosphorus-aluminum inorganic binder, 1.5-20 wt% of Y zeolite, 10-45 wt% of phosphorus-modified ZSM-5 molecular sieve, 10-50 wt% of a second clay and 5-28 wt% of other inorganic binder(s).

The present invention also provides a process of preparing the catalyst, the process comprising: Y zeolite, phosphorus-modified ZSM-5 molecular sieve and inorganic binder are vigorously mixed and stirred with water and spray-dried, and optionally calcined to produce the catalytic cracking catalyst; wherein, a second clay is optionally added during the mixing; on a dry basis, the used amount ratio by weight of the Y zeolite, the phosphorus-modified ZSM-5 molecular sieve, the inorganic binder and the second clay is (1-25):(5-50):(1-60):(0-60); the inorganic binder comprises phosphorus-aluminum inorganic binder and/or other inorganic binder(s); wherein the phosphorus-modified ZSM-5 molecular sieve is obtained by treating a HZSM-5 molecular sieve by contacting a solution of the phosphorus-containing compound, drying the treated HZSM-5 molecular sieve, hydrothermally calcining the dried HZSM-5 molecular sieve in an atmosphere condition where an external pressure is applied and water is externally added, and recovering the resulting product; the contacting is to make an aqueous solution of the phosphorus-containing compound at a temperature of 0-150°C and the HZSM-5 molecular sieve at a temperature of 0-150°C in contact (by mixing) at substantially the same temperature for at least 0.1 hours through the immersion method, or, the contacting is to vigorously mix and stir the phosphorus-containing compound, the HZSM-5 molecular sieve and water and then keep the mixture at 0-150°C for at least 0.1 hours; with respect to the atmosphere condition, its gauge pressure is 0.01-1.0MPa and it contains 1-100% water vapor.

The steps used in the preparation of phosphorus-modified ZSM-5 molecular sieve promote the migration of surface phosphorus species to the bulk phase of the ZSM-5 molecular sieve; so that phosphorus and the framework aluminum are fully coordinated, the framework aluminum is fully protected, and the molecular sieve has excellent hydrothermal stability.

In the step for preparing the phosphorus-modified ZSM-5 molecular sieve, the HZSM-5 molecular sieve is obtained by the ammonium-exchanging of a micropore ZSM-5 molecular sieve to reduce the sodium content to Na2O <0.1wt%, and have a silica-alumina ratio (the molar ratio of silicon oxide to aluminum oxide, the same as below) in the range of≥10, usually 10-200.

In the step for preparing the phosphorus-modified ZSM-5 molecular sieve, the phosphorus-containing compound is selected from organic phosphorus compounds and/or inorganic phosphorus compounds. The organic phosphorus compound is selected from trimethyl phosphate, triphenylphosphine, trimethyl phosphite, tetrabutylphosphonium bromide, tetrabutylphosphonium chloride, tetrabutylphosphonium hydroxide, triphenylethylphosphonium bromide, triphenylbutylphosphonium bromide, triphenylbenzylphosphonium bromide, hexamethylphosphoric triamide, dibenzyl diethylphosphoramidite, and 1,3-bis((triethyl-phosphaneyl)methyl)benzene, the inorganic phosphorus compound is selected from phosphoric acid, ammonium hydrogen phosphate, diammonium hydrogen phosphate, ammonium phosphate, and boron phosphate.

In the step for preparing the phosphorus-modified ZSM-5 molecular sieve, the first manner of the contacting is to make an aqueous solution of the phosphorus-containing compound at a temperature of 0-150°C and an HZSM-5 molecular sieve at a temperature of 0-150°C in contact at substantially the same temperature for at least 0.1 hours through the immersion method. For example, the contacting can be performed in the normal temperature range of 0-30°C, or the contacting is performed for example, in a higher temperature range above 40°C, for example, 50-150°C, further for example, 70-130°C, which can produce a better result, i.e., the better dispersion of phosphorus species, and the easier migration of phosphorus into the crystal interior of the HZSM-5 molecular sieve to combine with the framework aluminum, which further improves the coordination degree of phosphorus and the framework aluminum, and finally contributes to improving the hydrothermal stability of the molecular sieve. The substantially same temperature means that the temperature difference between the temperature of the aqueous solution of the phosphorus-containing compound and the temperature of the HZSM-5 molecular sieve is within±5°C. For example, the temperature of the aqueous solution of the phosphorus-containing compound is 80°C, and the HZSM-5 molecular sieve needs to be heated to 75-85°C.

In the step for preparing the phosphorus-modified ZSM-5 molecular sieve, the second manner of the contacting is to mix the phosphorus-containing compound, the HZSM-5 molecular sieve and water, and maintain at 0-150°C for at least 0.1 hours. For example, after mixing, it is kept in the normal temperature range of 0-30°C for at least 0.1 hours. For example, in order to produce a better result, i.e., the better dispersion of phosphorus species, and the easier migration of phosphorus into the crystal interior of the molecular sieve to combine with the framework aluminum, to further improve the coordination degree of phosphorus and the framework aluminum, and to finally improve the hydrothermal stability of the molecular sieve, the phosphorus-containing compound, the HZSM-5 molecular sieve and water are mixed, and then maintained at a higher temperature range above 40°C for 0.1 hours, for example, a temperature range of 50-150°C, further for example, a temperature range of 70-130°C.

In the step for preparing the phosphorus-modified ZSM-5 molecular sieve, the molar ratio of the phosphorus-containing compound (as phosphorus) to the HZSM-5 molecular sieve (as aluminum) is 0.01-2; for example, the molar ratio of the two is 0.1-1.5; further for example, the molar ratio of the two is 0.2-1.5. With respect to the contacting, the weight ratio of water/molecular sieve is 0.5-1, for example, the contact time is 0.5-40 hours.

In the step for preparing the phosphorus-modified ZSM-5 molecular sieve, the treatment of hydrothermally calcining is performed in an atmosphere condition where an external pressure is applied and water is externally added. The atmosphere condition is obtained by externally applying the pressure and externally applying water, preferably the gauge pressure is 0.1-0.8 MPa, further for example, the gauge pressure is 0.3-0.6 MPa, preferably the atmosphere contains 30-100% water vapor, further for example, contains 60-100% water vapor. The externally applied pressure refers to applying a certain pressure from the outside during the process of hydrothermally calcining the material. For example, it can be carried out by introducing an inert gas from the outside to maintain a certain back pressure. The amount of externally applied/added water is to meet the requirement that the atmosphere condition contains 1-100% water vapor. The step of hydrothermal calcining is performed at 200-800°C, preferably 300-500°C.

In the catalyst of the present invention, based on the dry basis of the catalyst, for example, it may contain based on the dry weight, 3-40 wt% of a phosphorus-aluminum inorganic binder or contain 3-40 wt% of a phosphorus-aluminum inorganic binder and 1-30 wt% of other inorganic binder(s).

The phosphorus-aluminum inorganic binder is a phosphorus-aluminum glue and/or a first clay-containing phosphorus-aluminum inorganic binder; based on the dry basis weight of the first clay-containing phosphorus-aluminum inorganic binder, the first clay-containing phosphorus-aluminum inorganic binder contains 10-40 wt%, for example, 15-40 wt% of an aluminum component as Al2O3, 45-90 wt%, for example, 45-80 wt% of a phosphorus component as P2O5 and greater than 0 and not more than 40 wt% of a first clay on a dry basis, andthe first clay-containing phosphorus-aluminum inorganic binder has a P/Al weight ratio of 1.0-6.0, a pH of 1-3.5, and a solid content of 15-60 wt%; the first clay comprises at least one of kaolin, sepiolite, attapulgite, rectorite, smectite and diatomite. The other inorganic binder comprises at least one of pseudo-boehmite, alumina sol, silica-alumina sol, and water glass. The second clay is selected from at least one of kaolin, sepiolite, attapulgite, rectorite, smectite, giagerite, halloysite, hydrotalcite, bentonite and diatomite.

The Y zeolite comprises at least one of a PSRY zeolite, a rare earth-containing PSRY zeolite, a USY zeolite, a rare earth-containing USY zeolite, a REY zeolite, a REHY zeolite and an HY zeolite.

The process of preparing a catalytic cracking catalyst further comprises: the spray-dried product is subjected to a first calcining, and then washed, and optionally dried to produce the catalyst; wherein for the first calcining, the calcining temperature is 300-650°C, the calcining time is 0.5-8h; the drying temperature is 100-200°C, the drying time is 0.5-24h.

The process of preparing a catalytic cracking catalyst may further comprise, the first clay-containing phosphorus-aluminum inorganic binder is prepared by using the following steps: an alumina source, the first clay and water are vigorously mixed and stirred to disperse into a slurry having a solid content of 5-48 wt%; wherein the alumina source is aluminum hydroxide and/or alumina that can be peptized by an acid, relative to 10-40 parts by weight, for example, 15-40 parts by weight of the alumina source (as Al2O3), the used amount of the first clay based on the dry weight is greater than 0 part by weight and not more than 40 parts by weight; a concentrated phosphoric acid is added to the slurry under stirring according to the weight ratio of P/Al = 1-6, and the resulting mixed slurry is reacted at 50-99°C for 15-90 minutes; wherein P in the P/Al is the weight of phosphorus as the simple substance in phosphoric acid, Al is the weight of aluminum as the simple substance in the alumina source.

In an embodiment of the phosphorus-aluminum inorganic binder according to the present invention, based on the dry basis weight of the phosphorus-aluminum inorganic binder, it preferably contains 15-35 wt% of aluminum component (as Al2O3), 50-75 wt% of phosphorus component (as P2O5) and based on the dry weight 8-35 wt% of first clay, and it has a P/Al weight ratio of for example, 1.2-6.0, further for example, 2.0-5.0, and a pH value of for example, 2.0-3.0. In another embodiment of the phosphorus-aluminum inorganic binder according to the present invention, based on the dry basis weight of the phosphorus-aluminum inorganic binder, the phosphorus-aluminum inorganic binder comprises 20-40 wt% of an aluminum component (as Al2O3) and 60-80 wt% of a phosphorus component (as P2O5).

The process of preparing a catalytic cracking catalyst may also include the calcined product is washed and optionally dried to produce the catalytic cracking catalyst; herein, for the calcining, the calcining temperature can be 300-650°C, for example, 400-600°C, preferably 450-550°C, and the calcining time can be 0.5-12 hours; for the washing, one of ammonium sulfate, ammonium chloride, and ammonium nitrate can be used, the washing temperature can be 40-80°C; the drying temperature can be 110-200°C, for example, 120-150°C, and the drying time can be 0.5-18h, for example, 2-12h.

In an embodiment of the preparation process provided by the present invention, an inorganic binder (for example, pseudo-boehmite, alumina sol, silica sol, silica-alumina gel or a mixture of two or more thereof) and second clay (for example, kaolin) and water (for example, decationized water and/or deionized water) can be mixed to form a slurry having a solid content of 10-50 wt%. The slurry is stirred well, adjusted with an inorganic acid such as hydrochloric acid, nitric acid, phosphoric acid or sulfuric acid to a pH of 1-4 and maintained at this pH, allowed to stand for aging at 20-80°C for 0-2 hours (such as 0.3-2 hours). Then alumina sol and/or silica sol is added, and the mixture is stirred for 0.5-1.5 hours to form a gel. Then a molecular sieve (including the phosphorus-modified ZSM-5 molecular sieve and Y zeolite) is added to form a catalyst slurry having a solid content of for example, 20-45 wt%. The catalyst slurry continued to be stirred and spray-dried to form catalyst microspheres. Then catalyst microspheres are calcined, for example, at 350-650°C or 400-600°C such as 450-550°C for 0.5-6 hours or 0.5-2 hours, and then washed with ammonium sulfate (wherein the washing temperature can be 40-70°C, ammonium sulfate:catalyst microspheres:water= 0.2-0.8: 1: 5-15 (weight ratio)) to the sodium oxide content less than 0.25wt%, washed with water and filtered, and then dried.

In another embodiment of the preparation process provided by the present invention, Y zeolite, a phosphorus-modified ZSM-5 molecular sieve, a phosphorus-aluminum inorganic binder and other inorganic binder(s), and optionally a second clay can be vigorously mixed and stirred with water, and spray-dried.

The inorganic binder comprises the phosphorus-aluminum inorganic binder and the other inorganic binder, the ratio by weight of the phosphorus-aluminum inorganic binder to the other inorganic binder can be (3-40) : (1-30), for example, (5-35) : (5-28), further for example, (10-30) : (5-25); wherein the phosphorus-aluminum inorganic binder can be a phosphorus-aluminum glue and/or a first clay-containing phosphorus-aluminum inorganic binder; the other inorganic binder can comprise at least one of pseudo-boehmite, alumina sol, silica-alumina sol, and water glass.

The process of preparing a catalytic cracking catalyst of the present invention may comprise "mixing" or "vigorously mixing and stirring (with water)" the phosphorus-modified molecular sieve, the phosphorus-aluminum inorganic binder and other inorganic binder(s). No special requirement is imposed on the charging order. For example, the phosphorus-aluminum inorganic binder, other inorganic binder(s), the molecular sieve, and the second clay (in case of no second clay, the relevant charging step can be omitted) can be mixed, and vigorously mixed and stirred with water. Alternatively, the second clay, the molecular sieve, and other inorganic binder(s) can be vigorously mixed and stirred with water, and then the phosphorus-aluminum inorganic binder is added, which can help to improve the activity and selectivity of the catalyst.

The process of preparing a catalytic cracking catalyst of the present invention may further comprise a step of spray-drying the slurry obtained from the "vigorously mixing and stiring with water". The method of spray-drying is well known to those skilled in the art, and there is no special requirement in the present disclosure.

The process of the present invention may also include: the first clay-containing phosphorus-aluminum inorganic binder is prepared with the following steps: an alumina source, the first clay and water are vigorously mixed and stirred to disperse into a slurry having a solid content of 5-48 wt%; wherein the alumina source is aluminum hydroxide and/or alumina that can be peptized by an acid, relative to 10-40 parts by weight, for example, 15-40 parts by weight of the alumina source (as Al2O3), the used amount of the first clay based on the dry weight is greater than 0 part by weight and not more than 40 parts by weight; a concentrated phosphoric acid is added to the slurry under stirring according to the weight ratio of P/Al = 1-6, and the resulting mixed slurry is reacted at 50-99°C for 15-90 minutes; wherein P in the P/Al is the weight of phosphorus as the simple substance in phosphoric acid, Al is the weight of aluminum as the simple substance in the alumina source. The alumina source can be at least one selected from ρ-alumina, x-alumina, η-alumina, γ-alumina, κ-alumina, σ-alumina, θ-alumina, gibbsite, bayerite, nordshandite, diaspore, boehmite and pseudo-boehmite, the aluminum component in the first clay-containing phosphorus-aluminum inorganic binder is derived from the alumina source. The first clay may comprise one or more of kaolin, sepiolite, attapulgite, rectorite, smectite and diatomite, for example, rectorite. The concentration of the concentrated phosphoric acid can be 60-98 wt%, further for example, 75-90 wt%, the feeding rate of phosphoric acid is, for example, 0.01-0.10 kg phosphoric acid/min/kg alumina source, further for example, 0.03-0.07 kg phosphoric acid/min/kg alumina source.

In the above embodiment, the introduction of the clay into the first clay-containing phosphorus-aluminum inorganic binder not only improves the mass transfer and the heat transfer between materials during the preparation process, but also avoids the binder solidification due to the overtemperature caused by the heat release from the local instant violent reaction by uneven materials; and the bonding performance of the obtained binder is comparable to that of the phosphorus-aluminum binder prepared by the method without the introduction of clay. Moreover, the introduction of clay, especially rectorite with layered structure in the process improves the heavy oil conversion ability of the catalyst, so that the obtained catalyst has better selectivity.

The present invention also provides the catalytic cracking catalyst prepared with the above-mentioned process.

The present invention further provides a process for catalytically cracking the hydrocarbon oil. When used in the catalytic cracking process, one embodiment is that the catalytic cracking catalyst can be added to the catalytic cracking reactor alone, for example, under the catalytic cracking condition, the hydrocarbon oil is reacted by contacting the catalytic cracking catalyst of the present invention; when used in the catalytic cracking process, another embodiment is that the catalyst can be mixed with other catalytic cracking catalysts, for example, hydrocarbon oil can be reacted by contacting a catalyst mixture containing the catalytic cracking catalyst of the present invention and other catalytic cracking catalyst(s). The catalyst provided by the present invention may comprise not more than 30 wt% of the total of the above mixture, for example, 1-25 wt%, further for example, 3-15 wt%. The catalytic cracking catalyst provided by the present invention can be used for catalytic cracking of various hydrocarbon oils. The hydrocarbon oil can be selected from various petroleum fractions such as one or more of crude oil, naphtha, cat gasoline, atmospheric residue, vacuum residue, atmospheric gas oil, vacuum gas oil, straight-run gas oil, propane light/heavy deasphalted oil, coker gas oil and coal liquefication product. The hydrocarbon oil can contain heavy metal impurities such as nickel and vanadium, as well as sulfur and nitrogen impurities. For example, the content of sulfur in the hydrocarbon oil can be as high as 3.0 wt%, the content of nitrogen can be as high as 2.0 wt%, and the content of metal impurities such as vanadium and nickel can be as high as 3000 ppm.

In the process for catalytically cracking a hydrocarbon oil according to the present invention, the catalytic cracking conditions can be conventional in the art, for example, include: reaction temperature 500-800 °C, for example, 550-680 °C. The used hydrocarbon oil can be one or more selected from crude oil, naphtha, gasoline, atmospheric residue, vacuum residue, atmospheric gas oil, vacuum gas oil, straight-run gas oil, propane light/heavy deasphalted oil, coker gas oil and coal liquefication product.

### Examples

The present invention will be further described below in conjunction with specific examples, but the present invention is not limited thereby.

X-ray diffraction (XRD) spectrum was measured on Rigaku TTR-3 powder X-ray diffractometer. Instrument parameters: copper target (tube voltage 40kV, tube current 250mA), scintillation counter, step width 0.02°, scan rate 0.4(°)/min. The ZSM-5 molecular sieve synthesized by the method of Example 1 in CN1056818C was used as the standard sample, and its crystallinity was set as 100%. The relative crystallinity was expressed in percentage as the ratio of the sum of the peak areas of five characteristic diffraction peaks at the 2θ in the range of 22.5-25.0°of the X-ray diffraction spectrum of the obtained product to that of the standard sample.

The 27 Al MAS-NMR spectrum was measured and analyzed on the Bruker AVANCE III 600 WB spectrometer, wherein the instrument parameters were as follows, the rotor diameter: 4mm, the resonance frequency: 156.4 MHz, the pulse width: 0.4 µs (corresponding to a toppled angle of 15°), the magic angle spinning frequency: 12kHz, the delay time: 1s. The characteristics of the 27 Al MAS-NMR spectrum included characteristic peak 1 at 54ppm±3ppm attributing to the four-coordinated framework aluminum species, and characteristic peak 1 at 39±3ppm attributing to the phosphorus-stabilized framework aluminum (distorted four-coordinated framework aluminum). Each peak area was calculated by the integral method after fitting the characteristic peaks by the Gauss-Lorentz function. The X-ray photoelectron spectroscopy (XPS) analysis on the surface of the molecular sieve was performed to survey the imigration status of the phosphorous compound, by using the ESCAREB 250 Type X-ray photoelectron spectrometer of Thermo Fisher-VG Company, The instrument parameters were as follows, the excitation source was a monochromatic AlKα X-ray with a power of 150 W, and the charge shift was calibrated with the C1s peak (284.8 eV) from a contaminated carbon. XPS PeakAvantage 4.15 software was used to calculate the parameters of peaks by integration after the deduction of the Shirley background.

Temperature-programmed desorption analysis (NH3-TPD) is performed by using the AutoChen II temperature-programmed adsorption instrument of Micromeritics, wherein 0.1-0.2 g of the sample is weighed and put into quartz adsorption tube, the carrier gas (high-purity He, flow rate 50mL/min) is introduced, the temperature is raised to 600°C at a rate of 20°C/min, and kept at the constant temperature for 2 hours to remove water and air adsorbed on the sample; the temperature is reduced to 100°C at a rate of 20°C/min, and kept at the constant temperature for 30 minutes; the carrier gas is switched to NH3-He mixed gas, and the temperature is kept at the constant temperature for 30 minutes to make the sample adsorb ammonia to be saturated; the NH3-He mixed gas is switched to high-purity He carrier gas, and the purging is performed for 1 hour to desorb the physically absorbed ammonia; then the temperature is raised to 600°C at a rate of 10°C/min, and the temperature-programmed desorption curve is obtained. Desorbed ammonia is detected by using a thermal conductivity cell. After converting the temperature-programmed desorption curve into a NH3 desorption rate-temperature curve, the acid center density data are obtained by the spectrum analysis of the peak shape (using the Gauss-Lorentz function).

Nitrogen adsorption and desorption curves were measured on an ASAP2420 adsorption instrument of Micromeritics Company. The samples were degassed in vacuum at 100 °C and 300 °C for 0.5h and 6h, respectively, and the N2 adsorption and desorption tests were perfromed at 77.4K temperature. The N2 adsorption-desorption isothermal curves were obtained by measuring the nitrogen adsorption and desorption capacities of purified samples under different specific pressures. The BET specific surface area was calculated by the BET formula, the micropore area was calculated by t-plot, and the pore size distribution was calculated by BJH.

A micro-reaction apparatus was used to evaluate the effect of the catalytic cracking auxiliary of the present invention on the yield of lower carbon olefins in the catalytic cracking of petroleum hydrocarbons. The prepared catalytic cracking auxiliary sample was subjected to the aging treatment at 800 °C, 100% water vapor for 17 hours on a fixed-bed aging apparatus, and evaluated on a micro-reaction apparatus. The evaluation condition included the reaction temperature of 620 °C, the regeneration temperature of 620 °C, and the catalyst-oil ratio of 3.2. The micro-reactivity was measured by the ASTMD5154-2010 standard method.

The RIPP standard method mentioned in the present invention may refer to "Analysis Method of Petrochemical Industry", edited by Yang Cuiding et al., 1990 edition.

The properties of some raw materials used in the Example were as follows:
The pseudo-boehmite was an industrial product produced by Shandong Aluminum Company, with a solid content of 60 wt%.

The alumina sol was an industrial product produced by Sinopec Catalyst Qilu Branch, and had the Al2O3 content of 21.5 wt%.

The silica sol was an industrial product produced by Sinopec Catalyst Qilu Branch, with a SiO2 content of 28.9wt% and a Na2O content of 8.9%.

The kaolin was a kaolin special for catalytic cracking catalyst produced by Suzhou Kaolin Company, with a solid content of 78% by weight.

The rectorite was produced by Hubei Zhongxiang Mingliu Rectorite Development Co., Ltd., with the quartz sand content of <3.5 wt%, the Al2O3 content of 39.0 wt%, the Na2O content of 0.03 wt%, and the solid content of 77 wt%.

SB: Aluminum hydroxide powder, produced by Condex Corporation, Germany, with an Al2O3 content of 75 wt%.

Gamma-alumina, produced by Condex Corporation, Germany, with an Al2O3 content of 95wt%. Hydrochloric acid, chemically pure, with a concentration of 36-38 wt%, produced by Beijing Chemical Plant.

PSRY molecular sieve was an industrial product produced by Sinopec Catalyst Changling Branch, with the Na2O content of < 1.5 wt%, the P2O5 content of 0.8-1.2 wt%, the unit cell constant of < 2.456nm, and the crystallinity of≥ 64%.

HRY-1 commercial molecular sieve was an industrial product produced by Sinopec Catalyst Changling Branch, with the La2O3 content of 11-13 wt%, the unit cell constant of < 2.464nm, and the crystallinity of≥ 40%.

The instruments and reagents used in the examples of the present invention are all those commonly used by those skilled in the art unless otherwise specified.

### Example 1A

Example 1A may illustrate the phosphorus-containing hierarchical ZSM-5 molecular sieve of the present invention and the process of preparing the same. Example 1A can also illustrate the phosphorus-containing hierarchical ZSM-5 molecular sieve in the cracking auxiliary of the present invention and the process of preparing the same. Example 1A can also illustrate the phosphorus-containing hierarchical ZSM-5 molecular sieve used in the cracking catalyst of the present invention and the process of preparing the same.

18.5g of diammonium hydrogen phosphate was dissolved in 60g of deionized water, stirred for 0.5h to obtain an aqueous solution containing phosphorus, and 108g of a hydrogen-type hierarchical ZSM-5 molecular sieve (provided by Qilu Branch of Sinopec Catalyst Company, the relative crystallinity was 88.6%, the silica/alumina molar ratio was 20.8, the Na2O content was 0.017wt%, the specific surface area was 373m2/g, the total pore volume was 0.256ml/g, the mesopore volume was 0.119ml/g, and the average pore diameter was 5.8nm, the same as below) was added. The immersion method was used. After immersing at 20°C for 2 hours, drying in an oven at 110°C, applying an external pressure and adding water, and treating at 450°C, 0.4 MPa, 60% water vapor for 0.5h produced a phosphorus-containing hierarchical ZSM-5 molecular sieve sample, which was denoted as PZ-1A.

### Example 1B

Example 1B illustrated the phosphorus-containing hierarchical ZSM-5 molecular sieve of the present invention and the process of preparing the same. Example 1B can also illustrate the phosphorus-containing hierarchical ZSM-5 molecular sieve in the cracking auxiliary of the present invention and the process of preparing the same. Example 1B can also illustrate the phosphorus-containing hierarchical ZSM-5 molecular sieve used in the cracking catalyst of the present invention and the process of preparing the same.

The materials, composition, drying and calcining were identical to those in Example 1A, except that diammonium hydrogen phosphate, a hydrogen-type hierarchical ZSM-5 molecular sieve and water were vigorously mixed and stirred to form a slurry. The slurry was heated to 100°C and maintained for 2h to produce a phosphorus-containing hierarchical ZSM-5 molecular sieve sample, which was denoted as PZ-1B.

### Comparative Example 1A

Comparative Example 1A illustrated the current industry-conventional method and the resulting phosphorus-containing hierarchical ZSM-5 comparative sample.

It was identical to Example 1A except that the calcining condition included normal pressure (gauge pressure: 0 MPa) and the calcining was performed in the air atmosphere at 550°C in the muffle furnace for 3h to produce a phosphorus-containing hierarchical ZSM-5 molecular sieve comparative sample, which was denoted as DZ-1A.

### Comparative Example 1B

Comparative Example 1B illustrated a phosphorus-containing hierarchical ZSM-5 molecular sieve comparative sample obtained by hydrothermally calcining at normal pressure. It was identical to Example 1A except that the calcining condition included the normal pressure (gauge pressure: 0 MPa) to produce a phosphorus-containing ZSM-5 molecular sieve comparative sample, which was denoted as DZ-1B.

The surface XPS elemental analysis data of PZ-1A, PZ-1B, DZ-1A and DZ-1B were shown in Table 1. The XRD crystallinity and the BET pore parameters before and after the hydrothermal aging treatment of PZ-1A, PZ-1B, DZ-1A, and DZ-1B at 800°C under 100% water vapor for 17 hours were shown in Table 2.

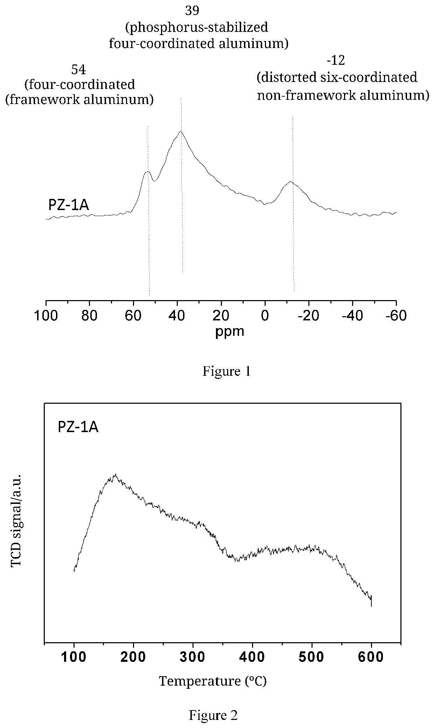

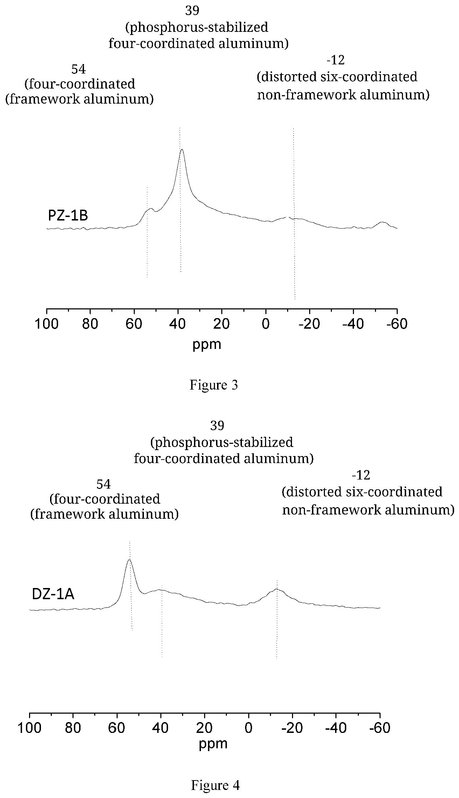

The 27Al MAS-NMR spectra of PZ-1A, PZ-1B, and DZ-1A were shown in Figure 1, Figure 3, and Figure 4, respectively. The 27Al MAS-NMR spectrum of DZ-1B had the same characteristics as that in Figure 4. It could be seen from the figures that different treatment conditions had great influence on the coordination degree of phosphorus and the framework aluminum, the chemical shift at 54 ppm was attributed to the four-coordinated framework aluminum, and the characteristic peak at 39 ppm was attributed to the four-coordinated framework aluminum which was phosphorus-stabilized and had a combination of phosphorus and aluminum. The peak area ratio data of the 27 Al MAS-NMR spectrum were shown in Table 3.

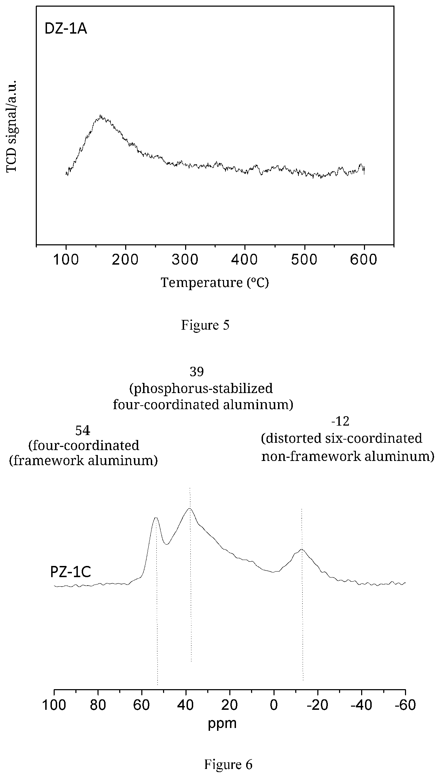

The NH3-TPD spectra of PZ-1A and DZ-1A after the hydrothermal aging treatment at 800°C under 100% water vapor for 17h were shown in Figure 2 and Figure 5 respectively, and the NH3-TPD spectra of PZ-1B and DZ-1B had the same characteristics as those in Figure 2 and Figure 5 respectively; for the desorption temperature of 200°C or higher, the data for the proportion of the peak area for the strong acid center relative to the peak area for the total acid center were shown in Table 4.

### Example 2A

Example 2A illustrated the phosphorus-containing hierarchical ZSM-5 molecular sieve of the present invention and the process of preparing the same. Example 2A can also illustrate the phosphorus-containing hierarchical ZSM-5 molecular sieve in the cracking auxiliary of the present invention and the process of preparing the same. Example 2A can also illustrate the phosphorus-containing hierarchical ZSM-5 molecular sieve used in the cracking catalyst of the present invention and the process of preparing the same.

18.5g of diammonium hydrogen phosphate was dissolved in 120g of deionized water, stirred for 0.5h to obtain an aqueous solution containing phosphorus, and 108g of a hydrogen-type hierarchical ZSM-5 molecular sieve was added. The immersion method was used. After immersing at 20°C for 2 hours, drying in an oven at 110°C, applying an external pressure and adding water, and treating at 600°C, 0.4 MPa, 50% water vapor for 2h produced a phosphorus-containing hierarchical ZSM-5 molecular sieve sample, which was denoted as PZ-2A.

### Example 2B

Example 2B illustrated the phosphorus-containing hierarchical ZSM-5 molecular sieve of the present invention and the process of preparing the same. Example 2B can also illustrate the phosphorus-containing hierarchical ZSM-5 molecular sieve in the cracking auxiliary of the present invention and the process of preparing the same. Example 2B can also illustrate the phosphorus-containing hierarchical ZSM-5 molecular sieve used in the cracking catalyst of the present invention and the process of preparing the same.

The materials, composition, drying and calcining were identical to those in Example 2A, except that diammonium hydrogen phosphate, a hydrogen-type hierarchical ZSM-5 molecular sieve and water were vigorously mixed and stirred to form a slurry. The slurry was heated to 70°C and maintained for 2h to produce a phosphorus-containing hierarchical ZSM-5 molecular sieve sample, which was denoted as PZ-2B.

### Comparative Example 2A

Comparative Example 2A illustrated the current industry-conventional method and the resulting phosphorus-containing hierarchical ZSM-5 comparative sample.

It was identical to Example 2A except that the calcining condition included normal pressure (gauge pressure: 0 MPa) and the calcining was performed in the air atmosphere at 550°C in the muffle furnace for 2h to produce a phosphorus-containing hierarchical ZSM-5 molecular sieve comparative sample, which was denoted as DZ-2A.

### Comparative Example 2B

Comparative Example 2B illustrated a phosphorus-containing hierarchical ZSM-5 molecular sieve comparative sample obtained by hydrothermally calcining at normal pressure.

It was identical to Example 2A except that the calcining condition included the normal pressure (gauge pressure: 0 MPa) to produce a phosphorus-containing ZSM-5 molecular sieve comparative sample, which was denoted as DZ-2B.

The surface XPS elemental analysis data of PZ-2A, PZ-2B, DZ-2A, and DZ-2B were shown in Table 1.

The XRD crystallinity and the BET pore parameters before and after the hydrothermal aging treatment of PZ-2A, PZ-2B, DZ-2A, and DZ-2B at 800°C under 100% water vapor for 17 hours were shown in Table 2.

The 27Al MAS-NMR spectra of PZ-2A and PZ-2B had the same characteristics as those in Figure 1 and Figure 3 respectively. The 27Al MAS-NMR spectra of DZ-2A and DZ-2B had the same characteristics as that in Figure 4. The peak area ratio data of the 27Al MAS-NMR spectrum were shown in Table 3.

The NH3-TPD spectra of PZ-2A and PZ-2B after the hydrothermal aging treatment at 800°C under 100% water vapor for 17h had the same characteristics as those in Figure 2, the NH3-TPD spectra of DZ-2A and DZ-2B had the same characteristics as that in Figure 5, for the desorption temperature of 200°C or higher, the data for the proportion of the peak area for the strong acid center relative to the peak area for the total acid center were shown in Table 4.

### Example 3A

Example 3A illustrated the phosphorus-containing hierarchical ZSM-5 molecular sieve of the present invention and the process of preparing the same. Example 3A can also illustrate the phosphorus-containing hierarchical ZSM-5 molecular sieve in the cracking auxiliary of the present invention and the process of preparing the same. Example 3A can also illustrate the phosphorus-containing hierarchical ZSM-5 molecular sieve used in the cracking catalyst of the present invention and the process of preparing the same.

11.8g of phosphoric acid was dissolved in 60g of deionized water at ordinary temperature, stirred for 2h to obtain an aqueous solution containing phosphorus, and 108g of a hydrogen-type hierarchical ZSM-5 molecular sieve was added. The immersion method was used. After immersing at 20°C for 4 hours, drying in an oven at 110°C, and treating at 430°C, 0.4 MPa, 100% water vapor for 2h produced a phosphorus-modified hierarchical ZSM-5 molecular sieve, which was denoted as PZ-3A.

### Example 3B

Example 3B illustrated the phosphorus-containing hierarchical ZSM-5 molecular sieve of the present invention and the process of preparing the same. Example 3B can also illustrate the phosphorus-containing hierarchical ZSM-5 molecular sieve in the cracking auxiliary of the present invention and the process of preparing the same. Example 3B can also illustrate the phosphorus-containing hierarchical ZSM-5 molecular sieve used in the cracking catalyst of the present invention and the process of preparing the same.

The materials, composition, drying and calcining were identical to those in Example 3A, except that the contact by mixing an aqueous solution containing phosphorus at 80°C with a hydrogen-type hierarchical ZSM-5 molecular sieve that was heated to 80°C for 4 hours produced a phosphorus-containing hierarchical ZSM-5 molecular sieve, which was denoted as PZ-3B.

### Comparative Example 3A

Comparative Example 3A illustrated the current industry-conventional method and the resulting phosphorus-containing hierarchical ZSM-5 comparative sample.

It was identical to Example 3A except that the calcining condition included normal pressure (gauge pressure: 0 MPa) and the calcining was performed in the air atmosphere at 550°C in the muffle furnace for 2h to produce a phosphorus-containing hierarchical ZSM-5 molecular sieve comparative sample, which was denoted as DZ-3A.

### Comparative Example 3B

Comparative Example 3B illustrated a phosphorus-containing hierarchical ZSM-5 molecular sieve comparative sample obtained by hydrothermally calcining at normal pressure.

It was identical to Example 3A except that the calcining condition included the normal pressure (gauge pressure: 0 MPa) to produce a phosphorus-containing ZSM-5 molecular sieve comparative sample, which was denoted as DZ-3B.

The surface XPS elemental analysis data of PZ-3A, PZ-3B, DZ-3A, and DZ-3B were shown in Table 1.

The XRD crystallinity and the BET pore parameters before and after the hydrothermal aging treatment of PZ-3A, PZ-3B, DZ-3A, and DZ-3B at 800°C under 100% water vapor for 17 hours were shown in Table 2.

The 27Al MAS-NMR spectra of PZ-3A and PZ-3B had the same characteristics as those in Figure 1 and Figure 3 respectively. The 27Al MAS-NMR spectra of DZ-3A and DZ-3B had the same characteristics as that in Figure 4. The peak area ratio data of the 27 Al MAS-NMR spectrum were shown in Table 3.

The NH3-TPD spectra of PZ-3A and PZ-3B after the hydrothermal aging treatment at 800°C under 100% water vapor for 17h had the same characteristics as those in Figure 3, the NH3-TPD spectra of DZ-3A and DZ-3B had the same characteristics as that in Figure 5, the peak area ratio data of the 27 Al MAS-NMR spectrum were shown in Table 3.

In the NH3-TPD spectra of PZ-3A, PZ-3B, DZ-3A, and DZ-3B after the hydrothermal aging treatment at 800°C under 100% water vapor for 17h, for the desorption temperature of 200°C or higher, the data for the proportion of the peak area for the strong acid center relative to the peak area for the total acid center were shown in Table 4.

### Example 4A

Example 4A illustrated the phosphorus-containing hierarchical ZSM-5 molecular sieve of the present invention and the process of preparing the same. Example 4A can also illustrate the phosphorus-containing hierarchical ZSM-5 molecular sieve in the cracking auxiliary of the present invention and the process of preparing the same. Example 4A can also illustrate the phosphorus-containing hierarchical ZSM-5 molecular sieve used in the cracking catalyst of the present invention and the process of preparing the same.

9.3g of diammonium hydrogen phosphate was dissolved in 120g of deionized water at ordinary temperature, stirred for 0.5h to obtain an aqueous solution containing phosphorus, and 108g of a hydrogen-type hierarchical ZSM-5 molecular sieve was added. The immersion method was used. After immersing at 20°C for 2 hours, drying in an oven at 110°C, and treating at 350°C, 0.2 MPa, 100% water vapor for 2h produced a phosphorus-containing hierarchical ZSM-5 molecular sieve, which was denoted as PZ-4A.

### Example 4B

Example 4B illustrated the phosphorus-containing hierarchical ZSM-5 molecular sieve of the present invention and the process of preparing the same. Example 4B can also illustrate the phosphorus-containing hierarchical ZSM-5 molecular sieve in the cracking auxiliary of the present invention and the process of preparing the same. Example 4B can also illustrate the phosphorus-containing hierarchical ZSM-5 molecular sieve used in the cracking catalyst of the present invention and the process of preparing the same.

The material and the composition were identical to those in Example 4A, except that diammonium hydrogen phosphate, a hydrogen-type hierarchical ZSM-5 molecular sieve and water were vigorously mixed and stirred to form a slurry. The slurry was heated to 70°C and maintained for 2h to produce a phosphorus-containing hierarchical ZSM-5 molecular sieve sample, which was denoted as PZ-4B.

### Comparative Example 4A

Comparative Example 4A illustrated the current industry-conventional method and the resulting phosphorus-containing hierarchical ZSM-5 comparative sample.

It was identical to Example 1A except that the calcining condition included normal pressure (gauge pressure: 0 MPa) and the calcining was performed in the air atmosphere at 550°C in the muffle furnace for 2h to produce a phosphorus-containing hierarchical ZSM-5 molecular sieve comparative sample, which was denoted as DZ-4A.

### Comparative Example 4B

Comparative Example 4B illustrated a phosphorus-containing hierarchical ZSM-5 molecular sieve comparative sample obtained by hydrothermally calcining at normal pressure.

It was identical to Example 1A except that the calcining condition included the normal pressure (gauge pressure: 0 MPa) to produce a phosphorus-containing ZSM-5 molecular sieve comparative sample, which was denoted as DZ-4B.

The surface XPS elemental analysis data of PZ-4A, PZ-4B, DZ-4A, and DZ-4B were shown in Table 1.

The XRD crystallinity and the BET pore parameters before and after the hydrothermal aging treatment of PZ-4A, PZ-4B, DZ-4A, and DZ-4B at 800°C under 100% water vapor for 17 hours were shown in Table 2.

The 27Al MAS-NMR spectra of PZ-4A and PZ-4B had the same characteristics as those in Figure 1 and Figure 3 respectively. The 27Al MAS-NMR spectra of DZ-4A and DZ-4B had the same characteristics as that in Figure 4. The peak area ratio data of the 27 Al MAS-NMR spectrum were shown in Table 3.

The NH3-TPD spectra of PZ-4A and PZ-4B after the hydrothermal aging treatment at 800°C under 100% water vapor for 17h had the same characteristics as those in Figure 2, the NH3-TPD spectra of DZ-4A and DZ-4B had the same characteristics as that in Figure 5, for the desorption temperature of 200°C or higher, the data for the proportion of the peak area for the strong acid center relative to the peak area for the total acid center were shown in Table 4.

### Example 5A

Example 5A illustrated the phosphorus-containing hierarchical ZSM-5 molecular sieve of the present invention and the process of preparing the same. Example 5A can also illustrate the phosphorus-containing hierarchical ZSM-5 molecular sieve in the cracking auxiliary of the present invention and the process of preparing the same. Example 5A can also illustrate the phosphorus-containing hierarchical ZSM-5 molecular sieve used in the cracking catalyst of the present invention and the process of preparing the same.

9.7g of trimethyl phosphate was dissolved in 90g of deionized water at 90°C, stirred for 1h to obtain an aqueous solution containing phosphorus, and 108g of a hydrogen-type hierarchical ZSM-5 molecular sieve was added. The immersion method was used. After immersing at 20°C for 8 hours, drying in an oven at 110°C, and a pressurized hydrothermal calcining treatment at 500°C, 0.6 MPa, 40% water vapor for 4h produced a phosphorus-containing hierarchical ZSM-5 molecular sieve, which was denoted as PZ-5A.

### Example 5B

Example 5B illustrated the phosphorus-containing hierarchical ZSM-5 molecular sieve of the present invention and the process of preparing the same. Example 5B can also illustrate the phosphorus-containing hierarchical ZSM-5 molecular sieve in the cracking auxiliary of the present invention and the process of preparing the same. Example 5B can also illustrate the phosphorus-containing hierarchical ZSM-5 molecular sieve used in the cracking catalyst of the present invention and the process of preparing the same.

The materials, composition, drying and calcining were identical to those in Example 5A, except that trimethyl phosphate, a hydrogen-type hierarchical ZSM-5 molecular sieve and water were vigorously mixed and stirred to form a slurry. The slurry was heated to 120°C and maintained for 8h to produce a phosphorus-modified hierarchical ZSM-5 molecular sieve sample, which was denoted as PZ-5B.

### Comparative Example 5A

Comparative Example 5A illustrated the current industry-conventional method and the resulting phosphorus-containing hierarchical ZSM-5 comparative sample.

It was identical to Example 5A except that the calcining condition included normal pressure (gauge pressure: 0 MPa) and the calcining was performed in the air atmosphere at 550°C in the muffle furnace for 2h to produce a phosphorus-containing hierarchical ZSM-5 molecular sieve comparative sample, which was denoted as DZ-5A.

### Comparative Example 5B

Comparative Example 5B illustrated a phosphorus-containing hierarchical ZSM-5 molecular sieve comparative sample obtained by hydrothermally calcining at normal pressure.

It was identical to Example 5A except that the calcining condition included the normal pressure (gauge pressure: 0 MPa) to produce a phosphorus-containing ZSM-5 molecular sieve comparative sample, which was denoted as DZ-5B.

The surface XPS elemental analysis data of PZ-5A, PZ-5B, DZ-5A, and DZ-5B were shown in Table 1.

The XRD crystallinity and the BET pore parameters before and after the hydrothermal aging treatment of PZ-5A, PZ-5B, DZ-5A, and DZ-5B at 800°C under 100% water vapor for 17 hours were shown in Table 2.

The 27Al MAS-NMR spectra of PZ-5A and PZ-5B had the same characteristics as those in Figure 1 and Figure 3 respectively. The 27Al MAS-NMR spectra of DZ-5A and DZ-5B had the same characteristics as that in Figure 4. The peak area ratio data of the 27 Al MAS-NMR spectrum were shown in Table 3.

The NH3-TPD spectra of PZ-5A and PZ-5B after the hydrothermal aging treatment at 800°C under 100% water vapor for 17h had the same characteristics as those in Figure 2, the NH3-TPD spectra of DZ-5A and DZ-5B had the same characteristics as that in Figure 5, for the desorption temperature of 200°C or higher, the data for the proportion of the peak area for the strong acid center relative to the peak area for the total acid center were shown in Table 4.

### Example 6A

Example 6A illustrated the phosphorus-containing hierarchical ZSM-5 molecular sieve of the present invention and the process of preparing the same. Example 6A can also illustrate the phosphorus-containing hierarchical ZSM-5 molecular sieve in the cracking auxiliary of the present invention and the process of preparing the same. Example 6A can also illustrate the phosphorus-containing hierarchical ZSM-5 molecular sieve used in the cracking catalyst of the present invention and the process of preparing the same.

13.2g of boron phosphate was dissolved in 100g of deionized water at 100°C, stirred for 3h to obtain an aqueous solution containing phosphorus, and 108g of a hydrogen-type hierarchical ZSM-5 molecular sieve was added. The immersion method was used. After immersing at 20°C for 2 hours, drying in an oven at 110°C, and a pressurized hydrothermal calcining treatment at 350°C, 0.4 MPa, 60% water vapor for 4h produced a phosphorus-containing hierarchical ZSM-5 molecular sieve sample, which was denoted as PZ-6A.

### Example 6B

Example 6B illustrated the phosphorus-containing hierarchical ZSM-5 molecular sieve of the present invention and the process of preparing the same. Example 6B can also illustrate the phosphorus-containing hierarchical ZSM-5 molecular sieve in the cracking auxiliary of the present invention and the process of preparing the same. Example 6B can also illustrate the phosphorus-containing hierarchical ZSM-5 molecular sieve used in the cracking catalyst of the present invention and the process of preparing the same.

The material and the composition were identical to those in Example 6A, except that boron phosphate, a hydrogen-type hierarchical ZSM-5 molecular sieve and water were vigorously mixed and stirred to form a slurry. The slurry was heated to 150°C and maintained for 2h to produce a phosphorus-containing hierarchical ZSM-5 molecular sieve, which was denoted as PZ-6B.

### Comparative Example 6A

Comparative Example 6A illustrated the current industry-conventional method and the resulting phosphorus-containing hierarchical ZSM-5 comparative sample.

It was identical to Example 6A except that the calcining condition included normal pressure (gauge pressure: 0 MPa) and the calcining was performed in the air atmosphere at 550°C in the muffle furnace for 2h to produce a phosphorus-containing hierarchical ZSM-5 molecular sieve comparative sample, which was denoted as DZ-6A.

### Comparative Example 6B

Comparative Example 6B illustrated a phosphorus-containing hierarchical ZSM-5 molecular sieve comparative sample obtained by hydrothermally calcining at normal pressure.

It was identical to Example 6A except that the calcining condition included the normal pressure (gauge pressure: 0 MPa) to produce a phosphorus-containing ZSM-5 molecular sieve comparative sample, which was denoted as DZ-6B.

The surface XPS elemental analysis data of PZ-6A, PZ-6B, DZ-6A, and DZ-6B were shown in Table 1.

The XRD crystallinity and the BET pore parameters before and after the hydrothermal aging treatment of PZ-6A, PZ-6B, DZ-6A, and DZ-6B at 800°C under 100% water vapor for 17 hours were shown in Table 2.

The 27Al MAS-NMR spectra of PZ-6A and PZ-6B had the same characteristics as those in Figure 1 and Figure 3 respectively. The 27Al MAS-NMR spectra of DZ-6A and DZ-6B had the same characteristics as that in Figure 4. The peak area ratio data of the 27 Al MAS-NMR spectrum were shown in Table 3.

The NH3-TPD spectra of PZ-6A and PZ-6B after the hydrothermal aging treatment at 800°C under 100% water vapor for 17h had the same characteristics as those in Figure 2, the NH3-TPD spectra of DZ-6A and DZ-6B had the same characteristics as that in Figure 5, for the desorption temperature of 200°C or higher, the data for the proportion of the peak area for the strong acid center relative to the peak area for the total acid center were shown in Table 4.

### Example 7A

Example 7A illustrated the phosphorus-containing hierarchical ZSM-5 molecular sieve of the present invention and the process of preparing the same. Example 7A can also illustrate the phosphorus-containing hierarchical ZSM-5 molecular sieve in the cracking auxiliary of the present invention and the process of preparing the same. Example 7A can also illustrate the phosphorus-containing hierarchical ZSM-5 molecular sieve used in the cracking catalyst of the present invention and the process of preparing the same.

16.3g of triphenylphosphine was dissolved in 80g of deionized water, stirred for 2h to obtain an aqueous solution containing phosphorus, and 108g of a hydrogen-type hierarchical ZSM-5 molecular sieve was added. The immersion method was used for modification. After immersing at 20°C for 4 hours, drying in an oven at 110°C, and a pressurized hydrothermal calcining treatment at 600°C, 1.0 MPa, 50% water vapor for 2h produced a phosphorus-containing hierarchical ZSM-5 molecular sieve sample, which was denoted as PZ-7A.

### Example 7B

Example 7B illustrated the phosphorus-containing hierarchical ZSM-5 molecular sieve of the present invention and the process of preparing the same. Example 7B can also illustrate the phosphorus-containing hierarchical ZSM-5 molecular sieve in the cracking auxiliary of the present invention and the process of preparing the same. Example 7B can also illustrate the phosphorus-containing hierarchical ZSM-5 molecular sieve used in the cracking catalyst of the present invention and the process of preparing the same.

The material and the composition were identical to those in Example 7A, except that the contact by mixing an aqueous solution containing phosphorus at 80°C with a hydrogen-type hierarchical ZSM-5 molecular sieve that was heated to 80°C for 4 hours produced a phosphorus-containing hierarchical ZSM-5 molecular sieve sample, which was denoted as PZ-7B.

### Comparative Example 7A

Comparative Example 7A illustrated the current industry-conventional method and the resulting phosphorus-containing hierarchical ZSM-5 comparative sample.

It was identical to Example 7A except that the calcining condition included normal pressure (gauge pressure: 0 MPa) and the calcining was performed in the air atmosphere at 550°C in the muffle furnace for 2h to produce a phosphorus-containing hierarchical ZSM-5 molecular sieve comparative sample, which was denoted as DZ-7A.

### Comparative Example 7B

Comparative Example 7B illustrated a phosphorus-containing hierarchical ZSM-5 molecular sieve comparative sample obtained by hydrothermally calcining at normal pressure.

It was identical to Example 7A except that the calcining condition included the normal pressure (gauge pressure: 0 MPa) to produce a phosphorus-containing ZSM-5 molecular sieve comparative sample, which was denoted as DZ-7B.

The surface XPS elemental analysis data of PZ-7A, PZ-7B, DZ-7A, and DZ-7B were shown in Table 1.

The XRD crystallinity and the BET pore parameters before and after the hydrothermal aging treatment of PZ-7A, PZ-7B, DZ-7A, and DZ-7B at 800°C under 100% water vapor for 17 hours were shown in Table 2.

The 27Al MAS-NMR spectra of PZ-7A and PZ-7B had the same characteristics as those in Figure 1 and Figure 3 respectively. The 27Al MAS-NMR spectra of DZ-7A and DZ-7B had the same characteristics as that in Figure 4. The peak area ratio data of the 27 Al MAS-NMR spectrum were shown in Table 3.

The NH3-TPD spectra of PZ-7A and PZ-7B after the hydrothermal aging treatment at 800°C under 100% water vapor for 17h had the same characteristics as those in Figure 2, the NH3-TPD spectra of DZ-7A and DZ-7B had the same characteristics as that in Figure 5, for the desorption temperature of 200°C or higher, the data for the proportion of the peak area for the strong acid center relative to the peak area for the total acid center were shown in Table 4.

Micro-reaction evaluationMicro-reaction evaluation conditions: the molecular sieve loading amount was 2g, the feedstock oil was n-tetradecane, the oil feedstock amount was 1.56g, the reaction temperature was 550°C, and the regeneration temperature was 600°C (the same as below).

PZ-1A, PZ-1B, DZ-1A, and DZ-1B were subjected to the hydrothermal aging treatment at 800 °C and 100% water vapor for 17 hours, and then evaluated for the cracking of n-tetradecane. The evaluation data were shown in Table 5.

PZ-2A, PZ-2B, DZ-2A, and DZ-2B were subjected to the hydrothermal aging treatment at 800 °C and 100% water vapor for 17 hours, and then evaluated for the cracking of n-tetradecane. The evaluation data were shown in Table 5.

PZ-3A, PZ-3B, DZ-3A, and DZ-3B were subjected to the hydrothermal aging treatment at 800 °C and 100% water vapor for 17 hours, and then evaluated for the cracking of n-tetradecane. The evaluation data were shown in Table 5.

PZ-4A, PZ-4B, DZ-4A, and DZ-4B were subjected to the hydrothermal aging treatment at 800 °C and 100% water vapor for 17 hours, and then evaluated for the cracking of n-tetradecane. The evaluation data were shown in Table 5.

PZ-5A, PZ-5B, DZ-5A, and DZ-5B were subjected to the hydrothermal aging treatment at 800 °C and 100% water vapor for 17 hours, and then evaluated for the cracking of n-tetradecane. The evaluation data were shown in Table 5.

PZ-6A, PZ-6B, DZ-6A, and DZ-6B were subjected to the hydrothermal aging treatment at 800 °C and 100% water vapor for 17 hours, and then evaluated for the cracking of n-tetradecane. The evaluation data were shown in Table 5.

PZ-7A, PZ-7B, DZ-7A, and DZ-7B were subjected to the hydrothermal aging treatment at 800 °C and 100% water vapor for 17 hours, and then evaluated for the cracking of n-tetradecane. The evaluation data were shown in Table 5.

It could be seen from Table 2 that after the hydrothermal aging treatment at 800°C and 100% water vapor for 17h, the phosphorus-containing hierarchical ZSM-5 molecular sieves of the present invention still had higher crystallinity retention. The crystallinity retention of the present invention was remarkably higher than that of the comparative samples. The crystallization retention could be increased by as high as 6%, 9%, 11%, 15%, 14%, 8% and 12%, indicating that the hydrothermal stability was significantly improved.

**Table 1**

| Sample name | Elemental molar composition | | | n1/n2 | Sample name | Elemental molar composition | | | n1/n2 |
|---|---|---|---|---|---|---|---|---|---|
| | Si | Al | P | | | Si | Al | P | |
| DZ-1A | 21.05 | 1.92 | 3.35 | 0.15 | PZ-1A | 20.68 | 1.76 | 1.75 | 0.08 |
| DZ-1B | 20.81 | 1.87 | 3.12 | 0.14 | PZ-1B | 20.94 | 1.72 | 1.64 | 0.07 |
| DZ-2A | 20.25 | 1.61 | 3.27 | 0.15 | PZ-2A | 20.35 | 1.69 | 1.64 | 0.07 |
| DZ-2B | 20.14 | 1.57 | 2.89 | 0.13 | PZ-2B | 20.42 | 1.73 | 1.56 | 0.06 |
| DZ-3A | 21.02 | 1.72 | 3.03 | 0.13 | PZ-3A | 20.54 | 1.84 | 1.35 | 0.06 |
| DZ-3B | 20.15 | 1.81 | 2.72 | 0.12 | PZ-3B | 20.72 | 1.93 | 1.23 | 0.05 |
| DZ-4A | 20.35 | 1.64 | 2.25 | 0.1 | PZ-4A | 20.61 | 1.78 | 0.98 | 0.04 |
| DZ-4B | 20.56 | 1.71 | 2.21 | 0.1 | PZ-4B | 20.86 | 1.81 | 0.51 | 0.02 |
| DZ-5A | 21.24 | 1.74 | 2.29 | 0.1 | PZ-5A | 20.85 | 1.8 | 1.16 | 0.05 |
| DZ-5B | 20.65 | 1.78 | 2.15 | 0.1 | PZ-5B | 21.04 | 1.84 | 0.91 | 0.04 |
| DZ-6A | 20.65 | 1.74 | 2.54 | 0.11 | PZ-6A | 20.92 | 1.82 | 1.25 | 0.05 |
| DZ-6B | 20.86 | 1.79 | 2.25 | 0.1 | PZ-6B | 21.01 | 1.78 | 0.87 | 0.04 |
| DZ-7A | 20.65 | 1.74 | 2.35 | 0.1 | PZ-7A | 21.02 | 1.87 | 1.69 | 0.07 |
| DZ-7B | 20.67 | 1.72 | 2.21 | 0.1 | PZ-7B | 20.78 | 1.75 | 1.02 | 0.05 |

**Table 2**

| Sample | Timing | Crystallinity % | Crystallinity retention | S_{BET} | S_{M} | S_{Z} | Vₚₒᵣₑ | V_{micro} | Vₘₑₛₒ |
|---|---|---|---|---|---|---|---|---|---|
| ZSM-5 | / | 88.6 | / | 373 | 75 | 298 | 0.256 | 0.137 | 0.119 |
| PZ-1A | Before aging | 82.3 | 77% | 342 | 57 | 285 | 0.231 | 0.131 | 0.1 |
| PZ-1A | After aging | 63.3 | 77% | 287 | 35 | 252 | 0.203 | 0.129 | 0.074 |
| DZ-1A | Before aging | 69.5 | 72% | 281 | 25 | 256 | 0.224 | 0.134 | 0.09 |
| DZ-1A | After aging | 50.1 | 72% | 256 | 65 | 191 | 0.237 | 0.132 | 0.105 |
| PZ-1B | Before aging | 87.3 | 78% | 359 | 72 | 287 | 0.245 | 0.133 | 0.112 |
| PZ-1B | After aging | 67.8 | 78% | 296 | 27 | 269 | 0.21 | 0.135 | 0.075 |
| DZ-1B | Before aging | 70.3 | 76% | 289 | 28 | 261 | 0.23 | 0.137 | 0.093 |
| DZ-1B | After aging | 53.7 | 76% | 272 | 69 | 203 | 0.243 | 0.135 | 0.108 |
| PZ-2A | Before aging | 75.2 | 80% | 336 | 52 | 283 | 0.224 | 0.13 | 0.094 |
| PZ-2A | After aging | 60.1 | 80% | 292 | 40 | 252 | 0.207 | 0.127 | 0.08 |
| DZ-2A | Before aging | 67.4 | 71% | 270 | 32 | 238 | 0.226 | 0.132 | 0.084 |
| DZ-2A | After aging | 47.8 | 71% | 251 | 60 | 191 | 0.212 | 0.121 | 0.091 |
| PZ-2B | Before aging | 81.7 | 83% | 351 | 68 | 283 | 0.242 | 0.134 | 0.108 |
| PZ-2B | After aging | 67.9 | 83% | 305 | 34 | 271 | 0.213 | 0.136 | 0.077 |
| DZ-2B | Before aging | 71.4 | 76% | 294 | 32 | 262 | 0.226 | 0.131 | 0.095 |
| DZ-2B | After aging | 54.2 | 76% | 281 | 72 | 209 | 0.232 | 0.13 | 0.102 |
| PZ-3A | Before aging | 81.2 | 81% | 314 | 71 | 243 | 0.227 | 0.127 | 0.1 |
| PZ-3A | After aging | 65.8 | 81% | 291 | 56 | 235 | 0.232 | 0.13 | 0.102 |
| DZ-3A | Before aging | 73.6 | 72% | 262 | 41 | 221 | 0.223 | 0.13 | 0.093 |
| DZ-3A | After aging | 53 | 72% | 257 | 65 | 192 | 0.215 | 0.12 | 0.095 |
| PZ-3B | Before aging | 82.1 | 83% | 321 | 69 | 252 | 0.231 | 0.13 | 0.101 |
| PZ-3B | After aging | 68.3 | 83% | 302 | 43 | 259 | 0.249 | 0.135 | 0.114 |
| DZ-3B | Before aging | 72.1 | 74% | 285 | 34 | 251 | 0.223 | 0.126 | 0.107 |
| DZ-3B | After aging | 53.4 | 74% | 282 | 63 | 219 | 0.236 | 0.132 | 0.104 |
| PZ-4A | Before aging | 77.4 | 84% | 326 | 64 | 262 | 0.229 | 0.132 | 0.087 |
| PZ-4A | After aging | 65 | 84% | 308 | 32 | 276 | 0.241 | 0.138 | 0.103 |
| DZ-4A | Before aging | 70.4 | 78% | 319 | 57 | 262 | 0.217 | 0.129 | 0.088 |
| DZ-4A | After aging | 54.9 | 78% | 289 | 43 | 245 | 0.228 | 0.123 | 0.105 |
| PZ-4B | Before aging | 75.1 | 93% | 335 | 60 | 275 | 0.239 | 0.134 | 0.105 |
| PZ-4B | After aging | 69.6 | 93% | 318 | 27 | 291 | 0.256 | 0.145 | 0.111 |
| DZ-4B | Before aging | 71 | 80% | 320 | 54 | 266 | 0.223 | 0.13 | 0.093 |
| DZ-4B | After aging | 56.8 | 80% | 296 | 56 | 240 | 0.231 | 0.127 | 0.104 |
| PZ-5A | Before aging | 69.6 | 82% | 311 | 69 | 242 | 0.216 | 0.125 | 0.091 |
| PZ-5A | After aging | 57.1 | 82% | 307 | 42 | 265 | 0.208 | 0.13 | 0.078 |
| DZ-5A | Before aging | 65.4 | 74% | 289 | 54 | 235 | 0.205 | 0.127 | 0.078 |
| DZ-5A | After aging | 48.4 | 74% | 292 | 37 | 245 | 0.202 | 0.128 | 0.074 |
| PZ-5B | Before aging | 70.6 | 88% | 319 | 63 | 256 | 0.223 | 0.116 | 0.107 |
| PZ-5B | After aging | 62.1 | 88% | 296 | 24 | 275 | 0.213 | 0.132 | 0.081 |
| DZ-5B | Before aging | 66.9 | 76% | 296 | 61 | 235 | 0.211 | 0.13 | 0.081 |
| DZ-5B | After aging | 50.8 | 76% | 298 | 32 | 266 | 0.207 | 0.131 | 0.076 |
| PZ-6A | Before aging | 76.6 | 79% | 339 | 56 | 283 | 0.237 | 0.132 | 0.105 |
| PZ-6A | After aging | 60.5 | 79% | 297 | 30 | 267 | 0.201 | 0.131 | 0.07 |
| DZ-6A | Before aging | 70.1 | 72% | 316 | 58 | 258 | 0.222 | 0.128 | 0.094 |
| DZ-6A | After aging | 50.5 | 72% | 307 | 43 | 264 | 0.195 | 0.129 | 0.074 |
| PZ-6B | Before aging | 79.1 | 80% | 353 | 61 | 292 | 0.241 | 0.134 | 0.107 |
| PZ-6B | After aging | 63.4 | 80% | 301 | 32 | 269 | 0.203 | 0.135 | 0.068 |
| DZ-6B | Before aging | 72.1 | 74% | 324 | 61 | 263 | 0.231 | 0.13 | 0.101 |
| DZ-6B | After aging | 53.4 | 74% | 311 | 40 | 271 | 0.2 | 0.13 | 0.07 |
| PZ-7A | Before aging | 70.4 | 79% | 324 | 53 | 271 | 0.228 | 0.124 | 0.104 |
| PZ-7A | After aging | 55.6 | 79% | 304 | 21 | 283 | 0.212 | 0.136 | 0.076 |
| DZ-7A | Before aging | 65.8 | 71% | 283 | 29 | 254 | 0.194 | 0.128 | 0.066 |
| DZ-7A | After aging | 46.7 | 71% | 282 | 57 | 225 | 0.2 | 0.103 | 0.097 |
| PZ-7B | Before aging | 72.3 | 83% | 311 | 53 | 258 | 0.235 | 0.132 | 0.103 |
| PZ-7B | After aging | 60.1 | 83% | 282 | 28 | 254 | 0.202 | 0.117 | 0.085 |
| DZ-7B | Before aging | 66.9 | 73% | 322 | 63 | 259 | 0.229 | 0.119 | 0.11 |
| DZ-7B | After aging | 48,8 | 73% | 302 | 80 | 222 | 0.255 | 0.101 | 0.154 |

**Table 3**

| Sample name | Proportion of characteristic peak area relative to total peak area | | Ratio of peak 2 area to peak 1 area |
|---|---|---|---|
| | Peak 1 (54±3ppm) | Peak 2 (39±3ppm) | |
| PZ-1A | 22% | 50% | 2.27 |
| DZ-1A | 62% | 15% | 0.24 |
| PZ-1B | 15% | 75% | 5 |
| DZ-1B | 55% | 18% | 0.33 |
| PZ-2A | 33% | 57% | 1.73 |
| DZ-2A | 57% | 19% | 0.33 |
| PZ-2B | 12% | 79% | 6.58 |
| DZ-2B | 62% | 21% | 0.34 |
| PZ-3A | 25% | 65% | 2.6 |
| DZ-3A | 50% | 28% | 0.56 |
| PZ-3B | 10% | 83% | 8.3 |
| DZ-3B | 46% | 34% | 0.74 |
| PZ-4A | 18% | 74% | 4.11 |
| DZ-4A | 42% | 34% | 0.81 |
| PZ-4B | 5% | 92% | 18.4 |
| DZ-4B | 40% | 39% | 0.98 |
| PZ-5A | 20% | 69% | 3.45 |
| DZ-5A | 45% | 38% | 0.84 |
| PZ-5B | 6% | 89% | 14.83 |
| DZ-5B | 40% | 36% | 0.9 |
| PZ-6A | 24% | 63% | 2.63 |
| DZ-6A | 48% | 32% | 0.67 |
| PZ-6B | 8% | 85% | 10.63 |
| DZ-6B | 43% | 33% | 0.77 |
| PZ-7A | 29% | 57% | 1.97 |
| DZ-7A | 53% | 30% | 0.57 |
| PZ-7B | 15% | 72% | 4.8 |
| DZ-7B | 48% | 35% | 0.73 |

**Table 4**

| Sample name | The proportion of the peak area for the strong acid center relative to the peak area for the total acid center | Sample name | The proportion of the peak area for the strong acid center relative to the peak area for the total acid center |
|---|---|---|---|
| DZ-1A | 16% | PZ-1A | 45% |
| DZ-1B | 24% | PZ-1B | 52% |
| DZ-2A | 25% | PZ-2A | 49% |
| DZ-2B | 30% | PZ-2B | 56% |
| DZ-3A | 28% | PZ-3A | 54% |
| DZ-3B | 34% | PZ-3B | 59% |
| DZ-4A | 32% | PZ-4A | 56% |
| DZ-4B | 38% | PZ-4B | 64% |
| DZ-5A | 36% | PZ-5A | 53% |
| DZ-5B | 39% | PZ-5B | 58% |
| DZ-6A | 36% | PZ-6A | 52% |
| DZ-6B | 40% | PZ-6B | 58% |
| DZ-7A | 35% | PZ-7A | 51% |
| DZ-7B | 40% | PZ-7B | 60% |

**Table 5**

| | Material balance/m% | | | | Main products in the cracking gas, m% | | | Conversion/m% |
|---|---|---|---|---|---|---|---|---|
| | Dry gas | Liquefied gas | Gasoline | Diesel | Ethylene | Propylene | Total butylene | |
| PZ-1A | 4.2 | 45.5 | 18.4 | 26.1 | 3.4 | 18.2 | 13.1 | 72.1 |
| DZ-1A | 5.1 | 32.1 | 31.8 | 28 | 3.2 | 12 | 5.6 | 64.3 |
| PZ-1B | 4 | 44.4 | 20 | 25.1 | 3.3 | 16 | 13.9 | 73.5 |
| DZ-1B | 3.6 | 32 | 34.9 | 23.7 | 3 | 13.4 | 6.6 | 66.2 |
| PZ-2A | 4.2 | 36.4 | 27 | 26.2 | 3.2 | 15.5 | 7.8 | 73 |
| DZ-2A | 5 | 31.6 | 32.8 | 25.81 | 3.1 | 11.5 | 5.8 | 65 |
| PZ-2B | 5.2 | 41.3 | 24 | 23.3 | 4.1 | 16 | 9.2 | 75.8 |
| DZ-2B | 3.6 | 32.5 | 23.2 | 34.5 | 2.7 | 13.8 | 7.6 | 66.4 |
| PZ-3A | 4.8 | 39.5 | 29.3 | 19.4 | 3.8 | 15 | 9.4 | 79.2 |
| DZ-3A | 3.6 | 30.4 | 35.9 | 26.6 | 2.8 | 13 | 6.2 | 65.9 |
| PZ-3B | 5.5 | 51 | 25.7 | 11.1 | 4.6 | 17.5 | 13.5 | 87 |
| DZ-3B | 4.8 | 31.6 | 33.2 | 27.6 | 3.3 | 12.5 | 6.5 | 66.8 |
| PZ-4A | 4.8 | 51.1 | 23.8 | 14.3 | 3.95 | 17.5 | 15.2 | 83.7 |
| DZ-4A | 4.9 | 31.9 | 40.8 | 16.3 | 3.9 | 13.5 | 5.4 | 73.1 |
| PZ-4B | 5.8 | 49.7 | 32.2 | 5.4 | 4.7 | 17.1 | 12.6 | 93.4 |
| DZ-4B | 4.9 | 34 | 31.7 | 25.4 | 3.4 | 13 | 6.7 | 74 |
| PZ-5A | 4.7 | 42.5 | 31.8 | 5.1 | 3.9 | 15.4 | 10.1 | 78.8 |
| DZ-5A | 4.9 | 32.1 | 31 | 30 | 3 | 11.6 | 5 | 71.9 |
| PZ-5B | 5.5 | 46.7 | 35.8 | 6.1 | 4.6 | 16.2 | 11.2 | 84.8 |
| DZ-5B | 5.3 | 39.1 | 28.7 | 25 | 3.9 | 14.4 | 9.1 | 73.5 |
| PZ-6A | 5 | 50.3 | 19.2 | 19.3 | 4 | 16.4 | 12.6 | 79.3 |
| DZ-6A | 4.7 | 35.4 | 27.3 | 27.9 | 3.6 | 15.1 | 7 | 73.3 |
| PZ-6B | 5.2 | 52.5 | 28.4 | 7.5 | 4.5 | 16.6 | 13.3 | 83.9 |
| DZ-6B | 4.1 | 36.2 | 27 | 29 | 3.5 | 14.2 | 11.5 | 74.1 |
| PZ-7A | 4.7 | 42.5 | 31.8 | 5.1 | 3.9 | 16.4 | 10.1 | 81.8 |
| DZ-7A | 4.4 | 38.3 | 29.7 | 21.9 | 3.2 | 13.1 | 9.2 | 70.4 |
| PZ-7B | 4.8 | 48.6 | 29.7 | 9.9 | 4.2 | 16.9 | 13.1 | 85.4 |
| DZ-7B | 6.3 | 39.6 | 31.9 | 20.3 | 4.3 | 13.5 | 8.8 | 71.3 |

### Example 1C

Example 1C illustrated the phosphorus-modified ZSM-5 molecular sieve of the present invention and the process of preparing the same. Example 1C illustrated the phosphorus-modified ZSM-5 molecular sieve used in the catalytic cracking auxiliary of the present invention. Example 1C illustrated the phosphorus-modified ZSM-5 molecular sieve used in the catalyst of the present invention.

16.2g of diammonium hydrogen phosphate (Tianjin Guangfu Technology Development Co., Ltd, analytically pure, the same as below) was dissolved in 60g of deionized water, stirred for 0.5h to obtain an aqueous solution containing phosphorus, and 113g of an HZSM-5 molecular sieve (provided by Qilu Branch of Sinopec Catalyst Company, the relative crystallinity was 91.1%, the silica/alumina molar ratio was 24.1, the Na2O content was 0.039wt%, the specific surface area was 353m2/g, the total pore volume was 0.177ml/g, the same as below) was added. The immersion method was used. After immersing at 20°C for 2 hours, drying in an oven at 110°C, applying an external pressure and adding water, and treating at 500°C, 0.5 MPa, 50% water vapor for 0.5h produced a phosphorus-modified ZSM-5 molecular sieve sample, which was denoted as PZ-1C.

### Example 1D

Example 1D illustrated the phosphorus-modified ZSM-5 molecular sieve of the present invention and the process of preparing the same. Example 1D illustrated the phosphorus-modified ZSM-5 molecular sieve used in the catalytic cracking auxiliary of the present invention. Example 1D illustrated the phosphorus-modified ZSM-5 molecular sieve used in the catalyst of the present invention.

The materials, composition, drying and calcining were identical to those in Example 1C, except that diammonium hydrogen phosphate, an HZSM-5 molecular sieve and water were vigorously mixed and stirred to form a slurry. The slurry was heated to 100°C and maintained for 2h to produce a phosphorus-modified ZSM-5 molecular sieve sample, which was denoted as PZ-1D.

### Comparative Example 1C

Comparative Example 1C illustrated the current industry-conventional method and the resulting phosphorus-modified ZSM-5 molecular sieve comparative sample.

It was identical to Example 1C except that the calcining condition included normal pressure (gauge pressure: 0 MPa) and the calcining was performed in the air atmosphere at 550°C in the muffle furnace to produce a phosphorus-modified ZSM-5 molecular sieve comparative sample, which was denoted as DZ-1C.

### Comparative Example 1D

Comparative Example 1D illustrated a phosphorus-modified ZSM-5 molecular sieve comparative sample obtained by hydrothermally calcining at normal pressure.

It was identical to Example 1C except that the calcining condition included the normal pressure (gauge pressure: 0 MPa) to produce a phosphorus-modified ZSM-5 molecular sieve comparative sample, which was denoted as DZ-1D.

The XRD crystallinity data before and after the hydrothermal aging treatment of PZ-1C, PZ-1D, DZ-1C, and DZ-1D at 800°C under 100% water vapor for 17 hours were shown in Table 6.

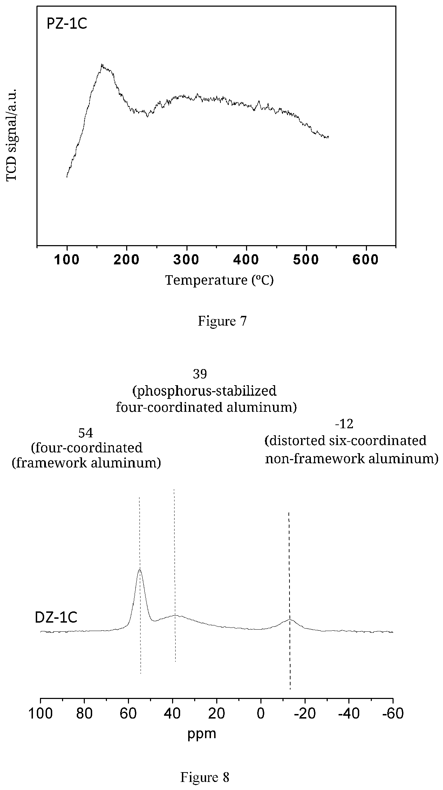

The 27Al MAS-NMR spectra of PZ-1C and DZ-1C were shown in Figure 6 and Figure 8, respectively.

The 27Al MAS-NMR spectra of PZ-1D and DZ-1D were shown in Figure 6 and Figure 8, respectively.

It could be seen from the figures that the chemical shift at 54 ppm was attributed to the four-coordinated framework aluminum, and the chemical shift at 39 ppm was attributed to the four-coordinated framework aluminum which had a combination of phosphorus and aluminum (phosphorus-stabilized framework aluminum). The peak area ratio data of the 27A1 MAS-NMR spectrum were shown in Table 7.

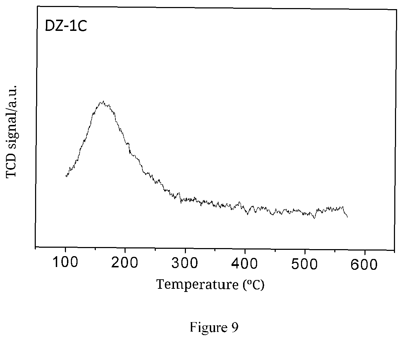

The surface XPS elemental analysis data of PZ-1C, PZ-1D, DZ-1C, and DZ-1D were shown in Table 8. The NH3-TPD spectrum of PZ-1C after the hydrothermal aging treatment at 800°C under 100% water vapor for 17h was shown in Figure 7. The NH3-TPD spectrum of comparative sample DZ-1C after the hydrothermal aging treatment at 800°C under 100% water vapor for 17h was shown in Figure 9. In the NH3-TPD spectra of PZ-1C, PZ-1D, DZ-1C, and DZ-1D, for the desorption temperature of 200°C or higher, the data for the proportion of the peak area for the strong acid center relative to the peak area for the total acid center were shown in Table 9.

### Example 2C

Example 2C illustrated the phosphorus-modified ZSM-5 molecular sieve of the present invention and the process of preparing the same. Example 2C illustrated the phosphorus-modified ZSM-5 molecular sieve used in the catalytic cracking auxiliary of the present invention. Example 2C illustrated the phosphorus-modified ZSM-5 molecular sieve used in the catalyst of the present invention.

16.2g of diammonium hydrogen phosphate was dissolved in 120g of deionized water at 50°C, stirred for 0.5h to obtain an aqueous solution containing phosphorus, and 113g of an HZSM-5 molecular sieve was added. The immersion method was used for modification. After immersing at 20°C for 2 hours, drying in an oven at 110°C, applying an external pressure and adding water, and a pressurized hydrothermal calcining treatment at 600°C, 0.5 MPa, 30% water vapor for 2h produced a phosphorus-modified ZSM-5 molecular sieve sample, which was denoted as PZ-2C.

### Example 2D

Example 2D illustrated the phosphorus-modified ZSM-5 molecular sieve of the present invention and the process of preparing the same. Example 2D illustrated the phosphorus-modified ZSM-5 molecular sieve used in the catalytic cracking auxiliary of the present invention. Example 2D illustrated the phosphorus-modified ZSM-5 molecular sieve used in the catalyst of the present invention.

The materials, composition, drying and calcining were identical to those in Example 2C, except that diammonium hydrogen phosphate, an HZSM-5 molecular sieve and water were vigorously mixed and stirred to form a slurry. The slurry was heated to 70°C and maintained for 2h to produce a phosphorus-modified ZSM-5 molecular sieve sample, which was denoted as PZ-2D.

### Comparative Example 2C

Comparative Example 2C illustrated the current industry-conventional method and the resulting phosphorus-modified ZSM-5 comparative sample.

It was identical to Example 2C except that the calcining condition included normal pressure (gauge pressure: 0 MPa) and the calcining was performed in the air atmosphere at 550°C in the muffle furnace to produce a phosphorus-modified ZSM-5 molecular sieve comparative sample, which was denoted as DZ-2C.

### Comparative Example 2D

Comparative Example 2D illustrated the phosphorus-modified ZSM-5 molecular sieve comparative sample obtained by hydrothermally calcining at normal pressure.

It was identical to Example 2C except that the calcining condition included the normal pressure (gauge pressure: 0 MPa) to produce a phosphorus-modified ZSM-5 molecular sieve comparative sample, which was denoted as DZ-2D.

The XRD crystallinity data before and after the hydrothermal aging treatment of PZ-2C, PZ-2D, DZ-2C, and DZ-2D at 800°C under 100% water vapor for 17 hours were shown in Table 6.

The 27Al MAS-NMR spectra of PZ-2C and PZ-2D had the same characteristics as that in Figure 6 respectively, and the 27A1 MAS-NMR spectra of DZ-2C and DZ-2D had the same characteristics as that in Figure 8 respectively. The peak area ratio data of the 27A1 MAS-NMR spectrum were shown in Table 7.

The surface XPS elemental analysis data of PZ-2C, PZ-2D, DZ-2C, and DZ-2D were shown in Table 8. In the NH3-TPD spectra, for the desorption temperature of 200°C or higher, the data for the proportion of the peak area for the strong acid center relative to the peak area for the total acid center were shown in Table 9.

### Example 3C

Example 3C illustrated the phosphorus-modified ZSM-5 molecular sieve of the present invention and the process of preparing the same. Example 3C illustrated the phosphorus-modified ZSM-5 molecular sieve used in the catalytic cracking auxiliary of the present invention. Example 3C illustrated the phosphorus-modified ZSM-5 molecular sieve used in the catalyst of the present invention.

10.4g of phosphoric acid was dissolved in 60g of deionized water at ordinary temperature, stirred for 2h to obtain an aqueous solution containing phosphorus, and 113g of an HZSM-5 molecular sieve was added. The immersion method was used for modification. After immersing at 20°C for 4 hours, drying in an oven at 110°C, applying an external pressure and adding water, and a pressurized hydrothermal calcining treatment at 400°C, 0.3 MPa, 100% water vapor for 2h produced a phosphorus-modified ZSM-5 molecular sieve, which was denoted as PZ-3C.

### Example 3D

Example 3D illustrated the phosphorus-modified ZSM-5 molecular sieve of the present invention and the process of preparing the same. Example 3D illustrated the phosphorus-modified ZSM-5 molecular sieve used in the catalytic cracking auxiliary of the present invention. Example 3D illustrated the phosphorus-modified ZSM-5 molecular sieve used in the catalyst of the present invention.

The materials, composition, drying and calcining were identical to those in Example 3C, except that the contact by mixing an aqueous solution of the phosphorus-containing compound at 80°C with an HZSM-5 molecular sieve that was heated to 80°C for 4 hours produced a phosphorus-modified ZSM-5 molecular sieve sample, which was denoted as PZ-3D.

### Comparative Example 3C

Comparative Example 3C illustrated the current industry-conventional method and the resulting phosphorus-modified ZSM-5 comparative sample.

It was identical to Example 3C except that the calcining condition included normal pressure (gauge pressure: 0 MPa) and the calcining was performed in the air atmosphere at 550°C in the muffle furnace to produce a phosphorus-modified ZSM-5 molecular sieve comparative sample, which was denoted as DZ-3C.

### Comparative Example 3D

Comparative Example 3D illustrated the phosphorus-modified ZSM-5 molecular sieve comparative sample obtained by hydrothermally calcining at normal pressure.

It was identical to Example 3C except that the calcining condition included the normal pressure (gauge pressure: 0 MPa) to produce a phosphorus-modified ZSM-5 molecular sieve comparative sample, which was denoted as DZ-3D.

The XRD crystallinity data before and after the hydrothermal aging treatment of PZ-3C, PZ-3D, DZ-3C, and DZ-3D at 800°C under 100% water vapor for 17 hours were shown in Table 6.

The 27Al MAS-NMR spectra of PZ-3C and PZ-3D had the same characteristics as that in Figure 6 respectively, and the 27A1 MAS-NMR spectra of DZ-3C and DZ-3D had the same characteristics as that in Figure 8. The peak area ratio data of the 27A1 MAS-NMR spectrum were shown in Table 7. The surface XPS elemental analysis data of PZ-3C, PZ-3D, DZ-3C, and DZ-3D were shown in Table 8. In the NH3-TPD spectra, for the desorption temperature of 200°C or higher, the data for the proportion of the peak area for the strong acid center relative to the peak area for the total acid center were shown in Table 9.

### Example 4C

Example 4C illustrated the phosphorus-modified ZSM-5 molecular sieve of the present invention and the process of preparing the same. Example 4C illustrated the phosphorus-modified ZSM-5 molecular sieve used in the catalytic cracking auxiliary of the present invention. Example 4C illustrated the phosphorus-modified ZSM-5 molecular sieve used in the catalyst of the present invention.

8.1g of diammonium hydrogen phosphate was dissolved in 120g of deionized water at ordinary temperature, stirred for 0.5h to obtain an aqueous solution containing phosphorus, and 113g of an HZSM-5 molecular sieve was added. The immersion method was used for modification. After immersing at 20°C for 2 hours, drying in an oven at 110°C, applying an external pressure and adding water, and a pressurized hydrothermal calcining treatment at 300°C, 0.4 MPa, 100% water vapor for 2h produced a phosphorus-modified ZSM-5 molecular sieve sample, which was denoted as PZ-4C.

### Example 4D

Example 4D illustrated the phosphorus-modified ZSM-5 molecular sieve of the present invention and the process of preparing the same. Example 4D illustrated the phosphorus-modified ZSM-5 molecular sieve used in the catalytic cracking auxiliary of the present invention. Example 4D illustrated the phosphorus-modified ZSM-5 molecular sieve used in the catalyst of the present invention.

The materials, composition, drying and calcining were identical to those in Example 4C, except that ammonium dihydrogen phosphate, an HZSM-5 molecular sieve and water were vigorously mixed and stirred to form a slurry. The slurry was heated to 90°C and maintained for 2h to produce a phosphorus-modified ZSM-5 molecular sieve sample, which was denoted as PZ-4D.

### Comparative Example 4C

Comparative Example 4C illustrated the current industry-conventional method and the resulting phosphorus-modified ZSM-5 comparative sample.

It was identical to Example 4C except that the calcining condition included normal pressure (gauge pressure: 0 MPa) and the calcining was performed in the air atmosphere at 550°C in the muffle furnace to produce a phosphorus-modified ZSM-5 molecular sieve comparative sample, which was denoted as DZ-4C.

### Comparative Example 4D

Comparative Example 4D illustrated the phosphorus-modified ZSM-5 molecular sieve comparative sample obtained by hydrothermally calcining at normal pressure.

It was identical to Example 4C except that the calcining condition included the normal pressure (gauge pressure: 0 MPa) to produce a phosphorus-modified ZSM-5 molecular sieve comparative sample, which was denoted as DZ-4D.

The XRD crystallinity data before and after the hydrothermal aging treatment of PZ-4C, PZ-4D, DZ-4C, and DZ-4D at 800°C under 100% water vapor for 17 hours were shown in Table 6.

The 27Al MAS-NMR spectra of PZ-4C and PZ-4D had the same characteristics as that in Figure 6 respectively, and the 27A1 MAS-NMR spectra of DZ-4C and DZ-4D had the same characteristics as that in Figure 8. The peak area ratio data of the 27A1 MAS-NMR spectrum were shown in Table 7. The surface XPS elemental analysis data of PZ-4C, PZ-4D, DZ-4C, and DZ-4D were shown in Table 8. In the NH3-TPD spectra, for the desorption temperature of 200°C or higher, the data for the proportion of the peak area for the strong acid center relative to the peak area for the total acid center were shown in Table 9.

### Example 5C

Example 5C illustrated the phosphorus-modified ZSM-5 molecular sieve of the present invention and the process of preparing the same. Example 5C illustrated the phosphorus-modified ZSM-5 molecular sieve used in the catalytic cracking auxiliary of the present invention. Example 5C illustrated the phosphorus-modified ZSM-5 molecular sieve used in the catalyst of the present invention.

8.5g of trimethyl phosphate was dissolved in 80g of deionized water at 90°C, stirred for 1h to obtain an aqueous solution containing phosphorus, and 113g of an HZSM-5 molecular sieve was added. The immersion method was used for modification. After immersing at 20°C for 8 hours, drying in an oven at 110°C, applying an external pressure and adding water, and a pressurized hydrothermal calcining treatment at 500°C, 0.8 MPa, 80% water vapor for 4h produced a phosphorus-modified ZSM-5 molecular sieve, which was denoted as PZ-5C.

### Example 5D

Example 5D illustrated the phosphorus-modified ZSM-5 molecular sieve of the present invention and the process of preparing the same. Example 5D illustrated the phosphorus-modified ZSM-5 molecular sieve used in the catalytic cracking auxiliary of the present invention. Example 5D illustrated the phosphorus-modified ZSM-5 molecular sieve used in the catalyst of the present invention.

The materials, composition, drying and calcining were identical to those in Example 5C, except that trimethyl phosphate, an HZSM-5 molecular sieve and water were vigorously mixed and stirred to form a slurry. The slurry was heated to 120°C and maintained for 8h to produce a phosphorus-modified ZSM-5 molecular sieve sample, which was denoted as PZ-5D.

### Comparative Example 5C

Comparative Example 5C illustrated the current industry-conventional method and the resulting phosphorus-modified ZSM-5 comparative sample.

It was identical to Example 5C except that the calcining condition included normal pressure (gauge pressure: 0 MPa) and the calcining was performed in the air atmosphere at 550°C in the muffle furnace to produce a phosphorus-modified ZSM-5 molecular sieve comparative sample, which was denoted as DZ-5C.

### Comparative Example 5D

Comparative Example 5D illustrated the phosphorus-modified ZSM-5 molecular sieve comparative sample obtained by hydrothermally calcining at normal pressure.

It was identical to Example 5C except that the calcining condition included the normal pressure (gauge pressure: 0 MPa) to produce a phosphorus-modified ZSM-5 molecular sieve comparative sample, which was denoted as DZ-5D.

The XRD crystallinity data before and after the hydrothermal aging treatment of PZ-5C, PZ-5D, DZ-5C, and DZ-5D at 800°C under 100% water vapor for 17 hours were shown in Table 6.

The 27Al MAS-NMR spectra of PZ-5C and PZ-5D had the same characteristics as that in Figure 6, and the 27A1 MAS-NMR spectra of DZ-5C and DZ-5D had the same characteristics as that in Figure 8. The peak area ratio data of the 27A1 MAS-NMR spectrum were shown in Table 7.

The surface XPS elemental analysis data of PZ-5C, PZ-5D, DZ-5C, and DZ-5D were shown in Table 8. In the NH3-TPD spectra, for the desorption temperature of 200°C or higher, the data for the proportion of the peak area for the strong acid center relative to the peak area for the total acid center were shown in Table 9.

### Example 6C

Example 6C illustrated the phosphorus-modified ZSM-5 molecular sieve of the present invention and the process of preparing the same. Example 6C illustrated the phosphorus-modified ZSM-5 molecular sieve used in the catalytic cracking auxiliary of the present invention. Example 6C illustrated the phosphorus-modified ZSM-5 molecular sieve used in the catalyst of the present invention.

11.6g of boron phosphate was dissolved in 100g of deionized water at 100°C, stirred for 3h to obtain an aqueous solution containing phosphorus, and 113g of an HZSM-5 molecular sieve was added. The immersion method was used for modification. After immersing at 20°C for 2 hours, drying in an oven at 110°C, applying an external pressure and adding water, and a pressurized hydrothermal calcining treatment at 400°C, 0.3 MPa, 100% water vapor for 4h produced a phosphorus-modified ZSM-5 molecular sieve, which was denoted as PZ-6C.

### Example 6D

Example 6D illustrated the phosphorus-modified ZSM-5 molecular sieve of the present invention and the process of preparing the same. Example 6D illustrated the phosphorus-modified ZSM-5 molecular sieve used in the catalytic cracking auxiliary of the present invention. Example 6D illustrated the phosphorus-modified ZSM-5 molecular sieve used in the catalyst of the present invention.

The materials, composition, drying and calcining were identical to those in Example 6C, except that boron phosphate, an HZSM-5 molecular sieve and water were vigorously mixed and stirred to form a slurry. The slurry was heated to 150°C and maintained for 2h to produce a phosphorus-modified ZSM-5 molecular sieve sample, which was denoted as PZ-6D.

### Comparative Example 6C

Comparative Example 6C illustrated the current industry-conventional method and the resulting phosphorus-modified ZSM-5 comparative sample.

It was identical to Example 6C except that the calcining condition included normal pressure (gauge pressure: 0 MPa) and the calcining was performed in the air atmosphere at 550°C in the muffle furnace to produce a phosphorus-modified ZSM-5 molecular sieve comparative sample, which was denoted as DZ-6C.

### Comparative Example 6D

Comparative Example 6D illustrated the phosphorus-modified ZSM-5 molecular sieve comparative sample obtained by hydrothermally calcining at normal pressure.

It was identical to Example 6C except that the calcining condition included the normal pressure (gauge pressure: 0 MPa) to produce a phosphorus-modified ZSM-5 molecular sieve comparative sample, which was denoted as DZ-6D.

The XRD crystallinity data before and after the hydrothermal aging treatment of PZ-6C, PZ-6D, DZ-6C, and DZ-6D at 800°C under 100% water vapor for 17 hours were shown in Table 6.

The 27Al MAS-NMR spectra of PZ-6C and PZ-6D had the same characteristics as that in Figure 6, and the 27A1 MAS-NMR spectra of DZ-6C and DZ-6D had the same characteristics as that in Figure 8. The peak area ratio data of the 27A1 MAS-NMR spectrum were shown in Table 7.

The surface XPS elemental analysis data of PZ-6C, PZ-6D, DZ-6C, and DZ-6D were shown in Table 8. In the NH3-TPD spectra, for the desorption temperature of 200°C or higher, the data for the proportion of the peak area for the strong acid center relative to the peak area for the total acid center were shown in Table 9.

### Example 7C

Example 7C illustrated the phosphorus-modified ZSM-5 molecular sieve of the present invention and the process of preparing the same. Example 7C illustrated the phosphorus-modified ZSM-5 molecular sieve used in the catalytic cracking auxiliary of the present invention. Example 7C illustrated the phosphorus-modified ZSM-5 molecular sieve used in the catalyst of the present invention.

14.2g of triphenylphosphine was dissolved in 80g of deionized water at 100°C, stirred for 2h to obtain an aqueous solution containing phosphorus, and 113g of an HZSM-5 molecular sieve was added. The immersion method was used for modification. After immersing at 20°C for 4 hours, drying in an oven at 110°C, applying an external pressure and adding water, and a pressurized hydrothermal calcining treatment at 600°C, 1.0 MPa, 30% water vapor for 2h produced a phosphorus-modified ZSM-5 molecular sieve, which was denoted as PZ-7C.

### Example 7D

Example 7D illustrated the phosphorus-modified ZSM-5 molecular sieve of the present invention and the process of preparing the same.

Example 7D illustrated the phosphorus-modified ZSM-5 molecular sieve used in the catalytic cracking auxiliary of the present invention.

Example 7D illustrated the phosphorus-modified ZSM-5 molecular sieve used in the catalyst of the present invention.

The materials, composition, drying and calcining were identical to those in Example 7C, except that the contact by mixing an aqueous solution of the phosphorus-containing compound at 80°C with an HZSM-5 molecular sieve that was heated to 80°C for 4 hours produced a phosphorus-modified ZSM-5 molecular sieve sample, which was denoted as PZ-7D.

### Comparative Example 7C

Comparative Example 7C illustrated the current industry-conventional method and the resulting phosphorus-modified ZSM-5 comparative sample.

It was identical to Example 7C except that the condition for calcining after immersing and drying included normal pressure (gauge pressure: 0 MPa) and the calcining was performed in the air atmosphere at 550°C in the muffle furnace to produce a phosphorus-modified ZSM-5 molecular sieve comparative sample, which was denoted as DZ-7C.

### Comparative Example 7D

Comparative Example 7D illustrated the phosphorus-modified ZSM-5 molecular sieve comparative sample obtained by hydrothermally calcining at normal pressure.

It was identical to Example 7C except that the condition for calcining after immersing and drying included normal pressure (gauge pressure: 0 MPa) to produce a phosphorus-modified ZSM-5 molecular sieve comparative sample, which was denoted as DZ-7D.

The XRD crystallinity data before and after the hydrothermal aging treatment of PZ-7C, PZ-7D, DZ-7C, and DZ-7D at 800°C under 100% water vapor for 17 hours were shown in Table 6.

The 27Al MAS-NMR spectra of PSZ-7 and PZ-7D had the same characteristics as that in Figure 6, and the 27A1 MAS-NMR spectra of DZ-7C and DZ-7D had the same characteristics as that in Figure 8. The peak area ratio data of the 27A1 MAS-NMR spectrum were shown in Table 7.

The surface XPS elemental analysis data of PZ-7C, PZ-7D, DZ-7C, and DZ-7D were shown in Table 8. In the NH3-TPD spectra of PZ-7C, PZ-7D, DZ-7C, and DZ-7D, for the desorption temperature of 200°C or higher, the data for the proportion of the peak area for the strong acid center relative to the peak area for the total acid center were shown in Table 9.

It could be seen from Table 6 that after the hydrothermal aging treatment at 800°C and 100% water vapor for 17h, the phosphorus-modified ZSM-5 molecular sieves prepared with the processes of the present invention still had higher crystallinity retention. The crystallinity retention of the present invention was remarkably higher than that of the comparative samples. The crystallization retention could be at least increased by 5%, 4%, 10%, 15%, 5%, 10% and 8%.

**Table 6**

| Sample name | Timing | Crystallinity % | Crystallinity retention |
|---|---|---|---|
| ZSM-5 | / | 91.1 | / |
| PZ-1C | Before aging | 67.2 | 88% |
| PZ-1C | After aging | 58.8 | 88% |
| DZ-1C | Before aging | 74.1 | 81% |
| DZ-1C | After aging | 59.7 | 81% |
| PZ-1D | Before aging | 68.6 | 92% |
| PZ-1D | After aging | 63.1 | 92% |
| DZ-1D | Before aging | 70.2 | 83% |
| DZ-1D | After aging | 58.2 | 83% |
| PZ-2C | Before aging | 61.6 | 87% |
| PZ-2C | After aging | 53.7 | 87% |
| DZ-2C | Before aging | 62.1 | 82% |
| DZ-2C | After aging | 50.9 | 82% |
| PZ-2D | Before aging | 62.1 | 89% |
| PZ-2D | After aging | 55.3 | 89% |
| DZ-2D | Before aging | 61.8 | 83% |
| DZ-2D | After aging | 51.2 | 83% |
| PZ-3C | Before aging | 80.2 | 89% |
| PZ-3C | After aging | 70.7 | 89% |
| DZ-3C | Before aging | 82.1 | 76% |
| DZ-3C | After aging | 62.3 | 76% |
| PZ-3D | Before aging | 81.4 | 91% |
| PZ-3D | After aging | 74.1 | 91% |
| DZ-3D | Before aging | 80.7 | 79% |
| DZ-3D | After aging | 64.2 | 79% |
| PZ-4C | Before aging | 84.8 | 94% |
| PZ-4C | After aging | 79.2 | 94% |
| DZ-4C | Before aging | 67.4 | 74% |
| DZ-4C | After aging | 49.8 | 74% |
| PZ-4D | Before aging | 85.3 | 96% |
| PZ-4D | After aging | 81.9 | 96% |
| DZ-4D | Before aging | 62 | 79% |
| DZ-4D | After aging | 49.2 | 79% |
| PZ-5C | Before aging | 80.3 | 85% |
| PZ-5C | After aging | 68.6 | 85% |
| DZ-5C | Before aging | 78 | 78% |
| DZ-5C | After aging | 61.2 | 78% |
| PZ-5D | Before aging | 80.8 | 86% |
| PZ-5D | After aging | 69.5 | 86% |
| DZ-5D | Before aging | 77.1 | 80% |
| DZ-5D | After aging | 62.2 | 80% |
| PZ-6C | Before aging | 87.1 | 88% |
| PZ-6C | After aging | 76.6 | 88% |
| DZ-6C | Before aging | 65 | 73% |
| DZ-6C | After aging | 47.3 | 73% |
| PZ-6D | Before aging | 88.6 | 89% |
| PZ-6D | After aging | 78.8 | 89% |
| DZ-6D | Before aging | 63.4 | 78% |
| DZ-6D | After aging | 49.5 | 78% |
| PZ-7C | Before aging | 80.1 | 82% |
| PZ-7C | After aging | 65.6 | 82% |
| DZ-7C | Before aging | 72.5 | 71% |
| DZ-7C | After aging | 51.5 | 71% |
| PZ-7D | Before aging | 80.9 | 85% |
| PZ-7D | After aging | 68.8 | 85% |
| DZ-7D | Before aging | 74.1 | 74% |
| DZ-7D | After aging | 54.8 | 74% |

**Table 7**

| Sample name | Proportion of characteristic peak area relative to total peak area | | Ratio of peak 2 area to peak 1 area | Sample name | Proportion of characteristic peak area relative to total peak area | | Ratio of peak 2 area to peak 1 area |
|---|---|---|---|---|---|---|---|
| | Peak 1 (54±3ppm) | Peak 2 (39±3ppm) | | | Peak 1 (54±3ppm) | Peak 2 (39±3ppm) | |
| PZ-1C | 43% | 48% | 1.12 | DZ-1C | 65% | 12% | 0.18 |
| PZ-1D | 39% | 55% | 1.41 | DZ-1D | 60% | 15% | 0.25 |
| PZ-2C | 38% | 40% | 1.05 | DZ-2C | 62% | 15% | 0.24 |
| PZ-2D | 40% | 45% | 1.13 | DZ-2D | 55% | 18% | 0.33 |
| PZ-3C | 20% | 45% | 2.25 | DZ-3C | 51% | 12% | 0.24 |
| PZ-3D | 18% | 48% | 2.67 | DZ-3D | 45% | 16% | 0.36 |
| PZ-4C | 6% | 90% | 15 | DZ-4C | 48% | 23% | 0.48 |
| PZ-4D | 5% | 95% | 19 | DZ-4D | 51% | 19% | 0.37 |
| PZ-5C | 12% | 59% | 4.92 | DZ-5C | 50% | 18% | 0.36 |
| PZ-5D | 11% | 62% | 5.64 | DZ-5D | 47% | 25% | 0.53 |
| PZ-6C | 21% | 68% | 3.24 | DZ-6C | 63% | 16% | 0.25 |
| PZ-6D | 19% | 69% | 3.63 | DZ-6D | 57% | 24% | 0.42 |
| PZ-7C | 29% | 63% | 2.17 | DZ-7C | 57% | 15% | 0.26 |
| PZ-7D | 26% | 67% | 2.58 | DZ-7D | 52% | 19% | 0.37 |

**Table 8**

| Sample name | Elemental molar composition | | | n1/n2 | Sample name | Elemental molar composition | | | n1/n2 |
|---|---|---|---|---|---|---|---|---|---|
| | Si | Al | P | | | Si | Al | P | |
| PZ-1C | 20.54 | 1.72 | 2.02 | 0.09 | DZ-1C | 20.68 | 1.78 | 3.12 | 0.14 |
| PZ-1D | 20.61 | 1.7 | 1.78 | 0.08 | DZ-1D | 20.58 | 1.74 | 2.94 | 0.13 |
| PZ-2C | 20.61 | 1.71 | 1.95 | 0.09 | DZ-2C | 20.72 | 1.75 | 3.02 | 0.13 |
| PZ-2D | 20.57 | 1.67 | 1.78 | 0.08 | DZ-2D | 20.64 | 1.74 | 2.81 | 0.13 |
| PZ-3C | 19.54 | 1.64 | 1.67 | 0.08 | DZ-3C | 19.62 | 1.71 | 2.61 | 0.12 |
| PZ-3D | 19.64 | 1.71 | 1.49 | 0.07 | DZ-3D | 19.81 | 1.65 | 2.42 | 0.11 |
| PZ-4C | 19.77 | 1.63 | 1.54 | 0.07 | DZ-4C | 19.84 | 1.6 | 2.35 | 0.11 |
| PZ-4D | 19.72 | 1.65 | 1.07 | 0.05 | DZ-4D | 19.64 | 1.57 | 2.22 | 0.11 |
| PZ-5C | 19.94 | 1.63 | 1.32 | 0.06 | DZ-5C | 19.71 | 1.57 | 2.14 | 0.11 |
| PZ-5D | 19.7 | 1.68 | 1.28 | 0.05 | DZ-5D | 19.45 | 1.62 | 2.11 | 0.11 |
| PZ-6C | 20.16 | 1.64 | 1.86 | 0.09 | DZ-6C | 20.24 | 1.72 | 2.91 | 0.13 |
| PZ-6D | 20.21 | 1.66 | 1.75 | 0.08 | DZ-6D | 20.32 | 1.71 | 2.75 | 0.12 |
| PZ-7C | 20.68 | 1.75 | 2.15 | 0.1 | DZ-7C | 20.49 | 1.64 | 3.26 | 0.15 |
| PZ-7D | 20.54 | 1.7 | 2 | 0.09 | DZ-7D | 20.91 | 1.68 | 3.12 | 0.14 |

**Table 9**

| Sample name | The proportion of the peak area for the strong acid center relative to the peak area for the total acid center | Sample name | The proportion of the peak area for the strong acid center relative to the peak area for the total acid center |
|---|---|---|---|
| PZ-1C | 52% | DZ-1C | 16% |
| PZ-1D | 55% | DZ-1D | 24% |
| PZ-2C | 50% | DZ-2C | 15% |
| PZ-2D | 53% | DZ-2D | 22% |
| PZ-3C | 57% | DZ-3C | 24% |
| PZ-3D | 60% | DZ-3D | 28% |
| PZ-4C | 68% | DZ-4C | 35% |
| PZ-4D | 75% | DZ-4D | 32% |
| PZ-5C | 53% | DZ-5C | 27% |
| PZ-5D | 55% | DZ-5D | 32% |
| PZ-6C | 64% | DZ-6C | 32% |
| PZ-6D | 66% | DZ-6D | 34% |
| PZ-7C | 52% | DZ-7C | 16% |
| PZ-7D | 55% | DZ-7D | 24% |

### Micro-reaction evaluation

Under the following micro-reaction evaluation condition, the evaluations for cracking n-tetradecane with PZ-1C, PZ-1D, DZ-1C, DZ-1D, PZ-2C, PZ-2D, DZ-2C, DZ-2D, PZ-3C, PZ-3D, DZ-3C, DZ-3D, PZ-4C, PZ-4D, DZ-4C, DZ-4D, PZ-5C, PZ-5D, DZ-5C, DZ-5D, PZ-6C, PZ-6D, DZ-6C, DZ-6D, PZ-7C, PZ-7D, DZ-7C and DZ-7D were performed:
The molecular sieve loading amount was 2g, the feedstock oil was n-tetradecane, the oil feedstock amount was 1.56g, the reaction temperature was 550°C, and the regeneration temperature was 600°C.

The evaluation data were shown in Table 10.

**Table 10**

| | Material balance/m% | | | | Main products in the cracking gas, m% | | | Conversion/m% |
|---|---|---|---|---|---|---|---|---|
| | Dry gas | Liquefied gas | Gasoline | Diesel | Ethylene | Propylene | Total butylene | |
| PZ-1C | 3.6 | 34.1 | 32.9 | 26.2 | 2.9 | 13.6 | 7.6 | 70.4 |
| DZ-1C | 4.2 | 31.5 | 34.1 | 27.8 | 2.6 | 11.2 | 5.6 | 66.8 |
| PZ-1D | 3.4 | 36.5 | 31.5 | 27.6 | 2.9 | 14.3 | 7.7 | 73.6 |
| DZ-1D | 3.8 | 32.9 | 35.1 | 25.8 | 2.9 | 12.2 | 6.5 | 68.9 |
| PZ-2C | 3.5 | 36.5 | 31.1 | 24.7 | 2.7 | 13.2 | 9.2 | 70 |
| DZ-2C | 4.3 | 30 | 34.8 | 27.5 | 2.3 | 10.2 | 5.2 | 66 |
| PZ-2D | 3.1 | 37.5 | 30.7 | 23.8 | 2.9 | 14 | 9.7 | 74.3 |
| DZ-2D | 3.8 | 33 | 35.4 | 25.9 | 2.7 | 12 | 6.4 | 67.3 |
| PZ-3C | 4.1 | 42.4 | 27.1 | 24.7 | 3.5 | 15.7 | 12.2 | 72.7 |
| DZ-3C | 3.9 | 31.8 | 32.8 | 27.9 | 2.7 | 11.4 | 6.1 | 64.8 |
| PZ-3D | 3.9 | 43 | 26.4 | 23.6 | 3.4 | 16.3 | 13 | 75 |
| DZ-3D | 3.7 | 34.1 | 33.2 | 25.6 | 2.9 | 12.8 | 7.7 | 65.9 |
| PZ-4C | 5.3 | 46.7 | 27.7 | 18.6 | 4.7 | 16.3 | 12.1 | 80.7 |
| DZ-4C | 3.5 | 26.8 | 34.3 | 25.4 | 2.5 | 10.2 | 6.3 | 65.7 |
| PZ-4D | 3.9 | 49 | 26.5 | 17.3 | 4.5 | 16.9 | 12.4 | 84.9 |
| DZ-4D | 4.3 | 25.7 | 34.8 | 29.3 | 3.1 | 9.5 | 5.2 | 65 |
| PZ-5C | 3.5 | 36.6 | 30.2 | 27.9 | 2.7 | 13.4 | 10.1 | 68 |
| DZ-5C | 4.3 | 23.8 | 37.2 | 28.5 | 3.3 | 9 | 5.8 | 63.2 |
| PZ-5D | 3.5 | 36.9 | 30 | 26.9 | 2.7 | 14 | 10.7 | 68.7 |
| DZ-5D | 3.5 | 25.3 | 33.2 | 26.1 | 2.5 | 10 | 6.1 | 65.1 |
| PZ-6C | 4.2 | 41.4 | 30.6 | 22 | 3.4 | 15.1 | 10.8 | 73.9 |
| DZ-6C | 2.8 | 27.8 | 29.7 | 36.6 | 2 | 11.7 | 6.7 | 59.3 |
| PZ-6D | 4 | 41.9 | 30.3 | 21.9 | 3.5 | 15.4 | 10.7 | 77.1 |
| DZ-6D | 3.9 | 29.8 | 28.9 | 34.2 | 3.2 | 12.8 | 6.5 | 60.1 |
| PZ-7C | 4.4 | 35.1 | 33.6 | 25 | 3.4 | 13.8 | 7.4 | 74.3 |
| DZ-7C | 3.4 | 28.7 | 31.3 | 33.9 | 2.7 | 12 | 6.3 | 61.3 |
| PZ-7D | 4.2 | 35.7 | 32.6 | 24.9 | 3.3 | 14 | 7.9 | 75.2 |
| DZ-7D | 4.2 | 31.7 | 30.9 | 31.4 | 4.2 | 13 | 7.1 | 62.5 |

Examples 8-11 could illustrate the phosphorus-aluminum inorganic binder used in the catalyst of the present invention. Examples 8-11 could also illustrate the phosphorus-aluminum inorganic binder used in the catalytic cracking auxiliary of the present invention.

### Example 8

1.91 kg of pseudo-boehmite (containing Al2O3, 1.19 kg), 0.56 kg of kaolin (0.5 kg on a dry basis) and 3.27 kg of decationized water were vigorously mixed and stirred for 30 minutes to form a slurry, and 5.37 kg of concentrated phosphoric acid (mass concentration 85%) was added to the slurry under stirring, wherein the addition rate of phosphoric acid was 0.04 kg of phosphoric acid/min/kg alumina source. The mixture was warmed up to 70°C, and then reacted at this temperature for 45 minutes to produce the phosphorus-aluminum inorganic binder. The material composition was shown in Table 11, and the sample number was Binder 1.

### Examples 9-11

The phosphorus-aluminum inorganic binders were prepared according to the method of Example 8, the material compositions were shown in Table 11, and the sample numbers were Binder 2, Binder 3, and Binder 4.

**Table 11**

| Item | Example 8 | Example 9 | Example 10 | Example 11 |
|---|---|---|---|---|
| Binder number | Binder 1 | Binder 2 | Binder 3 | Binder 4 |
| Pseudo-boehmite,kg | 1.91 | | | 1.6 |
| Al₂O₃, kg | 1.19 | | | 1 |
| SB, kg | | 0.94 | | |
| Al₂O₃, kg | | 0.7 | | |
| γ-Al₂O₃, kg | | | 0.58 | |
| Al₂O₃, kg | | | 0.58 | |
| Rectorite, kg | | 1.28 | 1.93 | |
| Dry basis, kg | | 1 | 1.5 | |
| Kaolin, kg | 0.56 | | | |
| Dry basis, kg | 0.5 | | | |
| phosphoric acid, kg | 5.37 | 5.36 | 4.03 | 6.5 |
| P2O5, kg | 3.31 | 3.3 | 2.92 | 4 |
| Decationized water, kg | 3.27 | 6.71 | 20.18 | 4.4 |
| Total amount, kg | 11.11 | 14.29 | 25 | 12.5 |
| Total dry basis, kg | 5 | 5 | 5 | 5 |
| Binder solid content, kg/kg | 0.45 | 0.35 | 0.2 | 0.4 |
| P/Al | 2.29 | 3.89 | 4.19 | 3.3 |
| Al2O3, wt% | 23.82 | 14 | 11.53 | 20 |
| P2O5, wt% | 66.18 | 66 | 58.47 | 80 |
| First clay, wt% | 10 | 20 | 30 | 0 |
| pH | 2.2 | 2.37 | 1.78 | 2.46 |

The following Examples illustrated the cracking auxiliaries of the present invention, and the following Comparative Examples illustrated the comparative catalytic cracking auxiliaries.

### Example 12A

Phosphorus-containing hierarchical molecular sieve PZ-1A prepared in Example 1A, kaolin and pseudo-boehmite were taken, and decationized water and alumina sol were added. The mixture was vigorously mixed and stirred for 120 minutes to produce a slurry having a solid content of 30 wt%. Hydrochloric acid was added to adjust the pH of the slurry to 3.0, and then the vigorously mixing and stirring was continued for 45 minutes. Then the phosphorus-aluminum inorganic binder, Binder 1 prepared in Example 8 was added, and the mixture was stirred for 30 minutes. The resulting slurry was spray-dried to produce microspheres. The microspheres were calcined at 500 °C for 1 hour to produce a cracking auxiliary sample, which was denoted as PA-1A and had a composition: molecular sieve: 50%, kaolin: 23%, Binder 1: 18%, pseudo-boehmite (as Al2O3): 5%, and alumina sol (as Al2O3): 4%.

A fixed bed micro-reaction apparatus was used to evaluate the reaction performances of a 100% equilibrium catalyst and an equilibrium catalyst to which the cracking auxiliary PA-1A prepared in Example 12A was incorporated, in order to illustrate the catalytic cracking reaction effect of the catalytic cracking auxiliary provided in the present disclosure.

The auxiliary PA-1A was subjected to an aging treatment at 800 °C, 100% water vapor atmosphere for 17 hours. The aging-treated PA-1A and an industrial FCC equilibrium catalyst (brand: DVR-3, and having a light oil micro-activity of 63) were mixed in a ratio of 10:90. A mixture of the equilibrium catalyst and the auxiliary was loaded into the fixed-bed micro-reaction reactor, and the feedstock oil shown in Table 12 was catalytically cracked. The evaluation condition included the reaction temperature of 620 °C, the regeneration temperature of 620 °C, and the catalyst-oil ratio of 3.2. Table 13 provided the reaction results, including the blank test example.

### Example 12B

It was identical to Example 12A, except that the phosphorus-containing hierarchical molecular sieve PZ-1A was replaced with the phosphorus-containing hierarchical molecular sieve PZ-1B prepared in Example Example 1B to produce a cracking auxiliary sample, which was denoted as PA-1B. Its evaluation was identical to that of Example 12A, and the result was shown in Table 13.

### Comparative Example 12A

It was identical to Example 12A, except that the phosphorus-containing hierarchical molecular sieve PZ-1A was replaced with the comparative sample DZ-1A of Comparative Example 1A to produce a cracking auxiliary comparative sample, which was denoted as DA-1A. Its evaluation was identical to that of Example 12A, and the result was shown in Table 13.

### Comparative Example 12B

It was identical to Example 12A, except that the phosphorus-containing hierarchical molecular sieve PZ-1A was replaced with the comparative sample DZ-1B of Comparative Example 1B to produce a cracking auxiliary comparative sample, which was denoted as DA-1B. Its evaluation was identical to that of Example 12A, and the result was shown in Table 13.

### Example 13A

It was identical to Example 12A, except that the phosphorus-containing hierarchical molecular sieve PZ-1A was replaced with the phosphorus-containing hierarchical molecular sieve PZ-2A prepared in Example Example 2A to produce a cracking auxiliary sample, which was denoted as PA-2A. Its evaluation was identical to that of Example 12A, and the result was shown in Table 13.

### Example 13B

It was identical to Example 13A, except that the phosphorus-containing hierarchical molecular sieve PZ-2A was replaced with the phosphorus-containing hierarchical molecular sieve PZ-2B prepared in Example Example 2B to produce a cracking auxiliary sample, which was denoted as PA-2B. Its evaluation was identical to that of Example 13A, and the result was shown in Table 13.

### Comparative Example 13A

It was identical to Example 13A, except that the phosphorus-containing hierarchical molecular sieve PZ-2A was replaced with the comparative sample DZ-2A of Comparative Example 2A to produce a cracking auxiliary comparative sample, which was denoted as DA-2A. Its evaluation was identical to that of Example 13A, and the result was shown in Table 13.

### Comparative Example 13B

It was identical to Example 13A, except that the phosphorus-containing hierarchical molecular sieve PZ-2A was replaced with the comparative sample DZ-2B of Comparative Example 2B to produce a cracking auxiliary comparative sample, which was denoted as DA-2B. Its evaluation was identical to that of Example 13A, and the result was shown in Table 13.

### Example 14A

It was identical to Example 12A, except that the phosphorus-containing hierarchical molecular sieve PZ-1A was replaced with the phosphorus-modified molecular sieve PZ-3A prepared in Example 3A to produce a cracking auxiliary sample, which was denoted as PA-3A. Its evaluation was identical to that of Example 12A, and the result was shown in Table 13.

### Example 14B

It was identical to Example 14A, except that the phosphorus-containing hierarchical molecular sieve PZ-3A was replaced with the phosphorus-modified molecular sieve PZ-3B prepared in Example 3B to produce a cracking auxiliary sample, which was denoted as PA-3B. Its evaluation was identical to that of Example 14A, and the result was shown in Table 13.

### Comparative Example 14A

It was identical to Example 14A, except that the phosphorus-containing hierarchical molecular sieve PZ-3A was replaced with the comparative sample DZ-3A of Comparative Example 3A to produce a cracking auxiliary comparative sample, which was denoted as DA-3A. Its evaluation was identical to that of Example 14A, and the result was shown in Table 13.

### Comparative Example 14B

It was identical to Example 14A, except that the phosphorus-containing hierarchical molecular sieve PZ-3A was replaced with the comparative sample DZ-3B of Comparative Example 3B to produce a cracking auxiliary comparative sample, which was denoted as DA-3B. Its evaluation was identical to that of Example 14A, and the result was shown in Table 13.

### Example 15A

It was identical to Example 12A, except that the phosphorus-containing hierarchical molecular sieve PZ-1A was replaced with the phosphorus-containing hierarchical molecular sieve PZ-4A prepared in Example Example 4A to produce a cracking auxiliary sample, which was denoted as PA-4A. Its evaluation was identical to that of Example 12A, and the result was shown in Table 13.

### Example 15B

It was identical to Example 15A, except that the phosphorus-containing hierarchical molecular sieve PZ-4A was replaced with the phosphorus-containing hierarchical molecular sieve PZ-4B prepared in Example Example 4B to produce a cracking auxiliary sample, which was denoted as PA-4B. Its evaluation was identical to that of Example 15A, and the result was shown in Table 13.

### Comparative Example 15A

It was identical to Example 15A, except that the phosphorus-containing hierarchical molecular sieve PZ-4A was replaced with the comparative sample DZ-4A of Comparative Example 4A to produce a cracking auxiliary comparative sample, which was denoted as DA-4A. Its evaluation was identical to that of Example 15A, and the result was shown in Table 13.

### Comparative Example 15B

It was identical to Example 15A, except that the phosphorus-containing hierarchical molecular sieve PZ-4A was replaced with the comparative sample DZ-4B of Comparative Example 4B to produce a cracking auxiliary comparative sample, which was denoted as DA-4B. Its evaluation was identical to that of Example 15A, and the result was shown in Table 13.

### Example 16A

It was identical to Example 12A, except that the phosphorus-containing hierarchical molecular sieve PZ-1A was replaced with the phosphorus-containing hierarchical molecular sieve PZ-5A prepared in Example Example 5A to produce a cracking auxiliary sample, which was denoted as PA-5A. Its evaluation was identical to that of Example 12A, and the result was shown in Table 13.

### Example 16B

It was identical to Example 16A, except that the phosphorus-containing hierarchical molecular sieve PZ-5A was replaced with the phosphorus-containing hierarchical molecular sieve PZ-5B prepared in Example Example 5B to produce a cracking auxiliary sample, which was denoted as PA-5B. Its evaluation was identical to that of Example 16A, and the result was shown in Table 13.

### Comparative Example 16A

It was identical to Example 16A, except that the phosphorus-containing hierarchical molecular sieve PZ-5A was replaced with the comparative sample DZ-5A of Comparative Example 5A to produce a cracking auxiliary comparative sample, which was denoted as DA-5A. Its evaluation was identical to that of Example 16A, and the result was shown in Table 13.

### Comparative Example 16B

It was identical to Example 16A, except that the phosphorus-containing hierarchical molecular sieve PZ-5A was replaced with the comparative sample DZ-5B of Comparative Example 5B to produce a cracking auxiliary comparative sample, which was denoted as DA-5B. Its evaluation was identical to that of Example 16A, and the result was shown in Table 13.

### Example 17A

It was identical to Example 12A, except that the phosphorus-containing hierarchical molecular sieve PZ-1A was replaced with the phosphorus-containing hierarchical molecular sieve PZ-6A prepared in Example Example 6A to produce a cracking auxiliary sample, which was denoted as PA-6A. Its evaluation was identical to that of Example 12A, and the result was shown in Table 13.

### Example 17B

It was identical to Example 17A, except that the phosphorus-containing hierarchical molecular sieve PZ-6A was replaced with the phosphorus-containing hierarchical molecular sieve PZ-6B prepared in Example Example 6B to produce a cracking auxiliary sample, which was denoted as PA-6B. Its evaluation was identical to that of Example 17A, and the result was shown in Table 13.

### Comparative Example 17A

It was identical to Example 17A, except that the phosphorus-containing hierarchical molecular sieve PZ-6A was replaced with the comparative sample DZ-6A of Comparative Example 6A to produce a cracking auxiliary comparative sample, which was denoted as DA-6A. Its evaluation was identical to that of Example 17A, and the result was shown in Table 13.

### Comparative Example 17B

It was identical to Example 17A, except that the phosphorus-containing hierarchical molecular sieve PZ-6A was replaced with the comparative sample DZ-6B of Comparative Example 6B to produce a cracking auxiliary comparative sample, which was denoted as DA-6B. Its evaluation was identical to that of Example 17A, and the result was shown in Table 13.

### Example 18A

It was identical to Example 12A, except that the phosphorus-containing hierarchical molecular sieve PZ-1A was replaced with the phosphorus-containing hierarchical molecular sieve PZ-7A prepared in Example Example 7A to produce a cracking auxiliary sample, which was denoted as PA-7A. Its evaluation was identical to that of Example 12A, and the result was shown in Table 13.

### Example 18B

It was identical to Example 18A, except that the phosphorus-containing hierarchical molecular sieve PZ-7A was replaced with the phosphorus-containing hierarchical molecular sieve PZ-7B prepared in Example Example 7B to produce a cracking auxiliary sample, which was denoted as PA-7B. Its evaluation was identical to that of Example 18A, and the result was shown in Table 13.

### Comparative Example 18A

It was identical to Example 18A, except that the phosphorus-containing hierarchical molecular sieve PZ-7A was replaced with the comparative sample DZ-7A of Comparative Example 7A to produce a cracking auxiliary comparative sample, which was denoted as DA-7A. Its evaluation was identical to that of Example 18A, and the result was shown in Table 13.

### Comparative Example 18B

It was identical to Example 18A, except that the phosphorus-containing hierarchical molecular sieve PZ-7A was replaced with the comparative sample DZ-7B of Comparative Example 7B to produce a cracking auxiliary comparative sample, which was denoted as DA-7B. Its evaluation was identical to that of Example 18A, and the result was shown in Table 13.

### Example 19A

It was identical to Example 12A, except that the phosphorus-aluminum inorganic binder was replaced with Binder 2 prepared in Example 9 to produce a cracking auxiliary, which was denoted as PA-8A. Its evaluation was identical to that of Example 12A, and the result was shown in Table 13.

### Example 19B

It was identical to Example 12B, except that the phosphorus-aluminum inorganic binder was replaced with Binder 2 prepared in Example 9 to produce a cracking auxiliary, which was denoted as PA-8B. Its evaluation was identical to that of Example 12A, and the result was shown in Table 13.

### Example 20A

It was identical to Example 12A, except that the phosphorus-aluminum inorganic binder was replaced with Binder 3 prepared in Example 10 to produce a catalytic auxiliary, which was denoted as PA-9A. Its evaluation was identical to that of Example 12A, and the result was shown in Table 13.

### Example 20B

It was identical to Example 12B, except that the phosphorus-aluminum inorganic binder was replaced with Binder 3 prepared in Example 10 to produce a cracking auxiliary, which was denoted as PA-9B. Its evaluation was identical to that of Example 12A, and the result was shown in Table 13.

### Example 21A

It was identical to Example 12A, except that the phosphorus-aluminum inorganic binder was replaced with Binder 4 prepared in Example 11 to produce a cracking auxiliary, which was denoted as PA-10A. Its evaluation was identical to that of Example 12A, and the result was shown in Table 13.

### Example 21B

It was identical to Example 12B, except that the phosphorus-aluminum inorganic binder was replaced with Binder 4 prepared in Example 11 to produce a cracking auxiliary, which was denoted as PA-10B. Its evaluation was identical to that of Example 12A, and the result was shown in Table 13.

### Example 22A

It was identical to Example 12A, except that the phosphorus-containing hierarchical ZSM-5 molecular sieve sample PZ-1A (45 wt%), kaolin (18 wt%), the phosphorus-aluminum inorganic binder, Binder 3 (22 wt%), pseudo-boehmite (10 wt%), alumina sol (5 wt%) were used to produce a cracking auxiliary, which was denoted as PA-11A. Its evaluation was identical to that of Example 12A, and the result was shown in Table 13.

### Example 22B

It was identical to Example 22A, except that PZ-1A was replaced with PZ-1B to produce a cracking auxiliary, which was denoted as PA-11B. Its evaluation was identical to that of Example 12A, and the result was shown in Table 13.

### Comparative Example 22A

It was identical to Example 22A, except that PZ-1A was replaced with DZ-1A to produce a cracking auxiliary comparative sample, which was denoted as DA-11A. Its evaluation was identical to that of Example 12A, and the result was shown in Table 13.

### Comparative Example 22B

It was identical to Example 22A, except that PZ-1A was replaced with DZ-1B to produce a catalytic cracking auxiliary comparative sample, which was denoted as DA-11B. Its evaluation was identical to that of Example 12A, and the result was shown in Table 13.

### Example 23A

It was identical to Example 12A, except that the phosphorus-containing hierarchical ZSM-5 molecular sieve sample PZ-2A (40 wt%), kaolin (24 wt%), the phosphorus-aluminum inorganic binder, Binder 4 (20 wt%), pseudo-boehmite (6 wt%), and silica sol (10 wt%) were used to produce a cracking auxiliary, which was denoted as PA-12A. Its evaluation was identical to that of Example 12A, and the result was shown in Table 13.

### Example 23B

It was identical to Example 23A, except that The phosphorus-containing hierarchical ZSM-5 molecular sieve sample PZ-2A was replaced with PZ-2B to produce a cracking auxiliary, which was denoted as PA-12B. Its evaluation was identical to that of Example 12A, and the result was shown in Table 13.

### Comparative Example 23A

It was identical to Example 23A, except that PZ-2A was replaced with DZ-2A to produce a cracking auxiliary comparative sample, which was denoted as DA-12A. Its evaluation was identical to that of Example 12A, and the result was shown in Table 13.

### Comparative Example 23B

It was identical to Example 23A, except that PZ-2A was replaced with DZ-2B to produce a cracking auxiliary comparative sample, which was denoted as DA-12B. Its evaluation was identical to that of Example 12A, and the result was shown in Table 13.

### Example 24A

The binder, alumina sol was mixed with kaolin, and decationized water was added to form a slurry with a solid content of 30 wt%. The slurry was stirred well, and adjusted with hydrochloric acid to a pH of 2.8. The slurry was allowed to stand at 55 °C to age for 1 hour. Then the phosphorus-containing hierarchical molecular sieve PZ-1A prepared in Example 1A was added to form a catalyst slurry with a solid content of 35 wt%. The slurry was continuously stirred and spray-dried to form catalyst microspheres. The catalyst microspheres were then calcined at 500°C for 1 hour, washed with ammonium sulfate at 60°C (wherein, ammonium sulfate:catalyst microspheres:water=0.5:1:10) to the sodium oxide content of less than 0.25 wt%, followed by rinsed with deionized water and filtered, and then dried at 110°C to produce the catalyst PA-13A. Its composition comprised: the molecular sieve, 50%; kaolin, 23%; and alumina sol (as Al2O3): 27%. Its evaluation was identical to that of Example 12A, and the result was shown in Table 13.

### Example 24B

It was identical to Example 24A, except that the phosphorus-containing hierarchical molecular sieve PZ-1A was replaced with the phosphorus-containing hierarchical molecular sieve PZ-1B prepared in Example Example 1B to produce a cracking auxiliary sample, which was denoted as PA-13B. Its evaluation was identical to that of Example 12A, and the result was shown in Table 13.

### Comparative Example 24A

It was identical to Example 24A, except that the phosphorus-containing hierarchical molecular sieve PZ-1A was replaced with the comparative sample DZ-1A of Comparative Example 1A to produce a cracking auxiliary comparative sample, which was denoted as DA-13A. Its evaluation was identical to that of Example 12A, and the result was shown in Table 13.

### Comparative Example 24B

It was identical to Example 24A, except that the phosphorus-containing hierarchical molecular sieve PZ-1A was replaced with the comparative sample DZ-1B of Comparative Example 1B to produce a cracking auxiliary comparative sample, which was denoted as DA-13B. Its evaluation was identical to that of Example 12A, and the result was shown in Table 13.

**Table 12Feedstock oil properties**

| Item | Feedstock oil |
|---|---|
| Density (20°C), g/cm³ | 0.9334 |
| Refraction (70°C) | 1.5061 |
| SARA, m% | |
| Saturates | 55.6 |
| Aromatics | 30 |
| Resin | 14.4 |
| Asphaltene | < 0.1 |
| Freezing point,°C | 34 |
| Metal content, ppm | |
| Ca | 3.9 |
| Fe | 1.1 |
| Mg | < 0.1 |
| Na | 0.9 |
| Ni | 3.1 |
| Pb | < 0.1 |
| V | 0.5 |
| Cm% | 86.88 |
| Hm% | 11.94 |
| Sm% | 0.7 |
| Carbon residue m% | 1.77 |

**Table 13**

| Item | Catalyst mixture | | Liquefied gas | Ethylene yield | Propylene yield |
|---|---|---|---|---|---|
| Example 12A | 10% PA-1A | 90% equilibrium catalyst | 35.63 | 4.01 | 17.87 |
| Comparative Example 12A | 10% DA-1A | 90% equilibrium catalyst | 30.54 | 3.13 | 13.98 |
| Example 12B | 10% PA-1B | 90% equilibrium catalyst | 46.15 | 5.01 | 20.76 |
| Comparative Example 12B | 10% DA-1B | 90% equilibrium catalyst | 32.13 | 3.21 | 14.54 |
| Example 13A | 10% PA-2A | 90% equilibrium catalyst | 45.16 | 5.05 | 19.98 |
| Comparative Example 13A | 10% DA-2A | 90% equilibrium catalyst | 32.76 | 3.45 | 14.9 |
| Example 13B | 10% PA-2B | 90% equilibrium catalyst | 50.87 | 5.38 | 20.89 |
| Comparative Example 13B | 10% DA-2B | 90% equilibrium catalyst | 36.45 | 3.97 | 15.87 |
| Example 14A | 10% PA-3A | 90% equilibrium catalyst | 42.34 | 4.87 | 18.05 |
| Comparative Example 14A | 10% DA-3A | 90% equilibrium catalyst | 30.67 | 3.45 | 14.94 |
| Example 14B | 10% PA-3B | 90% equilibrium catalyst | 45.76 | 5.03 | 19.34 |
| Comparative Example 14B | 10% DA-3B | 90% equilibrium catalyst | 35.75 | 3.67 | 15.01 |
| Example 15A | 10% PA-4A | 90% equilibrium catalyst | 44.65 | 4.78 | 18.87 |
| Comparative Example 15A | 10% DA-4A | 90% equilibrium catalyst | 32.63 | 3.53 | 15.89 |
| Example 15B | 10% PA-4B | 90% equilibrium catalyst | 48.03 | 5.15 | 19.41 |
| Comparative Example 15B | 10% DA-4B | 90% equilibrium catalyst | 37.13 | 3.79 | 16.01 |
| Example 16A | 10% PA-5A | 90% equilibrium catalyst | 38.95 | 4.36 | 16.78 |
| Comparative Example 16A | 10% DA-5A | 90% equilibrium catalyst | 28.13 | 3.87 | 12.97 |
| Example 16B | 10% PA-5B | 90% equilibrium catalyst | 43.02 | 4.51 | 18.68 |
| Comparative Example 16B | 10% DA-5B | 90% equilibrium catalyst | 29.87 | 3.98 | 14.01 |
| Example 17A | 10% PA-6A | 90% equilibrium catalyst | 44.03 | 4.76 | 18.81 |
| Comparative Example 17A | 10% DA-6A | 90% equilibrium catalyst | 33.06 | 3.76 | 16.13 |
| Example 17B | 10% PA-6B | 90% equilibrium catalyst | 48.12 | 5.24 | 19.99 |
| Comparative Example 17B | 10% DA-6B | 90% equilibrium catalyst | 34.9 | 3.89 | 16.91 |
| Example 18A | 10% PA-7A | 90% equilibrium catalyst | 33.43 | 3.53 | 13.89 |
| Comparative Example 18A | 10% DA-7A | 90% equilibrium catalyst | 23.75 | 3.89 | 12.01 |
| Example 18B | 10% PA-7B | 90% equilibrium catalyst | 38.67 | 4.45 | 17.02 |
| Comparative Example 18B | 10% DA-7B | 90% equilibrium catalyst | 25.12 | 3.67 | 12.52 |
| Example 19A | 10% PA-8A | 90% equilibrium catalyst | 33.61 | 3.84 | 17.51 |
| Example 19B | 10% PA-8B | 90% equilibrium catalyst | 41.78 | 4.24 | 18.61 |
| Example 20A | 10% PA-9A | 90% equilibrium catalyst | 33.14 | 3.78 | 17.48 |
| Example 20B | 10% PA-9B | 90% equilibrium catalyst | 41.01 | 4.01 | 18.12 |
| Example 21A | 10%PA-10A | 90% equilibrium catalyst | 33.24 | 3.68 | 17.12 |
| Example 21B | 10%PA-10B | 90% equilibrium catalyst | 41.16 | 4.03 | 18.1 |
| Example 22A | 10% PA-11A | 90% equilibrium catalyst | 33.12 | 3.45 | 16.12 |
| Comparative Example 22A | 10% DA-11A | 90% equilibrium catalyst | 26.87 | 2.89 | 12.9 |
| Example 22B | 10% PA-11B | 90% equilibrium catalyst | 40.32 | 4.43 | 19.23 |
| Comparative Example 22B | 10% DA-11B | 90% equilibrium catalyst | 28.97 | 3.65 | 13.89 |
| Example 23A | 10%PA-12A | 90% equilibrium catalyst | 36.68 | 3.88 | 15.33 |
| Comparative Example 23A | 10%DA-12A | 90% equilibrium catalyst | 25.93 | 2.61 | 11.35 |
| Example 23B | 10% PA-12B | 90% equilibrium catalyst | 40.39 | 4.32 | 15.97 |
| Comparative Example 23B | 10% DA-12B | 90% equilibrium catalyst | 28.99 | 2.97 | 11.99 |
| Example 24A | 10% PA-13A | 90% equilibrium catalyst | 33.85 | 3.73 | 16.44 |
| Comparative Example 24A | 10%DA-13A | 90% equilibrium catalyst | 27.35 | 2.77 | 11.79 |
| Example 24B | 10% PA-13B | 90% equilibrium catalyst | 40.43 | 4.55 | 18.27 |
| Comparative Example 24B | 10% DA-13B | 90% equilibrium catalyst | 28.52 | 2.93 | 12.68 |
| Blank test example | / | 100% equilibrium catalyst | 18.54 | 1.39 | 8.05 |

The following Examples illustrated the cracking catalyst of the present invention and the preparation thereof.

### Example 25A

Phosphorus-containing hierarchical molecular sieve PZ-1A prepared in Example 1A, Y zeolite (PSRY zeolite), kaolin and pseudo-boehmite were taken, and decationized water and alumina sol were added. The mixture was vigorously mixed and stirred for 120 minutes to produce a slurry having a solid content of 30 wt%. Hydrochloric acid was added to adjust the pH of the slurry to 3.0, and then the vigorously mixing and stirring was continued for 45 minutes. Then the phosphorus-aluminum inorganic binder, Binder 1 prepared in Example 8 was added, and the mixture was stirred for 30 minutes. The resulting slurry was spray-dried to produce microspheres. The microspheres were calcined at 500°C for 1 hour to produce a catalytic cracking catalyst sample of the present invention, which was denoted as PC-1A. Its composition comprised: the phosphorus-modified ZSM-5 molecular sieve, 40%; PSRY zeolite, 10%; kaolin 18%, Binder 1, 18%; pseudo-boehmite (as Al2O3), 5% and alumina sol (as Al2O3), 9%. A fixed bed micro-reaction apparatus was used to evaluate the reaction performances of a 100% equilibrium catalyst and an equilibrium catalyst to which catalyst PC-1A was incorporated, in order to illustrate the catalytic cracking reaction effect, the same as below.

The catalyst PC-1A was subjected to an aging treatment at 800°C, 100% water vapor atmosphere for 17 hours. The aging-treated PC-1A and an industrial FCC equilibrium catalyst (brand: DVR-3, and having a light oil micro-activity of 63) were mixed in a ratio of 10:90. A mixture of the equilibrium catalyst and the catalyst was loaded into the fixed-bed micro-reaction reactor, and the feedstock oil shown in Table 12 was catalytically cracked. The evaluation condition included the reaction temperature of 620 °C, the regeneration temperature of 620 °C, and the catalyst-oil ratio of 3.2. The reaction result was shown in Table 14.

### Example 25B

It was identical to Example 25A, except that the phosphorus-modified molecular sieve PZ-1A was replaced with the phosphorus-modified molecular sieve PZ-1B prepared in Example 1B to produce a catalyst sample, which was denoted as PC-1B. Its evaluation was identical to that of Example 25A, and the result was shown in Table 14.

### Comparative Example 25A

It was identical to Example 25A, except that the phosphorus-modified molecular sieve PZ-1A was replaced with the comparative sample DZ-1A prepared in Comparative Example 1A to produce a catalyst comparative sample, which was denoted as DC-1A. Its evaluation was identical to that of Example 25A, and the result was shown in Table 14.

### Comparative Example 25B

It was identical to Example 25A, except that the phosphorus-modified molecular sieve PZ-1A was replaced with the comparative sample DZ-1B prepared in Comparative Example 1B to produce a catalyst comparative sample, which was denoted as DC-1B. Its evaluation was identical to that of Example 25A, and the result was shown in Table 14.

### Example 26A

It was identical to Example 25A, except that the phosphorus-containing hierarchical molecular sieve PZ-1A was replaced with the phosphorus-modified molecular sieve PZ-2A prepared in Example 2A to produce a catalytic cracking auxiliary sample, which was denoted as PC-2A. Its evaluation was identical to that of Example 25A, and the result was shown in Table 14.

### Example 26B

It was identical to Example 26A, except that the phosphorus-containing hierarchical molecular sieve PZ-2A was replaced with the phosphorus-modified molecular sieve PZ-2B prepared in Example 2B to produce a catalytic cracking auxiliary sample, which was denoted as PC-2B. Its evaluation was identical to that of Example 26A, and the result was shown in Table 14.

### Comparative Example 26A

It was identical to Example 26A, except that the phosphorus-containing hierarchical molecular sieve PZ-2A was replaced with the comparative sample DZ-2A of Comparative Example 2A to produce a catalytic cracking auxiliary comparative sample, which was denoted as DC-2A. Its evaluation was identical to that of Example 26A, and the result was shown in Table 14.

### Comparative Example 26B

It was identical to Example 26A, except that the phosphorus-containing hierarchical molecular sieve PZ-2A was replaced with the comparative sample DZ-2B of Comparative Example 2B to produce a catalytic cracking auxiliary comparative sample, which was denoted as DC-2B. Its evaluation was identical to that of Example 26A, and the result was shown in Table 14.

### Example 27A

It was identical to Example 25A, except that the phosphorus-containing hierarchical molecular sieve PZ-1A was replaced with the phosphorus-modified molecular sieve PZ-3A prepared in Example 3A to produce a catalytic cracking auxiliary sample, which was denoted as PC-3A. Its evaluation was identical to that of Example 25A, and the result was shown in Table 14.

### Example 27B

It was identical to Example 27A, except that the phosphorus-containing hierarchical molecular sieve PZ-3A was replaced with the phosphorus-modified molecular sieve PZ-3B prepared in Example 3B to produce a catalytic cracking auxiliary sample, which was denoted as PC-3B. Its evaluation was identical to that of Example 27A, and the result was shown in Table 14.

### Comparative Example 27A

It was identical to Example 27A, except that the phosphorus-containing hierarchical molecular sieve PZ-3A was replaced with the comparative sample DZ-3A of Comparative Example 3A to produce a catalytic cracking auxiliary comparative sample, which was denoted as DC-3A. Its evaluation was identical to that of Example 27A, and the result was shown in Table 14.

### Comparative Example 27B

It was identical to Example 27A, except that the phosphorus-containing hierarchical molecular sieve PZ-3A was replaced with the comparative sample DZ-3B of Comparative Example 3B to produce a catalyst comparative sample, which was denoted as DC-3B. Its evaluation was identical to that of Example 27A, and the result was shown in Table 14.

### Example 28A

It was identical to Example 25A, except that the phosphorus-containing hierarchical molecular sieve PZ-1A was replaced with the phosphorus-modified molecular sieve PZ-4A prepared in Example 4A to produce a catalyst sample, which was denoted as PC-4A. Its evaluation was identical to that of Example 25A, and the result was shown in Table 14.

### Example 28B

It was identical to Example 28A, except that the phosphorus-containing hierarchical molecular sieve PZ-4A was replaced with the phosphorus-modified molecular sieve PZ-4B prepared in Example 4B to produce a catalyst sample, which was denoted as PC-4B. Its evaluation was identical to that of Example 28A, and the result was shown in Table 14.

### Comparative Example 28A

It was identical to Example 28A, except that the phosphorus-containing hierarchical molecular sieve PZ-4A was replaced with the comparative sample DZ-4A of Comparative Example 4A to produce a catalyst comparative sample, which was denoted as DC-4A. Its evaluation was identical to that of Example 28A, and the result was shown in Table 14.

### Comparative Example 28B

It was identical to Example 28A, except that the phosphorus-containing hierarchical molecular sieve PZ-4A was replaced with the comparative sample DZ-4B of Comparative Example 4B to produce a catalyst comparative sample, which was denoted as DC-4B. Its evaluation was identical to that of Example 28A, and the result was shown in Table 14.

### Example 29A

It was identical to Example 25A, except that the phosphorus-containing hierarchical molecular sieve PZ-1A was replaced with the phosphorus-modified molecular sieve PZ-5A prepared in Example 5A to produce a catalyst sample, which was denoted as PC-5A. Its evaluation was identical to that of Example 25A, and the result was shown in Table 14.

### Example 29B

It was identical to Example 29A, except that the phosphorus-containing hierarchical molecular sieve PZ-5A was replaced with PZ-5B prepared in Example 5B to produce a catalyst sample, which was denoted as PC-5B. Its evaluation was identical to that of Example 29A, and the result was shown in Table 14.

### Comparative Example 29A

It was identical to Example 29A, except that the phosphorus-containing hierarchical molecular sieve PZ-5A was replaced with the comparative sample DZ-5A of Comparative Example 5A to produce a catalyst comparative sample, which was denoted as DC-5A. Its evaluation was identical to that of Example 29A, and the result was shown in Table 14.

### Comparative Example 29B

It was identical to Example 29A, except that the phosphorus-containing hierarchical molecular sieve PZ-5A was replaced with the comparative sample DZ-5B of Comparative Example 2B to produce a catalyst comparative sample, which was denoted as DC-5B. Its evaluation was identical to that of Example 29A, and the result was shown in Table 14.

### Example 30A

It was identical to Example 25A, except that the phosphorus-containing hierarchical molecular sieve PZ-1A was replaced with the PZ-6A prepared in Example 6A to produce a catalyst sample, which was denoted as PC-6A. Its evaluation was identical to that of Example 25A, and the result was shown in Table 14.

### Example 30B

It was identical to Example 30A, except that the phosphorus-containing hierarchical molecular sieve PZ-6A was replaced with PZ-6B prepared in Example 6B to produce a catalyst sample, which was denoted as PC-6B. Its evaluation was identical to that of Example 30A, and the result was shown in Table 14.

### Comparative Example 30A

It was identical to Example 30A, except that the phosphorus-containing hierarchical molecular sieve PZ-6A was replaced with the comparative sample DZ-6A of Comparative Example 6A to produce a catalyst comparative sample, which was denoted as DC-6A. Its evaluation was identical to that of Example 30A, and the result was shown in Table 14.

### Comparative Example 30B

It was identical to Example 30A, except that the phosphorus-containing hierarchical molecular sieve PZ-6A was replaced with the comparative sample DZ-6B of Comparative Example 6B to produce a catalyst comparative sample, which was denoted as DC-6B. Its evaluation was identical to that of Example 30A, and the result was shown in Table 14.

### Example 31A

It was identical to Example 25A, except that the phosphorus-containing hierarchical molecular sieve PZ-1A was replaced with PZ-7A prepared in Example 7A to produce a catalyst sample, which was denoted as PC-7A. Its evaluation was identical to that of Example 25A, and the result was shown in Table 14.

### Example 31B

It was identical to Example 31A, except that the phosphorus-containing hierarchical molecular sieve PZ-7A was replaced with PZ-7B prepared in Example 7B to produce a catalyst sample, which was denoted as PC-7B. Its evaluation was identical to that of Example 31A, and the result was shown in Table 14.

### Comparative Example 31A

It was identical to Example 31A, except that the phosphorus-containing hierarchical molecular sieve PZ-7A was replaced with the comparative sample DZ-7A of Comparative Example 7A to produce a catalyst comparative sample, which was denoted as DC-7A. Its evaluation was identical to that of Example 31A, and the result was shown in Table 14.

### Comparative Example 31B

It was identical to Example 31A, except that the phosphorus-containing hierarchical molecular sieve PZ-7A was replaced with the comparative sample DZ-7B of Comparative Example 7B to produce a catalyst comparative sample, which was denoted as DC-7B. Its evaluation was identical to that of Example 31A, and the result was shown in Table 14.

### Example 32A

It was identical to Example 25A, except that the phosphorus-aluminum inorganic binder was replaced with Binder 2 prepared in Example 9 to produce a catalyst, which was denoted as PC-8A. Its evaluation was identical to that of Example 25A, and the result was shown in Table 14.

### Example 32B

It was identical to Example 25B, except that the phosphorus-aluminum inorganic binder was replaced with Binder 2 prepared in Example 9 to produce a catalyst, which was denoted as PC-8B. Its evaluation was identical to that of Example 25A, and the result was shown in Table 14.

### Example 33A

It was identical to Example 25A, except that the phosphorus-aluminum inorganic binder was replaced with Binder 3 prepared in Example 10 to produce a catalyst, which was denoted as PC-9A. Its evaluation was identical to that of Example 25A, and the result was shown in Table 14.

### Example 33B

It was identical to Example 25B, except that the phosphorus-aluminum inorganic binder was replaced with Binder 3 prepared in Example 10 to produce a catalyst, which was denoted as PC-9B. Its evaluation was identical to that of Example 25A, and the result was shown in Table 14.

### Example 34A

It was identical to Example 25A, except that the phosphorus-aluminum inorganic binder was replaced with Binder 4 prepared in Example 11 to produce a catalyst, which was denoted as PC-10A. Its evaluation was identical to that of Example 25A, and the result was shown in Table 14.

### Example 34B

It was identical to Example 25B, except that the phosphorus-aluminum inorganic binder was replaced with Binder 4 prepared in Example 11 to produce a catalyst, which was denoted as PC-10B. Its evaluation was identical to that of Example 25A, and the result was shown in Table 14.

### Example 35A

It was identical to Example 25A,, except that the phosphorus-containing hierarchical ZSM-5 molecular sieve sample PZ-1A (35 wt%), PSRY (10 wt%), kaolin (18 wt%), the phosphorus-aluminum inorganic binder, Binder 3 (22 wt%), pseudo-boehmite (10 wt%), and alumina sol (5 wt%) were used to produce a catalyst, which was denoted as_PC-11A. Its evaluation was identical to that of Example 25A, and the result was shown in Table 14.

### Example 35B

It was identical to Example 35A, except that PZ-1A was replaced with PZ-1B to produce a catalyst, which was denoted as_PC-11B. Its evaluation was identical to that of Example 25A, and the result was shown in Table 14.

### Comparative Example 35A

It was identical to Example 35A, except that PZ-1A was replaced with DZ-1A to produce a catalyst comparative sample, which was denoted as DC-11A. Its evaluation was identical to that of Example 25A, and the result was shown in Table 14.

### Comparative Example 35B

It was identical to Example 35A, except that PZ-1A was replaced with DZ-1B to produce a catalyst comparative sample, which was denoted as DC-11B. Its evaluation was identical to that of Example 25A, and the result was shown in Table 14.

### Example 36A

It was identical to Example 25A,, except that the phosphorus-containing hierarchical ZSM-5 molecular sieve sample PZ-2A (30 wt%), PSRY (16 wt%), kaolin (22 wt%), the phosphorus-aluminum inorganic binder, Binder 4 (16 wt%), pseudo-boehmite (6 wt%), and silica sol (10 wt%) were used to produce a catalyst, which was denoted as_PC-12A. Its evaluation was identical to that of Example 25A, and the result was shown in Table 14.

### Example 36B

It was identical to Example 36A, except that PZ-2A was replaced with PZ-2B to produce a catalyst, which was denoted as_PC-12B. Its evaluation was identical to that of Example 25A, and the result was shown in Table 14.

### Comparative Example 36A

It was identical to Example 36A, except that PZ-2A was replaced with DZ-2A to produce a catalyst comparative sample, which was denoted as DC-12A. Its evaluation was identical to that of Example 25A, and the result was shown in Table 14.

### Comparative Example 36B

It was identical to Example 36A, except that PZ-2A was replaced with DZ-2B to produce a catalyst comparative sample, which was denoted as DC-12B. Its evaluation was identical to that of Example 25A, and the result was shown in Table 14.

### Example 37A

The binder, alumina sol was mixed with kaolin, and decationized water was added to form a slurry with a solid content of 30 wt%. The slurry was stirred well, and adjused with hydrochloric acid to the pH of 2.8. The slurry was allowed to stand at 55 °C to age for 1 hour. Then the phosphorus-containing hierarchical ZSM-5 molecular sieve PZ-1A prepared in Example 1A and Y zeolite (PSRY) were added to form a catalyst slurry with a solid content of 35 wt%. The slurry was continuously stirred and spray-dried to form catalyst microspheres. The catalyst microspheres were then calcined at 500°C for 1 hour, washed with ammonium sulfate at 60°C (wherein, ammonium sulfate:catalyst microspheres:water=0.5:1:10) to the sodium oxide content of less than 0.25 wt%, followed by rinsed with deionized water and filtered, and then dried at 110°C to produce a catalyst, which was denoted as PC-13A. The catalyst composition comprised: the phosphorus-containing hierarchical ZSM-5 molecular sieve PZ-1A, 40%; PSRY zeolite, 10%; kaolin, 25%; and alumina sol (as Al2O3), 25%. Its evaluation was identical to that of Example 25A, and the result was shown in Table 14.

### Example 37B

It was identical to Example 37A, except that the phosphorus-containing hierarchical molecular sieve PZ-1A was replaced with PZ-1B to produce a catalyst sample, which was denoted as PC-13B. Its evaluation was identical to that of Example 25A, and the result was shown in Table 14.

### Comparative Example 37A

It was identical to Example 37A, except that the phosphorus-containing hierarchical ZSM-5 molecular sieve PZ-1A was replaced with the comparative sample DZ-1A from Comparative Example 1A to produce a catalyst comparative sample, which was denoted as DC-13A. Its evaluation was identical to that of Example 25A, and the result was shown in Table 14.

### Comparative Example 37B

It was identical to Example 37A, except that the phosphorus-containing hierarchical molecular sieve PZ-1A was replaced with the comparative sample DZ-1B of Comparative Example 1B to produce a catalyst comparative sample, which was denoted as DC-13B. Its evaluation was identical to that of Example 25A, and the result was shown in Table 14.

### Example 38A

It was identical to Example 25A, except that the Y zeolite was HRY-1 to produce a catalyst sample, which was denoted as PC-14A. Its evaluation was identical to that of Example 25A, and the result was shown in Table 14.

### Example 38B

It was identical to Example 25B, except that the Y zeolite was HRY-1 to produce a catalyst sample, which was denoted as PC-14B. Its evaluation was identical to that of Example 25A, and the result was shown in Table 14.

### Comparative Example 38A

It was identical to Example 38A, except that The the phosphorus-containing hierarchical ZSM-5 molecular sieve sample PZ-1A was replaced with the comparative sample DZ-1A from Comparative Example 1A to produce a catalyst comparative sample, which was denoted as DC-14A. Its evaluation was identical to that of Example 25A, and the result was shown in Table 14.

### Comparative Example 38B

It was identical to Example 38A, except that _ the phosphorus-containing hierarchical ZSM-5 molecular sieve sample PZ-1A was replaced with the comparative sample DZ-1B from Comparative Example 1B to produce a catalyst comparative sample, which was denoted as DC-14B. Its evaluation was identical to that of Example 25A, and the result was shown in Table 14.

### Example 39A

It was identical to Example 25A, except that _ the PSRY zeolite was replaced with USY to produce a catalyst sample, which was denoted as PC-15A. Its evaluation was identical to that of Example 25A, and the result was shown in Table 14.

### Example 39B

It was identical to Example 25B, except that _ the PSRY zeolite was replaced with USY to produce a catalyst sample, which was denoted as PC-15B. Its evaluation was identical to that of Example 25A, and the result was shown in Table 14.

### Comparative Example 39A

It was identical to Example 39A, except that The phosphorus-containing hierarchical ZSM-5 molecular sieve sample PZ-1A was replaced with the comparative sample DZ-1A from Comparative Example 1A to produce a catalyst comparative sample, which was denoted as DC-15A. Its evaluation was identical to that of Example 25A, and the result was shown in Table 14.

### Comparative Example 39B

It was identical to Example 39A, except that _ the phosphorus-containing hierarchical ZSM-5 molecular sieve sample PZ-1A was replaced with the comparative sample DZ-1B from Comparative Example 1B to produce a catalyst comparative sample, which was denoted as DC-15B. Its evaluation was identical to that of Example 25A, and the result was shown in Table 14.

**Table 14**

| Item | Liquefied gas | Ethylene yield | Propylene yield | Content of equilibrium catalyst in catalyst |
|---|---|---|---|---|
| Blank test example | 18.54 | 1.39 | 8.05 | 100% equilibrium catalyst |
| Example 25A | 33.54 | 3.68 | 14.63 | 90% equilibrium catalyst |
| Comparative Example 25A | 22.69 | 2.93 | 10.32 | 90% equilibrium catalyst |
| Example 25B | 35.87 | 4.01 | 16.43 | 90% equilibrium catalyst |
| Comparative Example 25B | 24.69 | 3.13 | 10.98 | 90% equilibrium catalyst |
| Example 26A | 34.69 | 3.92 | 15.73 | 90% equilibrium catalyst |
| Comparative Example 26A | 25.45 | 3.12 | 11.02 | 90% equilibrium catalyst |
| Example 26B | 39.89 | 4.15 | 17.32 | 90% equilibrium catalyst |
| Comparative Example 26B | 27.69 | 3.32 | 11.82 | 90% equilibrium catalyst |
| Example 27A | 35.73 | 4.03 | 16.12 | 90% equilibrium catalyst |
| Comparative Example 27A | 25.9 | 3.21 | 11.45 | 90% equilibrium catalyst |
| Example 27B | 40.12 | 4.23 | 17.89 | 90% equilibrium catalyst |
| Comparative Example 27B | 28.31 | 3.34 | 12.02 | 90% equilibrium catalyst |
| Example 28A | 37.36 | 4.21 | 17.15 | 90% equilibrium catalyst |
| Comparative Example 28A | 27.46 | 3.74 | 12.16 | 90% equilibrium catalyst |
| Example 28B | 45.16 | 4.56 | 18.67 | 90% equilibrium catalyst |
| Comparative Example 28B | 29.45 | 3.89 | 12.87 | 90% equilibrium catalyst |
| Example 29A | 36.12 | 4.12 | 16.34 | 90% equilibrium catalyst |
| Comparative Example 29A | 25.8 | 3.65 | 11.45 | 90% equilibrium catalyst |
| Example 29B | 41.43 | 4.34 | 17.59 | 90% equilibrium catalyst |
| Comparative Example 29B | 27.31 | 3.72 | 11.98 | 90% equilibrium catalyst |
| Example 30A | 35.16 | 4.01 | 16.02 | 90% equilibrium catalyst |
| Comparative Example 30A | 24.68 | 3.43 | 10.87 | 90% equilibrium catalyst |
| Example 30B | 38.53 | 4.12 | 17.11 | 90% equilibrium catalyst |
| Comparative Example 30B | 26.45 | 3.63 | 11.21 | 90% equilibrium catalyst |
| Example 31A | 34.87 | 3.89 | 15.74 | 90% equilibrium catalyst |
| Comparative Example 31A | 23.87 | 3.21 | 10.14 | 90% equilibrium catalyst |
| Example 31B | 37.59 | 4.01 | 17.02 | 90% equilibrium catalyst |
| Comparative Example 31B | 26.12 | 3.45 | 11.04 | 90% equilibrium catalyst |
| Example 32A | 32.54 | 3.34 | 13.58 | 90% equilibrium catalyst |
| Example 32B | 34.69 | 3.87 | 15.89 | 90% equilibrium catalyst |
| Example 33A | 33.12 | 3.54 | 14.12 | 90% equilibrium catalyst |
| Example 33B | 35.12 | 3.89 | 15.79 | 90% equilibrium catalyst |
| Example 34A | 32.9 | 3.45 | 13.89 | 90% equilibrium catalyst |
| Example 34B | 34.89 | 3.45 | 15.17 | 90% equilibrium catalyst |
| Example 35A | 30.19 | 3.22 | 12.44 | 90% equilibrium catalyst |
| Comparative Example 35A | 20.42 | 2.56 | 8.77 | 90% equilibrium catalyst |
| Example 35B | 32.28 | 3.51 | 13.97 | 90% equilibrium catalyst |
| Comparative Example 35B | 22.22 | 2.74 | 9.33 | 90% equilibrium catalyst |
| Example 36A | 31.22 | 3.43 | 13.37 | 90% equilibrium catalyst |
| Comparative Example 36A | 22.91 | 2.73 | 9.37 | 90% equilibrium catalyst |
| Example 36B | 35.9 | 3.63 | 14.72 | 90% equilibrium catalyst |
| Comparative Example 36B | 24.92 | 2.91 | 10.05 | 90% equilibrium catalyst |
| Example 37A | 32.2 | 3.46 | 13.61 | 90% equilibrium catalyst |
| Comparative Example 37A | 21.78 | 2.75 | 9.6 | 90% equilibrium catalyst |
| Example 37B | 34.44 | 3.77 | 15.28 | 90% equilibrium catalyst |
| Comparative Example 37B | 23.7 | 2.94 | 10.21 | 90% equilibrium catalyst |
| Example 38A | 34.55 | 3.75 | 15.22 | 90% equilibrium catalyst |
| Comparative Example 38A | 23.37 | 2.99 | 10.73 | 90% equilibrium catalyst |
| Example 38B | 36.95 | 4.09 | 17.09 | 90% equilibrium catalyst |
| Comparative Example 38B | 25.43 | 3.19 | 11.42 | 90% equilibrium catalyst |
| Example 39A | 31.86 | 3.42 | 13.46 | 90% equilibrium catalyst |
| Comparative Example 39A | 21.56 | 2.72 | 9.49 | 90% equilibrium catalyst |
| Example 39B | 34.08 | 3.73 | 15.12 | 90% equilibrium catalyst |
| Comparative Example 39B | 23.46 | 2.91 | 10.1 | 90% equilibrium catalyst |

The following Examples illustrated the catalytic cracking auxiliaries of the present invention, and the following Comparative Examples illustrated the comparative catalytic cracking auxiliaries.

### Example 12C

Phosphorus-modified molecular sieve PZ-1C prepared in Example 1C, kaolin and pseudo-boehmite were taken, and decationized water and alumina sol were added. The mixture was vigorously mixed and stirred for 120 minutes to produce a slurry having a solid content of 30 wt%. Hydrochloric acid was added to adjust the pH of the slurry to 3.0, and then the vigorously mixing and stirring was continued for 45 minutes. Then the phosphorus-aluminum inorganic binder, Binder 1 prepared in Example 8 was added, and the mixture was stirred for 30 minutes. The resulting slurry was spray-dried to produce microspheres. The microspheres were calcined at 500°C for 1 hour to produce a catalytic cracking auxiliary sample, which was denoted as PA-1C. Its composition comprised: the molecular sieve, 50%; PSRY zeolite, 23%; Binder 1, 18%; pseudo-boehmite (as Al2O3), 5% and alumina sol (as Al2O3), 4%.

A fixed bed micro-reaction apparatus was used to evaluate the reaction performances of a 100% equilibrium catalyst and an equilibrium catalyst to which Example 12C was incorporated, in order to illustrate the catalytic cracking reaction effect of the catalytic cracking auxiliary provided in the present disclosure.

The auxiliary PA-1C was subjected to an aging treatment at 800°C, 100% water vapor atmosphere for 17 hours. The aging-treated PA-1C and an industrial FCC equilibrium catalyst (brand: DVR-3, and having a light oil micro-activity of 63) were mixed in a ratio of 10:90. A mixture of the equilibrium catalyst and the auxiliary was loaded into the fixed-bed micro-reaction reactor, and the feedstock oil shown in Table 12 was catalytically cracked. _The evaluation condition included the reaction temperature of 620 °C, the regeneration temperature of 620 °C, and the catalyst-oil ratio of 3.2. Table 15 provided the reaction results, including the blank test agent.

### Example 12D

It was identical to Example 12C, except that the phosphorus-modified molecular sieve PZ-1C was replaced with the phosphorus-modified molecular sieve PZ-1D prepared in Example 1D to produce a catalytic cracking auxiliary sample, which was denoted as PA-1D. Its evaluation was identical to that of Example 12C, and the result was shown in Table 15.

### Comparative Example 12C

It was identical to Example 12C, except that the phosphorus-modified molecular sieve PZ-1C was replaced with the comparative sample DZ-1C from Comparative Example 1C to produce a catalytic cracking auxiliary comparative sample, which was denoted as DA-1C. Its evaluation was identical to that of Example 12C, and the result was shown in Table 15.

### Comparative Example 12D

It was identical to Example 12C, except that the phosphorus-modified molecular sieve PZ-1C was replaced with the comparative sample DZ-1D from Comparative Example 1D to produce a catalytic cracking auxiliary comparative sample, which was denoted as DA-1D. Its evaluation was identical to that of Example 12C, and the result was shown in Table 15.

### Example 13C

It was identical to Example 12C, except that the phosphorus-modified molecular sieve PZ-1C was replaced with the phosphorus-modified molecular sieve PZ-2C prepared in Example 2C to produce a catalytic cracking auxiliary sample, which was denoted as PA-2C. Its evaluation was identical to that of Example 12C, and the result was shown in Table 15.

### Example 13D

It was identical to Example 13C, except that the phosphorus-modified molecular sieve PZ-2C was replaced with the phosphorus-modified molecular sieve PZ-2D prepared in Example 2D to produce a catalytic cracking auxiliary sample, which was denoted as PA-2D. Its evaluation was identical to that of Example 13C, and the result was shown in Table 15.

### Comparative Example 13C

It was identical to Example 13C, except that the phosphorus-modified molecular sieve PZ-2C was replaced with the comparative sample DZ-2C from Comparative Example 2C to produce a catalytic cracking auxiliary comparative sample, which was denoted as DA-2C. Its evaluation was identical to that of Example 13C, and the result was shown in Table 15.

### Comparative Example 13D

It was identical to Example 13C, except that the phosphorus-modified molecular sieve PZ-2C was replaced with the comparative sample DZ-2D from Comparative Example 2D to produce a catalytic cracking auxiliary comparative sample, which was denoted as DA-2D. Its evaluation was identical to that of Example 13C, and the result was shown in Table 15.

### Example 14C

It was identical to Example 12C, except that the phosphorus-modified molecular sieve PZ-1C was replaced with the phosphorus-modified molecular sieve PZ-3C prepared in Example 3C to produce a catalytic cracking auxiliary sample, which was denoted as PA-3C. Its evaluation was identical to that of Example 12C, and the result was shown in Table 15.

### Example 14D

It was identical to Example 14C, except that the phosphorus-modified molecular sieve PZ-3C was replaced with the phosphorus-modified molecular sieve PZ-3D prepared in Example 3D to produce a catalytic cracking auxiliary sample, which was denoted as PA-3D. Its evaluation was identical to that of Example 14C, and the result was shown in Table 15.

### Comparative Example 14C

It was identical to Example 14C, except that the phosphorus-modified molecular sieve PZ-3C was replaced with the comparative sample DZ-3C from Comparative Example 3C to produce a catalytic cracking auxiliary comparative sample, which was denoted as DA-3C. Its evaluation was identical to that of Example 14C, and the result was shown in Table 15.

### Comparative Example 14D

It was identical to Example 14C, except that the phosphorus-modified molecular sieve PZ-3C was replaced with the comparative sample DZ-3D from Comparative Example 3D to produce a catalytic cracking auxiliary comparative sample, which was denoted as DA-3D. Its evaluation was identical to that of Example 14C, and the result was shown in Table 15.

### Example 15C

It was identical to Example 12C, except that the phosphorus-modified molecular sieve PZ-1C was replaced with the phosphorus-modified molecular sieve PZ-4C prepared in Example 4C to produce a catalytic cracking auxiliary sample, which was denoted as PA-4C. Its evaluation was identical to that of Example 12C, and the result was shown in Table 15.

### Example 15D

It was identical to Example 15C, except that the phosphorus-modified molecular sieve PZ-4C was replaced with the phosphorus-modified molecular sieve PZ-4D prepared in Example 4D to produce a catalytic cracking auxiliary sample, which was denoted as PA-4D. Its evaluation was identical to that of Example 15C, and the result was shown in Table 15.

### Comparative Example 15C

It was identical to Example 15C, except that the phosphorus-modified molecular sieve PZ-4C was replaced with the comparative sample DZ-4C from Comparative Example 2C to produce a catalytic cracking auxiliary comparative sample, which was denoted as DA-4C. Its evaluation was identical to that of Example 15C, and the result was shown in Table 15.

### Comparative Example 15D

It was identical to Example 15C, except that the phosphorus-modified molecular sieve PZ-4C was replaced with the comparative sample DZ-4D from Comparative Example 4D to produce a catalytic cracking auxiliary comparative sample, which was denoted as DA-4D. Its evaluation was identical to that of Example 15C, and the result was shown in Table 15.

### Example 16C

It was identical to Example 12C, except that the phosphorus-modified molecular sieve PZ-1C was replaced with the phosphorus-modified molecular sieve PZ-5C prepared in Example 5C to produce a catalytic cracking auxiliary sample, which was denoted as PA-5C. Its evaluation was identical to that of Example 12C, and the result was shown in Table 15.

### Example 16D

It was identical to Example 16C, except that the phosphorus-modified molecular sieve PZ-5C was replaced with the phosphorus-modified molecular sieve PZ-5D prepared in Example 5D to produce a catalytic cracking auxiliary sample, which was denoted as PA-5D. Its evaluation was identical to that of Example 16C, and the result was shown in Table 15.

### Comparative Example 16C

It was identical to Example 16C, except that the phosphorus-modified molecular sieve PZ-5C was replaced with the comparative sample DZ-5C from Comparative Example 5C to produce a catalytic cracking auxiliary comparative sample, which was denoted as DA-5C. Its evaluation was identical to that of Example 16C, and the result was shown in Table 15.

### Comparative Example 16D

It was identical to Example 16C, except that the phosphorus-modified molecular sieve PZ-5C was replaced with the comparative sample DZ-5D from Comparative Example 5D to produce a catalytic cracking auxiliary comparative sample, which was denoted as DA-5D. Its evaluation was identical to that of Example 16C, and the result was shown in Table 15.

### Example 17C

It was identical to Example 12C, except that the phosphorus-modified molecular sieve PZ-1C was replaced with the phosphorus-modified molecular sieve PZ-6C prepared in Example 6C to produce a catalytic cracking auxiliary sample, which was denoted as PA-6C. Its evaluation was identical to that of Example 12C, and the result was shown in Table 15.

### Example 17D

It was identical to Example 17C, except that the phosphorus-modified molecular sieve PZ-6C was replaced with the phosphorus-modified molecular sieve PZ-6D prepared in Example 6D to produce a catalytic cracking auxiliary sample, which was denoted as PA-6D. Its evaluation was identical to that of Example 17C, and the result was shown in Table 15.

### Comparative Example 17C

It was identical to Example 17C, except that the phosphorus-modified molecular sieve PZ-6C was replaced with the comparative sample DZ-6C from Comparative Example 6C to produce a catalytic cracking auxiliary comparative sample, which was denoted as DA-6C. Its evaluation was identical to that of Example 17C, and the result was shown in Table 15.

### Comparative Example 17D

It was identical to Example 17C, except that the phosphorus-modified molecular sieve PZ-6C was replaced with the comparative sample DZ-6D from Comparative Example 6D to produce a catalytic cracking auxiliary comparative sample, which was denoted as DA-6D. Its evaluation was identical to that of Example 17C, and the result was shown in Table 15.

### Example 18C

It was identical to Example 12C, except that the phosphorus-modified molecular sieve PZ-1C was replaced with the phosphorus-modified molecular sieve PZ-7C prepared in Example 7C to produce a catalytic cracking auxiliary sample, which was denoted as PA-7C. Its evaluation was identical to that of Example 12C, and the result was shown in Table 15.

### Example 18D

It was identical to Example 18C, except that the phosphorus-modified molecular sieve PZ-7C was replaced with the phosphorus-modified molecular sieve PZ-7D prepared in Example 7D to produce a catalytic cracking auxiliary sample, which was denoted as PA-7D. Its evaluation was identical to that of Example 18C, and the result was shown in Table 15.

### Comparative Example 18C

It was identical to Example 18C, except that the phosphorus-modified molecular sieve PZ-7C was replaced with the comparative sample DZ-7C from Comparative Example 7C to produce a catalytic cracking auxiliary comparative sample, which was denoted as DA-7C. Its evaluation was identical to that of Example 18C, and the result was shown in Table 15.

### Comparative Example 18D

It was identical to Example 18C, except that the phosphorus-modified molecular sieve PZ-7C was replaced with the comparative sample DZ-7D from Comparative Example 7D to produce a catalytic cracking auxiliary comparative sample, which was denoted as DA-7D. Its evaluation was identical to that of Example 18C, and the result was shown in Table 15.

### Example 19C

It was identical to Example 12C, except that _the phosphorus-aluminum inorganic binder was replaced with Binder 2 prepared in Example 9_to produce a catalytic cracking auxiliary, which was denoted as PA-8C. Its evaluation was identical to that of Example 12C, and the result was shown in Table 15.

### Example 19D

It was identical to Example 12D, except that _the phosphorus-aluminum inorganic binder was replaced with Binder 2 prepared in Example 9_ to produce a catalytic cracking auxiliary, which was denoted as PA-8D. Its evaluation was identical to that of Example 12C, and the result was shown in Table 15.

### Example 20C

It was identical to Example 12C, except that _the phosphorus-aluminum inorganic binder was replaced with Binder 3 prepared in Example 10_to produce a catalytic cracking auxiliary, which was denoted as PA-9C. Its evaluation was identical to that of Example 12C, and the result was shown in Table 15.

### Example 20D

It was identical to Example 12D, except that _the phosphorus-aluminum inorganic binder was replaced with Binder 3 prepared in Example 10_to produce a catalytic cracking auxiliary, which was denoted as PA-9D. Its evaluation was identical to that of Example 12C, and the result was shown in Table 15.

### Example 21C

It was identical to Example 12C, except that _the phosphorus-aluminum inorganic binder was replaced with Binder 4 prepared in Example 11_to produce a catalytic cracking auxiliary, which was denoted as PA-10C. Its evaluation was identical to that of Example 12C, and the result was shown in Table 15.

### Example 21D

It was identical to Example 12D, except that _the phosphorus-aluminum inorganic binder was replaced with Binder 4 prepared in Example 11 to produce a catalytic cracking auxiliary, which was denoted as PA-10D. Its evaluation was identical to that of Example 12C, and the result was shown in Table 15.

### Example 22C

It was identical to Example 12C, except that the phosphorus-modified ZSM-5 molecular sieve sample PZ-1C (45 wt%), kaolin (18 wt%), the phosphorus-aluminum inorganic binder, Binder 3 (22 wt%), pseudo-boehmite (10 wt%), and alumina sol (5 wt%) were used to produce a catalytic cracking auxiliary, which was denoted as_PA-11C. Its evaluation was identical to that of Example 12C, and the result was shown in Table 15.

### Example 22D

It was identical to Example 22C, except that PZ-1C was replaced with PZ-1D to produce a catalytic cracking auxiliary, which was denoted as PA-11D. Its evaluation was identical to that of Example 12C, and the result was shown in Table 15.

### Comparative Example 22C

It was identical to Example 22C, except that PZ-1C was replaced with DZ-1C to produce a catalytic cracking auxiliary comparative sample, which was denoted as DA-11C. Its evaluation was identical to that of Example 12C, and the result was shown in Table 15.

### Comparative Example 22D

It was identical to Example 22C, except that PZ-1C was replaced with DZ-1D to produce a catalytic cracking auxiliary comparative sample, which was denoted as DA-11D. Its evaluation was identical to that of Example 12C, and the result was shown in Table 15.

### Example 23C

It was identical to Example 12C, except that the phosphorus-modified ZSM-5 molecular sieve sample PZ-2C (40 wt%), kaolin (24 wt%), the phosphorus-aluminum inorganic binder, Binder 4 (20 wt%), pseudo-boehmite (6 wt%), and silica sol (10 wt%) were used to produce a catalytic cracking auxiliary, which was denoted asPA-12C. Its evaluation was identical to that of Example 12C, and the result was shown in Table 15.

### Example 23D

It was identical to Example 23C, except that PZ-2C was replaced with PZ-2D to produce a catalytic cracking auxiliary, which was denoted as PA-12D. Its evaluation was identical to that of Example 12C, and the result was shown in Table 15.

### Comparative Example 23C

It was identical to Example 23C, except that PZ-2C was replaced with DZ-2C to produce a catalytic cracking auxiliary comparative sample, which was denoted as DA-12C. Its evaluation was identical to that of Example 12C, and the result was shown in Table 15.

### Comparative Example 23D

It was identical to Example 23C, except that PZ-2C was replaced with DZ-2D to produce a catalytic cracking auxiliary comparative sample, which was denoted as DA-12D. Its evaluation was identical to that of Example 12C, and the result was shown in Table 15.

### Example 24C

The binder, alumina sol was mixed with kaolin, and decationized water was added to form a slurry with a solid content of 30 wt%. The slurry was stirred well, and adjused with hydrochloric acid to the pH of 2.8. The slurry was allowed to stand at 55°C to age for 1 hour. Then the phosphorus-modified molecular sieve PZ-1C prepared in Example 1C was added to form a catalyst slurry with a solid content of 35 wt%. The slurry was continuously stirred and spray-dried to form catalyst microspheres. The catalyst microspheres were then calcined at 500°C for 1 hour, washed with ammonium sulfate at 60°C (wherein, ammonium sulfate:catalyst microspheres:water=0.5:1:10) to the sodium oxide content of less than 0.25 wt%, followed by rinsed with deionized water and filtered, and then dried at 110°C to produce a catalyst PA-13C. Its composition comprised: the molecular sieve, 50%; kaolin, 23%; and alumina sol (as Al2O3): 27%. Its evaluation was identical to that of Example 12C, and the result was shown in Table 15.

### Example 24D

It was identical to Example 24C, except that the phosphorus-modified molecular sieve PZ-1C was replaced with the phosphorus-modified molecular sieve PZ-1D prepared in Example 1D to produce a catalytic cracking auxiliary sample, which was denoted as PA-13D. Its evaluation was identical to that of Example 12C, and the result was shown in Table 15.

### Comparative Example 24C

It was identical to Example 24C, except that the phosphorus-modified molecular sieve PZ-1C was replaced with the comparative sample DZ-1C from Comparative Example 1C to produce a catalytic cracking auxiliary comparative sample, which was denoted as DA-13C. Its evaluation was identical to that of Example 12C, and the result was shown in Table 15.

### Comparative Example 24D

It was identical to Example 24C, except that the phosphorus-modified molecular sieve PZ-1C was replaced with the comparative sample DZ-1D from Comparative Example 1D to produce a catalytic cracking auxiliary comparative sample, which was denoted as DA-13D. Its evaluation was identical to that of Example 12C, and the result was shown in Table 15.

**Table 15**

| Item | Catalyst Mixture | | Liquefied gas | Ethylene yield | Propylene yield |
|---|---|---|---|---|---|
| Example 12C | 10% PA-1C | 90% equilibrium catalyst | 35.63 | 4.01 | 17.87 |
| Comparative Example 12C | 10% DA-1C | 90% equilibrium catalyst | 28.79 | 2.98 | 12.81 |
| Example 12D | 10% PA-1D | 90% equilibrium catalyst | 42.56 | 4.89 | 19.86 |
| Comparative Example 12D | 10% DA-1D | 90% equilibrium catalyst | 30.02 | 3.15 | 13.78 |
| Example 13C | 10% PA-2C | 90% equilibrium catalyst | 43.15 | 4.68 | 18.69 |
| Comparative Example 13C | 10% DA-2C | 90% equilibrium catalyst | 30.5 | 3.14 | 13.84 |
| Example 13D | 10% PA-2D | 90% equilibrium catalyst | 47.52 | 5.21 | 19.48 |
| Comparative Example 13D | 10% DA-2D | 90% equilibrium catalyst | 34.1 | 3.58 | 14.62 |
| Example 14C | 10%PA-3C | 90% equilibrium catalyst | 40.12 | 4.45 | 16.84 |
| Comparative Example 14C | 10% DA-3C | 90% equilibrium catalyst | 28.91 | 3.1 | 13.12 |
| Example 14D | 10% PA-3D | 90% equilibrium catalyst | 43.68 | 4.89 | 18.15 |
| Comparative Example 14D | 10% DA-3D | 90% equilibrium catalyst | 33.75 | 3.42 | 13.98 |
| Example 15C | 10% PA-4C | 90% equilibrium catalyst | 42.13 | 4.51 | 17.49 |
| Comparative Example 15C | 10% DA-4C | 90% equilibrium catalyst | 30.89 | 3.26 | 14.26 |
| Example 15D | 10% PA-4D | 90% equilibrium catalyst | 45.87 | 5.01 | 18.42 |
| Comparative Example 15D | 10% DA-4D | 90% equilibrium catalyst | 35.03 | 3.47 | 14.89 |
| Example 16C | 10% PA-5C | 90% equilibrium catalyst | 36.75 | 4.01 | 15.16 |
| Comparative Example 16C | 10% DA-5C | 90% equilibrium catalyst | 25.17 | 3.42 | 11.03 |
| Example 16D | 10% PA-5D | 90% equilibrium catalyst | 40.13 | 4.36 | 16.84 |
| Comparative Example 16D | 10% DA-5D | 90% equilibrium catalyst | 27.2 | 3.64 | 12.35 |
| Example 17C | 10% PA-6C | 90% equilibrium catalyst | 41.49 | 4.24 | 17.14 |
| Comparative Example 17C | 10% DA-6C | 90% equilibrium catalyst | 31.02 | 3.26 | 14.81 |
| Example 17D | 10% PA-6D | 90% equilibrium catalyst | 45.81 | 5.01 | 18.19 |
| Comparative Example 17D | 10% DA-6D | 90% equilibrium catalyst | 32.84 | 3.64 | 15.64 |
| Example 18C | 10% PA-7C | 90% equilibrium catalyst | 30.24 | 3.21 | 12.46 |
| Comparative Example 18C | 10% DA-7C | 90% equilibrium catalyst | 20.64 | 3.36 | 10.12 |
| Example 18D | 10% PA-7D | 90% equilibrium catalyst | 35.12 | 4.01 | 15.12 |
| Comparative Example 18D | 10% DA-7D | 90% equilibrium catalyst | 22.35 | 3.51 | 11.45 |
| Example 19C | 10% PA-8C | 90% equilibrium catalyst | 33.61 | 3.84 | 17.51 |
| Example 19D | 10% PA-8D | 90% equilibrium catalyst | 41.78 | 4.24 | 18.61 |
| Example 20C | 10% PA-9C | 90% equilibrium catalyst | 33.14 | 3.78 | 17.48 |
| Example 20D | 10% PA-9D | 90% equilibrium catalyst | 41.01 | 4.01 | 18.12 |
| Example 21C | 10%PA-10C | 90% equilibrium catalyst | 33.24 | 3.68 | 17.12 |
| Example 21D | 10%PA-10D | 90% equilibrium catalyst | 41.16 | 4.03 | 18.1 |
| Example 22C | 10% PA-11C | 90% equilibrium catalyst | 33.12 | 3.45 | 16.12 |
| Example 22C | 10%DA-11C | 90% equilibrium catalyst | 24.18 | 2.35 | 11.12 |
| Example 22D | 10% PA-11D | 90% equilibrium catalyst | 38.46 | 4.02 | 18.12 |
| Example 22D | 10%DA-11D | 90% equilibrium catalyst | 26.75 | 3.01 | 12.45 |
| Example 23C | 10%PA-12C | 90% equilibrium catalyst | 36.68 | 3.88 | 15.33 |
| Example 23C | 10%DA-12C | 90% equilibrium catalyst | 25.93 | 2.61 | 11.35 |
| Example 23D | 10% PA-12D | 90% equilibrium catalyst | 40.39 | 4.32 | 15.97 |
| Example 23D | 10% DA-12D | 90% equilibrium catalyst | 28.99 | 2.97 | 11.99 |
| Example 24C | 10%PA-13C | 90% equilibrium catalyst | 33.85 | 3.73 | 16.44 |
| Comparative Example 24C | 10% DA-13C | 90% equilibrium catalyst | 27.35 | 2.77 | 11.79 |
| Example 24D | 10% PA-13D | 90% equilibrium catalyst | 40.43 | 4.55 | 18.27 |
| Comparative Example 24D | 10% DA-13D | 90% equilibrium catalyst | 28.52 | 2.93 | 12.68 |
| Blank test example | / | 100% equilibrium catalyst | 18.54 | 1.39 | 8.05 |

The following Examples illustrated the catalytic cracking catalyst of the present invention.

### Example 25C

The phosphorus-modified molecular sieve PZ-1C prepared in Example 1C, Y zeolite (PSRY zeolite), kaolin and pseudo-boehmite were taken, and decationized water and alumina sol were added. The mixture was vigorously mixed and stirred for 120 minutes to produce a slurry having a solid content of 30 wt%. Hydrochloric acid was added to adjust the pH of the slurry to 3.0, and then the vigorously mixing and stirring was continued for 45 minutes. Then the phosphorus-aluminum inorganic binder, Binder 1 prepared in Example 8 was added, and the mixture was stirred for 30 minutes. The resulting slurry was spray-dried to produce microspheres. The microspheres were calcined at 500°C for 1 hour to produce a catalytic cracking catalyst sample of the present invention, which was denoted as PC-1C. Its composition comprised: the phosphorus-modified ZSM-5 molecular sieve, 40%; PSRY zeolite, 10%; kaolin 18%, Binder 1, 18%; pseudo-boehmite (as Al2O3), 5% and alumina sol (as Al2O3), 9%. A fixed bed micro-reaction apparatus was used to evaluate the reaction performances of a 100% equilibrium catalyst and an equilibrium catalyst to which catalyst PC-1C was incorporated, in order to illustrate the catalytic cracking reaction effect.

The catalyst PC-1C was subjected to an aging treatment at 800°C, 100% water vapor atmosphere for 17 hours. The aging-treated PC-1C and an industrial FCC equilibrium catalyst (brand: DVR-3, and having a light oil micro-activity of 63) were mixed in their weight ratios 10% and 90% respectively. A mixture of the equilibrium catalyst and the catalyst was loaded into the fixed-bed micro-reaction reactor, and the feedstock oil shown in Table 12 was catalytically cracked. _The evaluation condition included the reaction temperature of 620 °C, the regeneration temperature of 620 °C, and the catalyst-oil ratio of 3.2. The reaction result was shown in Table 16.

### Example 25D

It was identical to Example 25C, except that the phosphorus-modified molecular sieve PZ-1C was replaced with the phosphorus-modified molecular sieve PZ-1D prepared in Example 1D to produce a catalyst sample, which was denoted as PC-1D. Its evaluation was identical to that of Example 25C, and the result was shown in Table 16.

### Comparative Example 25C

It was identical to Example 25C, except that the phosphorus-modified molecular sieve PZ-1C was replaced with the comparative sample DZ-1C prepared in Comparative Example 1C to produce a catalyst comparative sample, which was denoted as DC-1C. Its evaluation was identical to that of Example 25C, and the result was shown in Table 16.

### Comparative Example 25D

It was identical to Example 25C, except that the phosphorus-modified molecular sieve PZ-1C was replaced with the comparative sample DZ-1D prepared in Comparative Example 1D to produce a catalyst comparative sample, which was denoted as DC-1D. Its evaluation was identical to that of Example 25C, and the result was shown in Table 16.

### Example 26C

It was identical to Example 25C, except that the phosphorus-modified molecular sieve PZ-1C was replaced with the phosphorus-modified molecular sieve PZ-2C prepared in Example 2C to produce a catalytic cracking auxiliary sample, which was denoted as PC-2C. Its evaluation was identical to that of Example 25C, and the result was shown in Table 16.

### Example 26D

It was identical to Example 26C, except that the phosphorus-modified molecular sieve PZ-2C was replaced with the phosphorus-modified molecular sieve PZ-2D prepared in Example 2D to produce a catalytic cracking auxiliary sample, which was denoted as PC-2D. Its evaluation was identical to that of Example 26C, and the result was shown in Table 16.

### Comparative Example 26C

It was identical to Example 26C, except that the phosphorus-modified molecular sieve PZ-2C was replaced with the comparative sample DZ-2C from Comparative Example 2C to produce a catalytic cracking auxiliary comparative sample, which was denoted as DC-2C. Its evaluation was identical to that of Example 26C, and the result was shown in Table 16.

### Comparative Example 26D

It was identical to Example 26C, except that the phosphorus-modified molecular sieve PZ-2C was replaced with the comparative sample DZ-2D from Comparative Example 2D to produce a catalytic cracking auxiliary comparative sample, which was denoted as DC-2D. Its evaluation was identical to that of Example 26C, and the result was shown in Table 16.

### Example 27C

It was identical to Example 25C, except that the phosphorus-modified molecular sieve PZ-1C was replaced with the phosphorus-modified molecular sieve PZ-3C prepared in Example 3C to produce a catalytic cracking auxiliary sample, which was denoted as PC-3C. Its evaluation was identical to that of Example 25C, and the result was shown in Table 16.

### Example 27D

It was identical to Example 27C, except that the phosphorus-modified molecular sieve PZ-3C was replaced with the phosphorus-modified molecular sieve PZ-3D prepared in Example 3D to produce a catalytic cracking auxiliary sample, which was denoted as PC-3D. Its evaluation was identical to that of Example 27C, and the result was shown in Table 16.

### Comparative Example 27C

It was identical to Example 27C, except that the phosphorus-modified molecular sieve PZ-3C was replaced with the comparative sample DZ-3C from Comparative Example 3C to produce a catalytic cracking auxiliary comparative sample, which was denoted as DC-3C. Its evaluation was identical to that of Example 27C, and the result was shown in Table 16.

### Comparative Example 27D

It was identical to Example 27C, except that the phosphorus-modified molecular sieve PZ-3C was replaced with the comparative sample DZ-3D prepared in Comparative Example 3D to produce a catalyst comparative sample, which was denoted as DC-3D. Its evaluation was identical to that of Example 27C, and the result was shown in Table 16.

### Example 28C

It was identical to Example 25C, except that the phosphorus-modified molecular sieve PZ-1C was replaced with the phosphorus-modified molecular sieve PZ-4C from Example 4C to produce a catalyst sample, which was denoted as PC-4C. Its evaluation was identical to that of Example 25C, and the result was shown in Table 16.

### Example 28D

It was identical to Example 28C, except that the phosphorus-modified molecular sieve PZ-4C was replaced with the phosphorus-modified molecular sieve PZ-4D from Example 4D to produce a catalyst sample, which was denoted as PC-4D. Its evaluation was identical to that of Example 28C, and the result was shown in Table 16.

### Comparative Example 28C

It was identical to Example 28C, except that the phosphorus-modified molecular sieve PZ-4C was replaced with the comparative sample DZ-4C prepared in Comparative Example 4C to produce a catalyst comparative sample, which was denoted as DC-4C. Its evaluation was identical to that of Example 28C, and the result was shown in Table 16.

### Comparative Example 28D

It was identical to Example 28C, except that the phosphorus-modified molecular sieve PZ-4C was replaced with the comparative sample DZ-4D prepared in Comparative Example 4D to produce a catalyst comparative sample, which was denoted as DC-4D. Its evaluation was identical to that of Example 28C, and the result was shown in Table 16.

### Example 29C

It was identical to Example 25C, except that the phosphorus-modified molecular sieve PZ-1C was replaced with the phosphorus-modified molecular sieve PZ-5C from Example 5C to produce a catalyst sample, which was denoted as PC-5C. Its evaluation was identical to that of Example 25C, and the result was shown in Table 16.

### Example 29D

It was identical to Example 29C, except that the phosphorus-modified molecular sieve PZ-5C was replaced with the phosphorus-modified molecular sieve PZ-5D from Example 5D to produce a catalyst sample, which was denoted as PC-5D. Its evaluation was identical to that of Example 29C, and the result was shown in Table 16.

### Comparative Example 29C

It was identical to Example 29C, except that the phosphorus-modified molecular sieve PZ-5C was replaced with the comparative sample DZ-5C prepared in Comparative Example 5C to produce a catalyst comparative sample, which was denoted as DC-5C. Its evaluation was identical to that of Example 29C, and the result was shown in Table 16.

### Comparative Example 29D

It was identical to Example 29C, except that the phosphorus-modified molecular sieve PZ-5C was replaced with the comparative sample DZ-5D prepared in Comparative Example 5D to produce a catalyst comparative sample, which was denoted as DC-5D. Its evaluation was identical to that of Example 29C, and the result was shown in Table 16.

### Example 30C

It was identical to Example 25C, except that the phosphorus-modified molecular sieve PZ-1C was replaced with the phosphorus-modified molecular sieve PZ-6C from Example 6C to produce a catalyst sample, which was denoted as PC-6C. Its evaluation was identical to that of Example 25C, and the result was shown in Table 16.

### Example 30D

It was identical to Example 30C, except that the phosphorus-modified molecular sieve PZ-6C was replaced with the phosphorus-modified molecular sieve PZ-6D from Example 6D to produce a catalyst sample, which was denoted as PC-6D. Its evaluation was identical to that of Example 30C, and the result was shown in Table 16.

### Comparative Example 30C

It was identical to Example 30C, except that the phosphorus-modified molecular sieve PZ-6C was replaced with the comparative sample DZ-6C prepared in Comparative Example 6C to produce a catalyst comparative sample, which was denoted as DC-6C. Its evaluation was identical to that of Example 30C, and the result was shown in Table 16.

### Comparative Example 30D

It was identical to Example 30C, except that the phosphorus-modified molecular sieve PZ-6C was replaced with the comparative sample DZ-6D prepared in Comparative Example 6D to produce a catalyst comparative sample, which was denoted as DC-6D. Its evaluation was identical to that of Example 30C, and the result was shown in Table 16.

### Example 31C

It was identical to Example 25C, except that the phosphorus-modified molecular sieve PZ-1C was replaced with the phosphorus-modified molecular sieve PZ-7C from Example 7C to produce a catalyst sample, which was denoted as PC-7C. Its evaluation was identical to that of Example 25C, and the result was shown in Table 16.

### Example 31D

It was identical to Example 31C, except that the phosphorus-modified molecular sieve PZ-7C was replaced with the phosphorus-modified molecular sieve PZ-7D from Example 7D to produce a catalyst sample, which was denoted as PC-7D. Its evaluation was identical to that of Example 31C, and the result was shown in Table 16.

### Comparative Example 31C

It was identical to Example 31C, except that the phosphorus-modified molecular sieve PZ-7C was replaced with the comparative sample DZ-7C prepared in Comparative Example 7C to produce a catalyst comparative sample, which was denoted as DC-7C. Its evaluation was identical to that of Example 31C, and the result was shown in Table 16.

### Comparative Example 31D

It was identical to Example 31C, except that the phosphorus-modified molecular sieve PZ-7C was replaced with the comparative sample DZ-7D prepared in Comparative Example 7D to produce a catalyst comparative sample, which was denoted as DC-7D. Its evaluation was identical to that of Example 31C, and the result was shown in Table 16.

### Example 32C

It was identical to Example 25C, except that the phosphorus-aluminum inorganic binder was replaced with Binder 2 prepared in Example 9 to produce a catalyst, which was denoted as PC-8C. Its evaluation was identical to that of Example 25C, and the result was shown in Table 16.

### Example 32D

It was identical to Example 25D, except that the phosphorus-aluminum inorganic binder was replaced with Binder 2 prepared in Example 9 to produce a catalyst, which was denoted as PC-8D. Its evaluation was identical to that of Example 25C, and the result was shown in Table 16.

### Example 33C

It was identical to Example 25C, except that the phosphorus-aluminum inorganic binder was replaced with Binder 3 prepared in Example 10 to produce a catalyst, which was denoted as PC-9C. Its evaluation was identical to that of Example 25C, and the result was shown in Table 16.

### Example 33D

It was identical to Example 25D, except that the phosphorus-aluminum inorganic binder was replaced with Binder 3 prepared in Example 10 to produce a catalyst, which was denoted as PC-9D. Its evaluation was identical to that of Example 25C, and the result was shown in Table 16.

### Example 34C

It was identical to Example 25C, except that the phosphorus-aluminum inorganic binder was replaced with Binder 4 prepared in Example 11 to produce a catalyst, which was denoted as PC-10C. Its evaluation was identical to that of Example 25C, and the result was shown in Table 16.

### Example 34D

It was identical to Example 25D, except that the phosphorus-aluminum inorganic binder was replaced with Binder 4 prepared in Example 11 to produce a catalyst, which was denoted as PC-10D. Its evaluation was identical to that of Example 25C, and the result was shown in Table 16.

### Example 35C

It was identical to Example 25C, except that the phosphorus-modified ZSM-5 molecular sieve sample PZ-1C (35 wt%), PSRY (10 wt%), kaolin (18 wt%), the phosphorus-aluminum inorganic binder, Binder 3 (22 wt%), pseudo-boehmite (10 wt%), and alumina sol (5 wt%) were used to produce a catalyst, which was denoted as_PC-11C. Its evaluation was identical to that of Example 25C, and the result was shown in Table 16.

### Example 35D

It was identical to Example 25C, except that PZ-1C was replaced with PZ-1D to produce a catalyst, which was denoted as_PC-11D. Its evaluation was identical to that of Example 25C, and the result was shown in Table 16.

### Comparative Example 35C

It was identical to Example 35C, except that PZ-1C was replaced with DZ-1C to produce a catalyst comparative sample, which was denoted as DC-11C. Its evaluation was identical to that of Example 25C, and the result was shown in Table 16.

### Comparative Example 35D

It was identical to Example 35C, except that PZ-1C was replaced with DZ-1D to produce a catalyst comparative sample, which was denoted as DC-11D. Its evaluation was identical to that of Example 25C, and the result was shown in Table 16.

### Example 36C

It was identical to Example 25C, except that the phosphorus-modified ZSM-5 molecular sieve sample PZ-2C (30 wt%), PSRY (16 wt%), kaolin (22 wt%), the phosphorus-aluminum inorganic binder, Binder 4 (16 wt%), pseudo-boehmite (6 wt%), and silica sol (10 wt%) were used to produce a catalyst, which was denoted asPC-12C. Its evaluation was identical to that of Example 25C, and the result was shown in Table 16.

### Example 36D

It was identical to Example 36C, except that PZ-2C was replaced with PZ-2D to produce a catalyst, which was denoted as_PC-12D. Its evaluation was identical to that of Example 25C, and the result was shown in Table 16.

### Comparative Example 36C

It was identical to Example 36C, except that PZ-2C was replaced with DZ-2C to produce a catalyst comparative sample, which was denoted as DC-12C. Its evaluation was identical to that of Example 25C, and the result was shown in Table 16.

### Comparative Example 36D

It was identical to Example 36C, except that PZ-2C was replaced with DZ-2D to produce a catalyst comparative sample, which was denoted as DC-12D. Its evaluation was identical to that of Example 25C, and the result was shown in Table 16.

### Example 37C

The binder, alumina sol was mixed with kaolin, and decationized water was added to form a slurry with a solid content of 30 wt%. The slurry was stirred well, and adjused with hydrochloric acid to the pH of 2.8. The slurry was allowed to stand at 55 °C to age for 1 hour. Then the phosphorus-modified ZSM-5 molecular sieve PZ-1C prepared in Example 1C and Y zeolite (PSRY) were added to form a catalyst slurry with a solid content of 35 wt%. The slurry was continuously stirred and spray-dried to form catalyst microspheres. The catalyst microspheres were then calcined at 500°C for 1 hour, washed with ammonium sulfate at 60°C (wherein, ammonium sulfate:catalyst microspheres:water=0.5:1:10) to the sodium oxide content of less than 0.25 wt%, followed by rinsed with deionized water and filtered, and then dried at 110°C to produce a catalyst, which was denoted as PC-13C. The catalyst composition comprised: the phosphorus-modified ZSM-5 molecular sieve PZ-1C, 40%; PSRY zeolite, 10%; kaolin, 25%; and alumina sol (as Al2O3), 25%. Its evaluation was identical to that of Example 25C, and the result was shown in Table 16.

### Example 37D

It was identical to Example 37C, except that the phosphorus-modified molecular sieve PZ-1C was replaced with the phosphorus-modified molecular sieve PZ-1D from Example 1D to produce a catalyst sample, which was denoted as PC-13D. Its evaluation was identical to that of Example 25C, and the result was shown in Table 16.

### Comparative Example 37C

It was identical to Example 37C, except that the phosphorus-modified molecular sieve PZ-1C was replaced with the comparative sample DZ-1C prepared in Comparative Example 1C to produce a catalyst comparative sample, which was denoted as DC-13C. Its evaluation was identical to that of Example 25C, and the result was shown in Table 16.

### Comparative Example 37D

It was identical to Example 37C, except that the phosphorus-modified molecular sieve PZ-1C was replaced with the comparative sample DZ-1D prepared in Comparative Example 1D to produce a catalyst comparative sample, which was denoted as DC-13D. Its evaluation was identical to that of Example 25C, and the result was shown in Table 16.

### Example 38C

It was identical to Example 25C, except that the Y zeolite (PSRY) was replaced with HRY-1 to produce a catalyst sample, which was denoted as PC-14C. Its evaluation was identical to that of Example 25C, and the result was shown in Table 16.

### Example 38D

It was identical to Example 25D, except that the Y zeolite (PSRY) was replaced with HRY-1 to produce a catalyst sample, which was denoted as PC-14D. Its evaluation was identical to that of Example 25C, and the result was shown in Table 16.

### Comparative Example 38C

It was identical to Example 38C, except that the phosphorus-modified molecular sieve PZ-1C was replaced with the comparative sample DZ-1C prepared in Comparative Example 1C to produce a catalyst comparative sample, which was denoted as DC-14C. Its evaluation was identical to that of Example 25C, and the result was shown in Table 16.

### Comparative Example 38D

It was identical to Example 38C, except that the phosphorus-modified molecular sieve PZ-1C was replaced with the comparative sample DZ-1D prepared in Comparative Example 1D to produce a catalyst comparative sample, which was denoted as DC-14D. Its evaluation was identical to that of Example 25C, and the result was shown in Table 16.

### Example 39C

It was identical to Example 25C, except that _ the Y zeolite (PSRY) was replaced with USYto produce a catalyst sample, which was denoted as PC-15C. Its evaluation was identical to that of Example 25C, and the result was shown in Table 16.

### Example 39D

It was identical to Example 25D, except that _ the Y zeolite (PSRY) was replaced with USYto produce a catalyst sample, which was denoted as PC-15D. Its evaluation was identical to that of Example 25C, and the result was shown in Table 16.

### Comparative Example 39C

It was identical to Example 39C, except that the phosphorus-modified molecular sieve PZ-1C was replaced with the comparative sample DZ-1C prepared in Comparative Example 1C to produce a catalyst comparative sample, which was denoted as DC-15C. Its evaluation was identical to that of Example 25C, and the result was shown in Table 16.

### Comparative Example 39D

It was identical to Example 39C, except that the phosphorus-modified molecular sieve PZ-1C was replaced with the comparative sample DZ-1D prepared in Comparative Example 1D to produce a catalyst comparative sample, which was denoted as DC-15D. Its evaluation was identical to that of Example 25C, and the result was shown in Table 16.

**Table 16**

| Item | Liquefied gas | Ethylene yield | Propylene yield |
|---|---|---|---|
| Blank test example | 18.54 | 1.39 | 8.05 |
| Example 25C | 32.7 | 3.47 | 13.62 |
| Comparative Example 25C | 22.12 | 2.76 | 9.61 |
| Example 25D | 34.97 | 3.78 | 15.3 |
| Comparative Example 25D | 24.07 | 2.95 | 10.22 |
| Example 26C | 36.26 | 3.83 | 15.42 |
| Comparative Example 26C | 24.53 | 3.05 | 10.88 |
| Example 26D | 38.78 | 4.18 | 17.32 |
| Comparative Example 26D | 26.69 | 3.26 | 11.57 |
| Example 27C | 33.92 | 3.72 | 14.8 |
| Comparative Example 27C | 21.29 | 2.75 | 9.68 |
| Example 27D | 35.48 | 3.97 | 16.25 |
| Comparative Example 27D | 23.5 | 2.98 | 10.45 |
| Example 28C | 35.83 | 3.93 | 15.63 |
| Comparative Example 28C | 20.73 | 2.68 | 9.43 |
| Example 28D | 37.43 | 4.18 | 17.14 |
| Comparative Example 28D | 23.5 | 2.98 | 10.45 |
| Example 29C | 32.4 | 3.55 | 14.13 |
| Comparative Example 29C | 21.85 | 2.82 | 9.94 |
| Example 29D | 33.53 | 3.75 | 15.36 |
| Comparative Example 29D | 23.8 | 3.02 | 10.58 |
| Example 30C | 33.54 | 3.68 | 14.63 |
| Comparative Example 30C | 20.45 | 2.64 | 9.3 |
| Example 30D | 34.7 | 3.88 | 15.89 |
| Comparative Example 30D | 23.2 | 2.94 | 10.32 |
| Example 31C | 31.25 | 3.43 | 13.63 |
| Comparative Example 31C | 19.89 | 2.57 | 9.05 |
| Example 31D | 33.14 | 3.7 | 15.18 |
| Comparative Example 31D | 22.01 | 2.79 | 9.79 |
| Example 32C | 31.76 | 3.21 | 12.89 |
| Example 32D | 33.86 | 3.72 | 15.08 |
| Example 33C | 32.33 | 3.41 | 13.4 |
| Example 33D | 34.28 | 3.74 | 14.98 |
| Example 34C | 32.11 | 3.32 | 13.18 |
| Example 34D | 34.05 | 3.32 | 14.4 |
| Comparative Example 35C | 19.99 | 2.46 | 8.31 |
| Example 35C | 29.56 | 3.09 | 11.78 |
| Comparative Example 35D | 21.75 | 2.63 | 8.84 |
| Example 35D | 31.6 | 3.37 | 13.23 |
| Comparative Example 36C | 22.43 | 2.62 | 8.87 |
| Example 36C | 30.56 | 3.3 | 12.66 |
| Comparative Example 36D | 24.4 | 2.8 | 9.52 |
| Example 36D | 35.15 | 3.49 | 13.94 |
| Example 37C | 31.52 | 3.33 | 12.89 |
| Comparative Example 37C | 21.32 | 2.64 | 9.09 |
| Example 37D | 33.72 | 3.62 | 14.47 |
| Comparative Example 37D | 23.2 | 2.83 | 9.67 |
| Example 38C | 33.82 | 3.6 | 14.41 |
| Comparative Example 38C | 22.88 | 2.87 | 10.16 |
| Example 38D | 36.17 | 3.93 | 16.18 |
| Comparative Example 38D | 24.9 | 3.07 | 10.81 |
| Example 39C | 31.19 | 3.29 | 12.75 |
| Comparative Example 39C | 21.11 | 2.61 | 8.99 |
| Example 39D | 33.36 | 3.58 | 14.32 |
| Comparative Example 39D | 22.97 | 2.8 | 9.56 |

**Table 17**

| Material | Naphtha |
|---|---|
| Density (20°C)/(g.m⁻³) | 735.8 |
| Vapor pressure/kPa | 32 |

| Group component /m% | |
|---|---|
| Paraffin | 51.01 |
| Normal paraffin | 29.40 |
| Naphthene | 38.24 |
| Olefins | 0.12 |
| Aromatics | 10.52 |

| Distillation range/°C | |
|---|---|
| Initial | 45.5 |
| 5% | 72.5 |
| 10% | 86.7 |
| 30% | 106.5 |
| 50% | 120.0 |
| 70% | 132.7 |
| 90% | 148.5 |
| 95% | 155.2 |
| Endpoint | 166.5 |

### Example 40A and Example 40B

In Example 40A and Example 40B, were used cracking auxiliaries PA-1A and PA-1B from Example 12A and Example 12B respectively. The feedstock oil for catalytic cracking was the naphtha shown in Table 17.

The evaluation condition included the reaction temperature of 620 °C, the regeneration temperature of 620 °C, and the catalyst-oil ratio of 3.2.

Table 18 showed the weight composition and the reaction result of each catalyst mixture containing the catalytic cracking auxiliary.

### Comparative Example 40A and Comparative Example 40B

It was identical to Example 40A, except that comparative catalytic cracking auxiliaries DA-1A and DA-1B from Comparative Example 12A and Comparative Example 12B are used respectively.

Table 18 showed the weight composition and the reaction result of each catalyst mixture containing the catalytic cracking auxiliary comparative sample.

**Table 18**

| | Catalyst mixture | | Cracked gas product yield/ wt% | |
|---|---|---|---|---|
| | | | Liquefied gas | Propylene yield |
| Blank test example | / | 100% equilibrium catalyst | 69.13 | 8.42 |
| Example 40A | 10% PA-1A | 90% equilibrium catalyst | 83.12 | 15.64 |
| Example 40B | 10% PA-1B | 90% equilibrium catalyst | 87.96 | 16.89 |
| Comparative Example 40A | 10% DA-1A | 90% equilibrium catalyst | 75.31 | 10.76 |
| Comparative Example 40B | 10% DA-1B | 90% equilibrium catalyst | 78.01 | 12.05 |

### Example 41A and Example 41B

In Example 41A and Example 41B, were used catalysts PC-1A and PC-1B from Example 25A and Example 25B respectively. The feedstock oil for catalytic cracking was the naphtha shown in Table 17. The evaluation condition included the reaction temperature of 620 °C, the regeneration temperature of 620 °C, and the catalyst-oil ratio of 3.2.

Table 19 showed the weight composition and the reaction result of each catalyst mixture containing the catalytic cracking auxiliary.

### Comparative Example 41A and Comparative Example 41B

It was identical to Example 41A, except that comparative catalysts DC-1A and DC-1B from Comparative Example 25A and Comparative Example 25B were used respectively.

Table 19 showed the weight composition and the reaction result of each catalyst mixture containing the catalytic cracking auxiliary comparative sample.

**Table 19**

| | Cracked gas product yield/ wt% | |
|---|---|---|
| | Liquefied gas | Propylene yield |
| Blank test example | 69.13 | 8.42 |
| Example 41A | 81.67 | 14.45 |
| Example 41B | 84.23 | 14.98 |
| Comparative Example 41A | 73.12 | 11.23 |
| Comparative Example 41B | 74.65 | 11.97 |

The evaluation data in Table 19 showed that the catalytic cracking of a different feedstock oil was carried out, and the catalysts containing the phosphorus-modified ZSM-5 molecular sieves, which were modified by the immersion method in the Examples, showed excellent performance of producing more liquefied gas and richly producing lower carbon olefins at the same time, while the catalysts containing the molecular sieves, which were modified by the immersion method in the Comparative Examples, showed significantly lower yields in liquefied gas and lower carbon olefins.

### Example 40C and Example 40D

In Example 40C and Example 40D, were used catalytic cracking auxiliaries PA-1C and PA-1D from Example 12C and Example 12D respectively. The feedstock oil for catalytic cracking was the naphtha shown in Table 17.

The evaluation condition included the reaction temperature of 620 °C, the regeneration temperature of 620 °C, and the catalyst-oil ratio of 3.2.

Table 20 showed the weight composition and the reaction result of each catalyst mixture containing the catalytic cracking auxiliary.

### Comparative Example 40C and Comparative Example 40D

It was identical to Example 40C, except that, comparative catalytic cracking auxiliaries DA-1C and DA-1D from Comparative Example 12C and Comparative Example 12D were used respectively. The weight composition and the reaction result of each catalyst mixture containing the catalytic cracking auxiliary comparative sample were shown in Table 20.

**Table 20**

| | Catalyst mixture | | Cracked gas product yield/ wt% | |
|---|---|---|---|---|
| | | | Liquefied gas | Propylene yield |
| Blank test example | / | 100% equilibrium catalyst | 69.13 | 8.42 |
| Example 40C | 10% PA-1C | 90% equilibrium catalyst | 80.32 | 14.1 |
| Example 40D | 10% PA-1D | 90% equilibrium catalyst | 85.42 | 15.36 |
| Comparative Example 40C | 10% DA-1C | 90% equilibrium catalyst | 73.16 | 9.98 |
| Comparative Example 40D | 10% DA-1D | 90% equilibrium catalyst | 75.46 | 10.68 |

### Example 41C and Example 41D

In Example 41C and Example 41D, were used catalysts PC-1C and PC-1D from Example 25C and Example 25D respectively. The feedstock oil for catalytic cracking was the naphtha shown in Table 17. The evaluation condition included the reaction temperature of 620 °C, the regeneration temperature of 620 °C, and the catalyst-oil ratio of 3.2.

Table 21 showed the weight composition and the reaction result of each catalyst mixture containing the catalytic cracking auxiliary.

### Comparative Example 41C and Comparative Example 41D

It was identical to Example 41C, except that, comparative catalysts DC-1C and DC-1D from Comparative Example 25C and Comparative Example were used respectively.

The weight composition and the reaction result of each catalyst mixture containing the catalytic cracking auxiliary comparative sample were shown in Table 21.

**Table 21**

| | Cracked gas product yield/ wt% | |
|---|---|---|
| | Liquefied gas | Propylene yield |
| Blank test example | 69.13 | 8.42 |
| Example 41C | 79.95 | 13.89 |
| Example 41D | 82.46 | 14.40 |
| Comparative Example 41C | 71.58 | 10.79 |
| Comparative Example 41D | 73.08 | 11.50 |

The evaluation data in Table 21 showed that the catalytic cracking of a different feedstock oil was carried out, and the catalysts containing the phosphorus-modified ZSM-5 molecular sieves, which were modified by the immersion method in the Examples, showed excellent performance of producing more liquefied gas and richly producing lower carbon olefins at the same time, while the catalysts containing the molecular sieves, which were modified by the immersion method in the Comparative Examples, showed significantly lower yields in liquefied gas and lower carbon olefins.

The embodiments of the present invention have been described in detail above with reference to the accompanying drawings. However, the embodiments of the present invention are not limited to the specific details of the above-mentioned embodiments. Various simple modifications may be made to the technical solutions of the embodiments of the present invention within the scope of the technical concept of the embodiments of the present invention, and these simple modifications all belong to the protection scope of the present invention.

In addition, it should be noted that the various specific technical features described in the above-mentioned specific embodiments can be combined in any suitable manner unless they are inconsistent, and in order to avoid unnecessary repetition, the present disclosure does not separately describe various possible combinations.

In addition, any combination of the various embodiments of the present invention can be made, and the same should be considered as the disclosure of the present invention as long as the idea of the present invention is not violated.

## Claims

1. A phosphorus-containing or phosphorus-modified ZSM-5 molecular sieve, which is **characterized in that** in its 27A1MAS-NMR, the ratio of peak area for the resonance signal having a chemical shift of 39±3ppm to peak area for the resonance signal having a chemical shift of 54ppm±3ppm is ≥ 1, for example, ≥ 5 or ≥ 8; further for example, ≥ 10 or ≥ 12; still further for example, 12-25 or 14-25.

2. A phosphorus-containing or phosphorus-modified ZSM-5 molecular sieve, which is **characterized in that** in its surface XPS elemental analysis, the value of n1/n2 is ≤ 0.1 or ≤ 0.08, for example, ≤ 0.09 or ≤ 0.07, further for example, n1/n2 ≤ 0.08 or ≤ 0.06, still further for example, 0.04-0.07 or 0.02-0.05; wherein n1 represents the mole number of phosphorus, n2 represents the total mole number of silicon and aluminum.

3. The phosphorus-containing or phosphorus-modified molecular sieve according to any of the previous claims, which is **characterized in that** the phosphorus-containing or phosphorus-modified molecular sieve is a phosphorus-containing hierarchical ZSM-5 molecular sieve; for example, having a proportion of the mesopore volume relative to the total pore volume of greater than 10% and an average pore diameter of 2-20nm.

4. The phosphorus-containing or phosphorus-modified molecular sieve according to any of the previous claims, which is **characterized in that** in its surface XPS elemental analysis, the value of n1/n2 is ≤ 0.1 or ≤ 0.08, for example, ≤ 0.09 or ≤ 0.07, further for example, n1/n2 ≤ 0.08 or ≤ 0.06, still further for example, 0.04-0.07 or 0.02-0.05;
wherein n1 represents the mole number of phosphorus, n2 represents the total mole number of silicon and aluminum.

5. The phosphorus-containing or phosphorus-modified molecular sieve according to any of the previous claims, which is **characterized in that** after the molecular sieve has undergone the hydrothermal aging under a condition of 800°C and 100% steam for 17h, in its NH3-TPD spectrum, for the desorption temperature of 200°C or higher, the proportion of the peak area for the strong acid center relative to the peak area for the total acid center is ≥ 40% or ≥ 45%; for example, ≥ 42% or ≥ 50%; further for example, ≥ 45% or ≥ 60%; still further for example, 48%-85% or 60%-80%.

6. The phosphorus-containing or phosphorus-modified molecular sieve according to any of the previous claims, which is **characterized in that** when both phosphorus and aluminum are on a molar basis, the ratio of the two is 0.01-2; for example, 0.1-1.5; further for example, 0.2-1.5 or 0.3-1.3.

7. A process of preparing the phosphorus-containing or phosphorus-modified ZSM-5 molecular sieve according to any of the previous claims, which is **characterized in that** the preparation process comprises: treating a ZSM-5 molecular sieve by contacting a phosphorus-containing compound, drying the treated ZSM-5 molecular sieve, hydrothermally calcining the dried ZSM-5 molecular sieve in an atmosphere condition where an external pressure is applied and water is externally added, and recovering the resulting product;
the contacting is to make an aqueous solution of the phosphorus-containing compound at a temperature of 0-150°C and the ZSM-5 molecular sieve at a temperature of 0-150°C in contact (by mixing) at substantially the same temperature for at least 0.1 hours through the immersion method, or,
the contacting is to vigorously mix and stir the phosphorus-containing compound, the ZSM-5 molecular sieve and water and then keep the mixture at 0-150°C for at least 0.1 hours;
with respect to the atmosphere condition, its gauge pressure is 0.01-1.0MPa and it contains 1-100% water vapor;
the ZSM-5 molecular sieve is an HZSM-5 molecular sieve or a hydrogen-type hierarchical ZSM-5 molecular sieve, for example, in the hydrogen-type hierarchical ZSM-5 molecular sieve, the proportion of the mesopore volume relative to the total pore volume is greater than 10%, and the average pore diameter is 2-20nm.

8. The process of preparing the phosphorus-containing or phosphorus-modified ZSM-5 molecular sieve according to any of the previous claims, which is **characterized in that** the phosphorus-containing compound is selected from an organic phosphorus compound and/or an inorganic phosphorus compound;
for example, the organic phosphorus compound is selected from trimethyl phosphate, triphenylphosphine, trimethyl phosphite, tetrabutylphosphonium bromide, tetrabutylphosphonium chloride, tetrabutylphosphonium hydroxide, triphenylethylphosphonium bromide, triphenylbutylphosphonium bromide, triphenylbenzylphosphonium bromide, hexamethylphosphoric triamide, dibenzyl diethylphosphoramidite, 1,3-bis((triethyl-phosphaneyl)methyl)benzene; and/or
for example, the inorganic phosphorus compound is selected from phosphoric acid, ammonium hydrogen phosphate, diammonium hydrogen phosphate, ammonium phosphate, boron phosphate.

9. The process of preparing the phosphorus-containing or phosphorus-modified ZSM-5 molecular sieve according to any of the previous claims, which is **characterized in that** in the ZSM-5 molecular sieve, Na2O < 0.1wt%.

10. The process of preparing the phosphorus-containing or phosphorus-modified ZSM-5 molecular sieve according to any of the previous claims, which is **characterized in that** the molar ratio of the phosphorus-containing compound (as phosphorus) to the ZSM-5 molecular sieve (as aluminum) is 0.01-2; for example, 0.1-1.5; further for example, 0.2-1.5 or 0.3-1.3.

11. The process of preparing the phosphorus-containing or phosphorus-modified ZSM-5 molecular sieve according to any of the previous claims, which is **characterized in that** with respect to the contacting, the weight ratio of water/molecular sieve is 0.5-1, and the contacting is performed at 50-150°C, for example, 70-130°C for 0.5-40 hours.

12. The process of preparing the phosphorus-containing or phosphorus-modified ZSM-5 molecular sieve according to any of the previous claims, which is **characterized in that** with respect to the atmosphere condition, its gauge pressure is 0.1-0.8 MPa, for example, 0.3-0.6 MPa, it contains 30-100% water vapor, for example, 60-100% water vapor;
the hydrothermal calcining treatment is performed at 200-800°C, for example, 300-500°C.

13. A catalytic cracking auxiliary, which is **characterized in that** based on the dry basis of the catalytic cracking auxiliary, the catalytic cracking auxiliary contains 5-75 wt% of the phosphorus-containing or phosphorus-modified ZSM-5 molecular sieve according to any of the previous claims.

14. The catalytic cracking auxiliary according to any of the previous claims, which is **characterized in that** based on the dry basis of the catalytic cracking auxiliary, it further contains 1-40 wt% of a binder and 0-65 wt% of a second clay.

15. The catalytic cracking auxiliary according to any of the previous claims, which is **characterized in that** the binder includes or is a phosphorus-aluminum inorganic binder.

16. The catalytic cracking auxiliary according to any of the previous claims, which is **characterized in that** the phosphorus-aluminum inorganic binder is a phosphorus-aluminum glue and/or a first clay-containing phosphorus-aluminum inorganic binder.

17. A process of preparing the catalytic cracking auxiliary according to any of the previous claims, which is **characterized in that** the preparation process comprises a phosphorus-containing or phosphorus-modified ZSM-5 molecular sieve, a binder and optionally a second clay are vigorously mixed and stirred with water and spray-dried to produce the catalytic cracking auxiliary,
wherein the phosphorus-containing or phosphorus-modified ZSM-5 molecular sieve is the phosphorus-containing or phosphorus-modified molecular sieve according to any of the previous claims, or is prepared with the process of preparing the phosphorus-containing or phosphorus-modified ZSM-5 molecular sieve according to any of the previous claims.

18. The process of preparing the catalytic cracking auxiliary according to any of the previous claims, which is **characterized in that** the binder comprises a phosphorus-aluminum inorganic binder and/or other inorganic binders.

19. The process of preparing the catalytic cracking auxiliary according to any of the previous claims, which is **characterized in that** the phosphorus-aluminum inorganic binder is a phosphorus-aluminum glue and/or a first clay-containing phosphorus-aluminum inorganic binder;
based on the dry basis weight of the first clay-containing phosphorus-aluminum inorganic binder, the first clay-containing phosphorus-aluminum inorganic binder contains 10-40 wt%, for example, 15-40 wt% of an aluminum component as Al2O3, 45-90 wt%, for example, 45-80 wt% of a phosphorus component as P2O5 and greater than 0 and not more than 40 wt% of a first clay on a dry basis, and
the first clay-containing phosphorus-aluminum inorganic binder has a P/A1 weight ratio of 1.0-6.0, a pH of 1-3.5, and a solid content of 15-60 wt%;
the first clay comprises at least one of kaolin, sepiolite, attapulgite, rectorite, smectite and diatomite; the other inorganic binder comprises at least one of pseudo-boehmite, alumina sol, silica-alumina sol, and water glass.

20. The process of preparing the catalytic cracking auxiliary according to any of the previous claims, which is **characterized in that** the second clay is at least one selected from kaolin, sepiolite, attapulgite, rectorite, smectite, giagerite, halloysite, hydrotalcite, bentonite and diatomite.

21. The process of preparing the catalytic cracking auxiliary according to any of the previous claims, which is **characterized in that** based on the total weight of the catalytic cracking auxiliary, the binder comprises based on the dry weight, 3-39 wt% of the phosphorus-aluminum inorganic binder and based on the dry weight, 1-30 wt% of the other inorganic binder, the other inorganic binder comprises at least one of pseudo-boehmite, alumina sol, silica-alumina sol, and water glass.

22. The process of preparing the catalytic cracking auxiliary according to any of the previous claims, which is **characterized in that** the process further comprises: the spray-dried product is subjected to a first calcining, and then washed, and optionally dried to produce the catalytic cracking auxiliary; wherein for the first calcining, the calcining temperature is 300-650°C, the calcining time is 0.5-8h; the drying temperature is 100-200°C, the drying time is 0.5-24h.

23. The process of preparing the catalytic cracking auxiliary according to any of the previous claims, which is **characterized in that**
the process further comprises: the first clay-containing phosphorus-aluminum inorganic binder is prepared with the following steps: an alumina source, the first clay and water are vigorously mixed and stirred to disperse into a slurry having a solid content of 5-48 wt%; wherein the alumina source is aluminum hydroxide and/or alumina that can be peptized by an acid, relative to 10-40 parts by weight, for example, 15-40 parts by weight of the alumina source (as Al2O3), the used amount of the first clay based on the dry weight is greater than 0 part by weight and not more than 40 parts by weight; a concentrated phosphoric acid is added to the slurry under stirring according to the weight ratio of P/Al = 1-6, and the resulting mixed slurry is reacted at 50-99°C for 15-90 minutes; wherein P in the P/Al is the weight of phosphorus as the simple substance in phosphoric acid, Al is the weight of aluminum as the simple substance in the alumina source.

24. A catalytic cracking catalyst, which is **characterized in that** based on the dry basis of the catalytic cracking catalyst, the catalytic cracking catalyst contains on a dry basis, 1-25 wt% of a Y zeolite, on a dry basis, 5-50 wt% of the phosphorus-containing or phosphorus-modified ZSM-5 molecular sieve according to any of the previous claims, on a dry basis, 1-60 wt% of an inorganic binder and optionally on a dry basis, 0-60 wt% of a second clay, the inorganic binder comprises a phosphorus-aluminum inorganic binder and/or other inorganic binder(s).

25. The catalytic cracking catalyst according to any of the previous claims, which is **characterized in that** the Y zeolite comprises at least one of a PSRY-S zeolite, a rare earth-containing PSRY-S zeolite, a PSRY zeolite, a rare earth-containing PSRY zeolite, a USY zeolite, a rare earth-containing USY zeolite, a REY zeolite, a REHY zeolite and an HY zeolite; for example, the Y zeolite comprises at least one of a PSRY zeolite, a rare earth-containing PSRY zeolite, a USY zeolite, a rare earth-containing USY zeolite, a REY zeolite, a REHY zeolite and an HY zeolite.

26. A process of preparing the catalytic cracking catalyst according to any of the previous claims, which is **characterized in that** the process comprises: a reaction material including a Y zeolite, a phosphorus-containing or phosphorus-modified ZSM-5 molecular sieve and an inorganic binder is vigorously mixed and stirred with water and spray-dried, and optionally calcined to produce the catalytic cracking catalyst; wherein, a second clay is optionally added to the reaction material; on a dry basis, the used amount ratio by weight of the Y zeolite : the phosphorus-containing or phosphorus-modified ZSM-5 molecular sieve:the inorganic binder:the second clay is (1-25):(5-50):(1-60):(0-60);
wherein the inorganic binder comprises a phosphorus-aluminum inorganic binder and/or other inorganic binder(s),
the phosphorus-containing or phosphorus-modified ZSM-5 molecular sieve is the phosphorus-containing or phosphorus-modified molecular sieve according to any of the previous claims, or is prepared with the process of preparing the phosphorus-containing or phosphorus-modified ZSM-5 molecular sieve according to any of the previous claims.

27. The process of preparing the catalytic cracking catalyst according to any of the previous claims, which is **characterized in that** the phosphorus-aluminum inorganic binder is a phosphorus-aluminum glue and/or a first clay-containing phosphorus-aluminum inorganic binder;
based on the dry basis weight of the first clay-containing phosphorus-aluminum inorganic binder, the first clay-containing phosphorus-aluminum inorganic binder contains 10-40 wt%, for example, 15-40 wt% of an aluminum component as Al2O3, 45-90 wt%, for example, 45-80 wt% of a phosphorus component as P2O5 and greater than 0 and not more than 40 wt% of a first clay on a dry basis, and
the first clay-containing phosphorus-aluminum inorganic binder has a P/Al weight ratio of 1.0-6.0, a pH of 1-3.5, and a solid content of 15-60 wt%;
the first clay comprises at least one of kaolin, sepiolite, attapulgite, rectorite, smectite and diatomite; the other inorganic binder comprises at least one of pseudo-boehmite, alumina sol, silica-alumina sol, and water glass.

28. The process of preparing the catalytic cracking catalyst according to any of the previous claims, which is **characterized in that** the second clay is at least one selected from kaolin, sepiolite, attapulgite, rectorite, smectite, giagerite, halloysite, hydrotalcite, bentonite and diatomite.

29. The process for preparing the catalytic cracking catalyst according to any of the previous claims, which is **characterized in that** based on the dry basis of the catalytic cracking catalyst, the catalyst contains, based on the dry weight, 3-40 wt% of a phosphorus-aluminum inorganic binder, or 3-40 wt% of a phosphorus-aluminum inorganic binder and 1-30 wt% of other inorganic binder(s),_the other inorganic binder comprises at least one of pseudo-boehmite, alumina sol, silica-alumina sol, and water glass.

30. The process for preparing the catalytic cracking catalyst according to any of the previous claims, which is **characterized in that** the Y zeolite comprises at least one of a PSRY-S zeolite, a rare earth-containing PSRY-S zeolite, a PSRY zeolite, a rare earth-containing PSRY zeolite, a USY zeolite, a rare earth-containing USY zeolite, a REY zeolite, a REHY zeolite and an HY zeolite; for example, the Y zeolite comprises at least one of a PSRY zeolite, a rare earth-containing PSRY zeolite, a USY zeolite, a rare earth-containing USY zeolite, a REY zeolite, a REHY zeolite and an HY zeolite.

31. The process for preparing the catalytic cracking catalyst according to any of the previous claims, which is **characterized in that** the process further comprises: the calcined product is washed and optionally dried to produce the catalytic cracking catalyst; wherein with respect to the first calcining, the calcining temperature is 300-650°C, the calcining time is 0.5-12h.

32. The process for preparing the catalytic cracking catalyst according to any of the previous claims, which is **characterized in that** the process further comprises: the first clay-containing phosphorus-aluminum inorganic binder is prepared with the following steps: an alumina source, the first clay and water are vigorously mixed and stirred to disperse into a slurry having a solid content of 5-48 wt%; wherein the alumina source is aluminum hydroxide and/or alumina that can be peptized by an acid, relative to 10-40 parts by weight, for example, 15-40 parts by weight of the alumina source (as Al2O3), the used amount of the first clay based on the dry weight is greater than 0 part by weight and not more than 40 parts by weight; a concentrated phosphoric acid is added to the slurry under stirring according to the weight ratio of P/Al = 1-6, and the resulting mixed slurry is reacted at 50-99°C for 15-90 minutes; wherein P in the P/Al is the weight of phosphorus as the simple substance in phosphoric acid, Al is the weight of aluminum as the simple substance in the alumina source.

33. The catalytic cracking auxiliary, which is prepared with the process for preparing the catalytic cracking auxiliary according to any of the previous claims.

34. The catalytic cracking catalyst, which is prepared with the process for preparing the catalytic cracking catalyst according to any of the previous claims.

35. A process for catalytically cracking a hydrocarbon oil, which is **characterized in that** the process comprises: the hydrocarbon oil is reacted by contacting the catalytic cracking auxiliary according to any of the previous claims under a catalytic cracking condition.

36. The process for catalytically cracking the hydrocarbon oil according to any of the previous claims, which is **characterized in that** the process comprises: the hydrocarbon oil is reacted by contacting a catalyst mixture containing the catalytic cracking auxiliary and a catalytic cracking catalyst under a catalytic cracking condition; in the catalyst mixture, the content of the catalytic cracking auxiliary is 0.1-30 wt%.

37. The process for catalytically cracking the hydrocarbon oil according to any of the previous claims, wherein the catalytic cracking condition includes: the reaction temperature is 500-800°C; the hydrocarbon oil is one or more selected from crude oil, naphtha, gasoline, atmospheric residue, vacuum residue, atmospheric gas oil, vacuum gas oil, straight-run gas oil, propane light/heavy deasphalted oil, coker gas oil and coal liquefication product.

38. A method of application of the catalytic cracking catalyst according to any of the previous claims.

39. The method of application according to any of the previous claims, which comprises reacting the hydrocarbon oil by contacting the catalytic cracking catalyst under a catalytic cracking reaction condition, wherein the catalytic cracking reaction condition includes: the reaction temperature is 500-800°C.

40. The method of application according to any of the previous claims, wherein the hydrocarbon oil is one or more selected from crude oil, naphtha, gasoline, atmospheric residue, vacuum residue, atmospheric gas oil, vacuum gas oil, straight-run gas oil, propane light/heavy deasphalted oil, coker gas oil and coal liquefication product.
